# EUROPEAN PATENT APPLICATION

(11) **EP 4 745 659 A1**
(43) Date of publication of application: **20.05.2026**
(21) Application number: 24838776.3
(22) Date of filing: 08.07.2024
(51) Int. Cl.: G02F 1/17

(54) **REFLECTING DEVICE, MANUFACTURING METHOD FOR REFLECTING DEVICE, AND VEHICLE**

(30) Priority: 11.07.2023 CN 202310851114; 24.08.2023 CN 202311075764; 31.08.2023 CN 202311136253; 19.09.2023 CN 202311216097; 19.09.2023 CN 202311218509; 27.09.2023 CN 202311267781; 27.09.2023 CN 202311270928
(71) Applicant: BYD Company Limited, Shenzhen, Guangdong 518118 (CN)
(72) Inventor: MA, Lan, Shenzhen, Guangdong 518118 (CN); XU, Haibo, Shenzhen, Guangdong 518118 (CN); CHEN, Liang, Shenzhen, Guangdong 518118 (CN); LV, Shenming, Shenzhen, Guangdong 518118 (CN); WANG, Fei, Shenzhen, Guangdong 518118 (CN); GENG, Min, Shenzhen, Guangdong 518118 (CN); LU, Cen, Shenzhen, Guangdong 518118 (CN); CAO, Mengyuan, Shenzhen, Guangdong 518118 (CN)
(74) Representative: Mathys & Squire
(86) International application number: PCT/CN2024/104243
(87) International publication number: WO 2025/011523

(57) **Abstract**

A reflecting device, comprising a first transparent substrate, a transparent conductive layer, a second transparent substrate, a reflecting layer, a seal, and a dimming composition. The reflecting layer faces the transparent conductive layer, the dimming composition is provided between the reflecting layer and the transparent conductive layer, the seal is connected between the first transparent substrate and the second transparent substrate, and a cavity is defined by the sealant, the transparent conductive layer, and the reflecting layer, the dimming composition is provided in the cavity, and the sealant comprises filling particles having a dielectric constant greater than or equal to 20.

## Description

This application claims priorities to Chinese Patent Application No. 202311075764.2 filed with the China National Intellectual Property Administration on August 24, 2023 and entitled "REFLECTING DEVICE, MANUFACTURING METHOD FOR REFLECTING DEVICE, AND VEHICLE", to Chinese Patent Application No. 202311270928.7 filed with the China National Intellectual Property Administration on September 27, 2023 and entitled "COLOR-CHANGING GLASS AND VEHICLE", to Chinese Patent Application No. 202311218509.9 filed with the China National Intellectual Property Administration on September 19, 2023 and entitled "ANODE ELECTROCHROMIC MATERIAL, ELECTROCHROMIC COMPOSITION, AND ELECTROCHROMIC DEVICE", to Chinese Patent Application No. 202311216097.5 filed with the China National Intellectual Property Administration on September 19, 2023 and entitled "ANODE ELECTROCHROMIC MATERIAL, ELECTROCHROMIC COMPOSITION, AND ELECTROCHROMIC DEVICE", to Chinese Patent Application No. 202310851114.6 filed with the China National Intellectual Property Administration on July, 11, 2023 and entitled "PHENAZINE COMPOUND COMPRISING BRIDGE RING STRUCTURE AND APPLICATION THEREOF, AND ELECTROCHROMIC DEVICE AND APPLICATIONN THEREOF", to Chinese Patent Application No. 202311267781.6 filed with the China National Intellectual Property Administration on September, 27, 2023 and entitled "CARBAZOLE COMPOUND AND COMPOSITION, PREPARATION METHOD THEREFORE AND APPLICATION THEREFOF, AND ELECTROCHROMIC DEVICE", and to Chinese Patent Application No. 202311136253.7 filed with the China National Intellectual Property Administration on August, 31, 2023 and entitled "LIGHT INTENSITY ADJUSTMENT DEVICE AND APPLICATION THEREOF", all of which are incorporated by reference in their entireties.

### TECHNICAL FIELD

This application relates to the field of reflector technologies, and in particular, to a reflecting device, a manufacturing method for a reflecting device, and a vehicle.

### BACKGROUND

A reflector is an optical element with a smooth surface and a capability of reflecting light. To adapt reflectors to more application scenarios, some reflectors can adjust their reflectivity.

A reflector with automatically adjustable reflectivity is mainly implemented by using organic small-molecule compositions. Under an applied voltage, organic small molecules between a transparent conductive layer and a reflective layer undergo an electrochemical oxidation-reduction reaction to change molecular structures and absorb visible light, so as to adjust the reflectivity of a device. At present, the breakdown voltage between the transparent conductive layer and the reflective layer is low. Consequently, light adjustment performance of the reflector is prone to instability.

### SUMMARY

A technical problem to be resolved in embodiments of this application is to provide a reflecting device with controllable reflectivity and high stability, a manufacturing method for a reflecting device, and a vehicle.

According to a first aspect, this application provides a reflecting device, comprising:
a first transparent substrate sheet comprisinga first surface and a second surface that are opposite to each other;
a transparent conductive layer disposed on the second surface;
a second transparent substrate sheet comprising a third surface and a fourth surface that are opposite to each other;
a reflective layer disposed on the third surface, wherein the reflective layer faces the transparent conductive layer;
a seal, wherein the seal is connected between the first transparent substrate sheet and the second transparent substrate sheet, the seal, the transparent conductive layer, and the reflective layer enclose a cavity, and the seal comprises filler particles whose dielectric constant is greater than or equal to 20; and
a light adjustment composition, wherein the light adjustment composition is disposed in the cavity.

With reference to the first aspect, in a possible implementation, the dielectric constant of the filler particle ranges from 25 to 150.

With reference to the first aspect, in a possible implementation, the filler particle comprises at least one of lead titanate, barium titanate, lanthanum titanate, titanium oxide, and zirconium oxide.

With reference to the first aspect, in a possible implementation, the seal is configured to be hollow in a thickness direction, and two end faces of the seal in the thickness direction are respectively connected to the transparent conductive layer and the reflective layer.

With reference to the first aspect, in a possible implementation, the seal comprises a first seal and a second seal, and the first seal and the second seal enclosing and forming the seal

With reference to the first aspect, in a possible implementation, a shape of the filler particle is any one of a cuboid, a cube, a sphere, and a cylinder.

With reference to the first aspect, in a possible implementation, the first transparent substrate sheet comprises one of glass, acrylic, and polyvinyl chloride, the second transparent substrate sheet comprises one of glass, acrylic, and polyvinyl chloride, and both visible light transmittance of the first transparent substrate sheet and visible light transmittance of the second transparent substrate sheet are greater than or equal to 80%.

With reference to the first aspect, in a possible implementation, the transparent conductive layer meets at least one of the following conditions: the transparent conductive layer comprises at least one of ITO, CTO, ZnO, and InO; a thickness of the transparent conductive layer ranges from 50 nm to 500 nm; and visible light transmittance of the transparent conductive layer is greater than or equal to 80%.

With reference to the first aspect, in a possible implementation, the reflective layer meets at least one of the following conditions: the reflective layer comprises one of silver, a silver alloy, aluminum, an aluminum alloy, chromium, and a chromium alloy; a thickness of the reflective layer ranges from 10 nm to 500 nm; and reflectivity of the reflective layer is greater than or equal to 70%.

With reference to the first aspect, in a possible implementation, the reflecting device further comprises a transition layer, the transition layer is disposed between the reflective layer and the third surface, and the transition layer comprises at least one of SiO, TiO, Nb₂O₅, and Al₂O₃.

With reference to the first aspect, in a possible implementation, the reflecting device further comprises a first electrode plate and a second electrode plate, the first electrode plate is electrically connected to the transparent conductive layer, and the second electrode plate is electrically connected to the reflective layer.

With reference to the first aspect, in a possible implementation, a surface of the transparent conductive layer that faces the first transparent substrate sheet comprises a contact region in contact with the second surface and a concave region concave in a direction away from the second surface. The concave region surrounds the contact region, and the concave region is spaced apart from the second surface. A decorative layer is disposed between the concave region and the second surface, and reflectivity of the decorative layer is greater than or equal to 50%.

According to a second aspect, this application provides a manufacturing method for a reflecting device, comprising:
providing a first transparent substrate sheet, wherein the first transparent substrate sheet comprises a first surface and a second surface that are disposed opposite to each other; and disposing a transparent conductive layer on the second surface;
providing a second transparent substrate sheet, wherein the second transparent substrate sheet comprises a third surface and a fourth surface that are disposed opposite to each other; and disposing a reflective layer on the third surface;
making the transparent conductive layer face the reflective layer, and the transparent conductive layer spaced apart from the reflective layer; and
forming a seal between the first transparent substrate sheet and the second transparent substrate sheet, the seal, the transparent conductive layer, and the reflective layer enclosing a cavity, and infusing a light adjustment composition into the cavity, wherein the seal comprises filler particles whose dielectric constant is greater than or equal to 20.

With reference to the second aspect, in a possible implementation, disposing the reflective layer on the third surface comprises:
disposing a transition layer on the third surface; and
disposing the reflective layer on a surface of the transition layer that is away from the second transparent substrate sheet.

With reference to the second aspect, in a possible implementation, the seal comprises a first seal and a second seal. Forming the seal between the first transparent substrate sheet and the second transparent substrate sheet, the seal, the transparent conductive layer, and the reflective layer enclosing the cavity, and infusing the light adjustment composition into the cavity comprises:
disposing the first seal between the first transparent substrate sheet and the second transparent substrate sheet, wherein the first seal connects the first transparent substrate sheet and the second transparent substrate sheet, and the first seal, the transparent conductive layer, and the reflective layer enclose the cavity having an opening;
infusing the light adjustment composition into the cavity through the opening; and
disposing the second seal between the first transparent substrate sheet and the second transparent substrate sheet to seal the opening, wherein the second seal connects the first transparent substrate sheet and the second transparent substrate sheet.

According to a third aspect, this application discloses a vehicle. The vehicle comprises the reflecting device according to the first aspect.

In this application, the seal connects the first transparent substrate sheet and the second transparent substrate sheet. The seal has the filler particles, and the dielectric constant of the filler particle is greater than or equal to 20, so that the breakdown voltage of an electric field formed by the reflective layer and the transparent conductive layer can be increased, electrochemical stability of the filler particle under the electric field can be improved, reflection reliability of the reflecting device can be improved, and the service life of the reflecting device can be prolonged.

### BRIEF DESCRIPTION OF DRAWINGS

To describe the technical solutions of embodiments of this application or the background more clearly, the following describes the accompanying drawings used for describing embodiments of this application or the background.
FIG. 1 is a sectional view of an emission mirror device according to some embodiments of this application;
FIG. 2 is a top view of an emission mirror device from which a first transparent substrate sheet and a transparent conductive layer are removed according to some embodiments of this application;
FIG. 3 is a sectional view of a transparent conductive layer according to some embodiments of this application;
FIG. 4 is a schematic flowchart of a manufacturing method for an emission mirror device according to some embodiments of this application;
FIG. 5 is a block diagram of a simple structure of a vehicle according to some embodiments of this application;
FIG. 6 is a diagram of a structure of color-changing glass according to some embodiments of this application;
FIG. 7 is a diagram of a sectional top view of color-changing glass according to some embodiments of this application;
FIG. 8 is a diagram of another structure of color-changing glass according to some embodiments of this application;
FIG. 9 is a diagram of still another structure of color-changing glass according to some embodiments of this application;
FIG. 10 is a diagram of a sectional structure of color-changing glass according to some embodiments of this application;
FIG. 11 is a diagram of another sectional structure of color-changing glass according to some embodiments of this application;
FIG. 12 is a diagram of still another sectional structure of color-changing glass according to some embodiments of this application;
FIG. 13 is a diagram of a structure of an electrochromic device according to some implementations of this application;
FIG. 14 is a diagram of a structure of an electrochromic device according to some implementations of this application;
FIG. 15 is a diagram of a structure of an electrochromic device according to some embodiments;
FIG. 16 is a sectional view of a light intensity adjustment device according to an implementation of this application;
FIG. 17 is a bottom view of a light intensity adjustment device according to an implementation of this application, where FIG. 17 shows that at least one of a first electrical conductor 5d and a second electrical conductor 8d is formed in the device in an L shape and structure;
FIG. 18 is a bottom view of a light intensity adjustment device according to another implementation of this application, where FIG. 18 shows that a first electrical conductor 5d and a second electrical conductor 8d are formed in the device in an L shape and structure;
FIG. 19 is a top view of a type-I device in a conventional technology, where a first I-shaped conductive layer 5d and a second I-shaped conductive layer 8d are formed in the device in an I shape and structure;
FIG. 20 is a sectional view of a type-I device in a conventional technology in an E-E direction; and
FIG. 21 is a sectional view of a type-I device in a conventional technology in an F-F direction.

Description of reference numerals:
1: reflecting device;
10: first transparent substrate sheet; 11: first surface; 12: second surface;
20: transparent conductive layer; 21: contact region; 22: concave region;
30: second transparent substrate sheet; 31: third surface; 32: fourth surface;
40: reflective layer;
50: light adjustment composition;
60: transition layer;
70: sealant; 71: first seal; 72:second seal;
80: decorative layer;
90: first electrode plate;
100: second electrode plate;
2: vehicle;
S101 to S106: steps;
100a: color-changing glass; 11a: first glass substrate board; 12a: second glass substrate board; 20a: color-changing assembly;
21a: color-changing layer; 221a: first conductive layer; 222a: second conductive layer: 231a: diffusion ring; 241a: first protective layer; 242a: second protective layer; 232a: second diffusion ring; 31a: first substrate layer; 32a: second substrate layer; 100a': color-changing glass; 11a': a first glass substrate board; 12a': a second glass substrate board; 20a': color-changing assembly;
100b: electrochromic device; 10b: first substrate board; 20b: first electrode; 11b: second substrate board; 21b: second electrode; 30b: electrochromic layer; 40b: sealing member;
100c: electrochromic device; 10c: first substrate board; 20c: first electrode; 11c: second substrate board; 21c: second electrode; 30c: electrochromic layer; 40c: sealing member;
1d: first substrate layer; Ad: first conductive layer; 13d: functional layer; Bd: second conductive layer; 12d: second substrate layer; 5d: first electrical conductor; 2d: first bottom layer; 3d: first conductive layer; 10d: third conductive layer; 11d: second bottom layer; 8d: second electrical conductor; 7d: frame seal layer; 6d; insulation layer; 4d: first protective layer; 9d: second protective layer; 10d: third conductive layer;
1n: first substrate material; 2n: first conductive surface; 3n: cavity; 4n: second conductive surface; 5n: second substrate material; 6n: frame seal; 7n: frame seal.

### DESCRIPTION OF EMBODIMENTS

A reflector is an optical element with a smooth surface and a capability of reflecting light, and is an excessively important item in life and science. A most common mirror used for grooming in life, a vehicle rearview mirror used for observing a traveling status of a rear vehicle, a reflecting telescope, and the like are all reflectors.

To adapt the reflector to more application scenarios, some reflectors can adjust their reflectivity. A reflectivity auto-adjusting reflector is mainly implemented by using an organic small-molecule composition. Under an applied voltage, organic small molecules between a transparent conductive layer and a reflective layer undergo an electrochemical oxidation-reduction reaction to change molecular structures and absorb visible light, so as to adjust reflectivity of a device. At present, a breakdown voltage between the transparent conductive layer and the reflective layer is low. Consequently, light adjustment performance of the reflector is prone to instability.

To make objectives, technical solutions, and advantages of this application clearer, the following describes this application in detail with reference to the accompanying drawings.

This application discloses a reflecting device, a manufacturing method for a reflecting device, and a vehicle. The vehicle comprises the reflecting device, and the reflecting device can reflect incident light. For example, the reflecting device may be a reflector, and the reflector can be used as a rearview mirror of the vehicle, so that a driver observes a situation behind the vehicle through the rearview mirror while driving the vehicle. The vehicle may be, but is not limited to, a fuel vehicle, an electric vehicle, a motorcycle, and an electric moped.

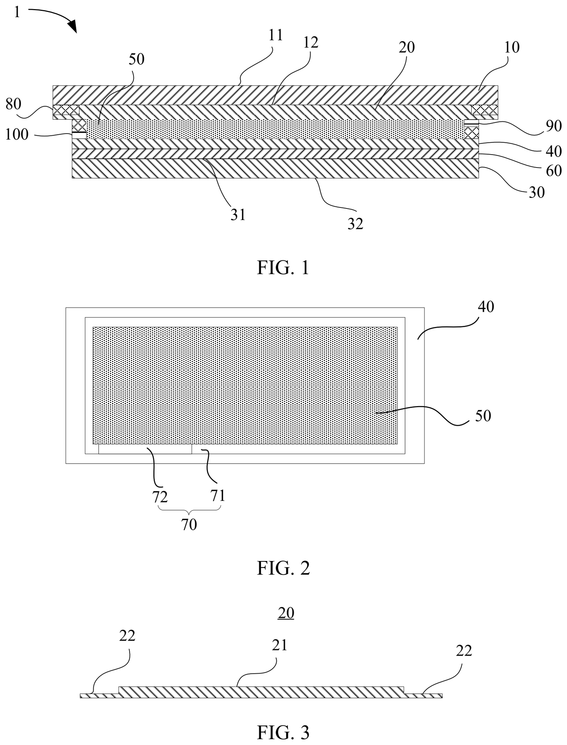

Referring to FIG. 1 to FIG. 2, a reflecting device 1 comprises a first transparent substrate sheet 10, a second transparent substrate sheet 30, a transparent conductive layer 20, a reflective layer 40, a seal 70, and a light adjustment composition 50.

The first transparent substrate sheet 10 comprises a first surface 11 and a second surface 12 that are disposed opposite to each other in a thickness direction. The first transparent substrate sheet 10 comprises at least one of glass, acrylic, and polyvinyl chloride, and visible light transmittance of the first transparent substrate sheet 10 is greater than or equal to 80%. It should be noted that the visible light transmittance of the first transparent substrate sheet 10 may have an error. The visible light transmittance of the first transparent substrate sheet 10 may have a 10% error. For example, during actual application, the visible light transmittance of the first transparent substrate sheet 10 may be set to 72% or higher. A specific thickness of the first transparent substrate sheet 10 is not limited in this application. The first transparent substrate sheet 10 has high visible light transmittance, so that most of incident light can pass through the first transparent substrate sheet 10.

The second transparent substrate sheet 30 comprises a third surface 31 and a fourth surface 32 that are disposed opposite to each other in a thickness direction. The second transparent substrate sheet 30 comprises at least one of glass, acrylic, and polyvinyl chloride, and visible light transmittance of the second transparent substrate sheet 30 is greater than or equal to 80%. It should be noted that the visible light transmittance of the second transparent substrate sheet 30 may have an error. The visible light transmittance of the second transparent substrate sheet 30 may have a 10% error. For example, during actual application, the visible light transmittance of the second transparent substrate sheet 30 may be set to 72% or higher. A specific thickness of the second transparent substrate sheet 30 is not limited in this application.

The transparent conductive layer 20 is disposed on the second surface 12, and the transparent conductive layer 20 comprises at least one of ITO (indium tin oxide), CTO (cadmium tin oxide), ZnO (zinc oxide), and InO (indium oxide). It should be noted that, a material of the transparent conductive layer 20 may be any one of ITO, CTO, ZnO, and InO, or a material of the transparent conductive layer 20 may be a composition of a plurality of materials of ITO, CTO, ZnO, and InO. A thickness of the transparent conductive layer 20 ranges from 50 nm to 500 nm, and the thickness of the transparent conductive layer 20 may have a 10% error. For example, an actual thickness of the transparent conductive layer 20 may be set to 45 nm to 550 nm. Visible light transmittance of the transparent conductive layer 20 is greater than or equal to 80%, so that incident light can pass through the transparent conductive layer 20. The visible light transmittance of the transparent conductive layer 20 may have a 10% error. For example, during actual application, the visible light transmittance of the transparent conductive layer 20 is set to 72% or higher. A sheet resistance of the transparent conductive layer 20 is less than or equal to 30 Ω, and a sheet resistance of the transparent conductive layer 20 may have a 10% error. During actual application, the sheet resistance of the transparent conductive layer 20 may be less than or equal to 33 Ω.

The reflective layer 40 is disposed on the third surface 31. It should be noted that, that the reflective layer 40 is disposed on the third surface 31 may be that the reflective layer 40 is directly disposed on the third surface 31, or may be that the reflective layer 40 is indirectly disposed on the third surface 31. The reflective layer 40 comprises one of silver, a silver alloy, aluminum, an aluminum alloy, chromium, and a chromium alloy. A thickness of the reflective layer 40 may be set to 10 nm to 500 nm, and the thickness of the reflective layer 40 may have a 10% thickness. For example, an actual thickness of the reflective layer 40 may be set to 9 nm to 550 nm. Reflectivity of the reflective layer 40 is greater than or equal to 70%. Specifically, the reflectivity of the reflective layer 40 may have a 10% error. For example, actual reflectivity of the reflective layer 40 may be more than 63%, and the reflective layer 40 can be configured to reflect incident light. With high reflectivity, the reflective layer 40 can reflect most of incident light irradiated on the reflective layer 40. A sheet resistance of the reflective layer 40 is less than or equal to 10 Ω, and the sheet resistance of the reflective layer 40 may have a 10% error. During actual application, the sheet resistance of the reflective layer 40 may be less than or equal to 11 Ω.

In embodiments provided in this application, the reflective layer 40 faces the transparent conductive layer 20. The reflective layer 40 is spaced apart from the transparent conductive layer 20. The transparent conductive layer 20 can be connected to a positive electrode of a power supply, and the reflective layer 40 can be electrically connected to a negative electrode of the power supply. The transparent conductive layer 20 is connected to the positive electrode of the power supply, and the reflective layer 40 is connected to the negative electrode of the power supply, so that an electric field can be formed.

The seal 70 is connected between the first transparent substrate sheet 10 and the second transparent substrate sheet 30, and the seal 70, the transparent conductive layer 20, and the reflective layer 40 enclose a cavity. The cavity is configured to accommodate the light adjustment composition 50. The light adjustment composition 50 is used to adjust reflectivity of incident light.

The seal 70 comprises glue and filler particles. The glue may be thermosetting glue. The sealant 70 may alternatively be photocuring glue or thermosetting glue. Specifically, the glue comprises but is not limited to phenolic, epoxy, polyaminophen, unsaturated polyester, heterocyclic polymers, unsaturated polyacetic acid, polyacrylic acid, epoxy acrylic acid, and polyurethane acrylic acid. A dielectric constant of the glue may range from 2 to 4.

A dielectric constant of the filler particle is greater than or equal to 20, so that the breakdown voltage of the electric field formed by the reflective layer 40 and the transparent conductive layer 20 can be increased, electrochemical stability of the light adjustment composition under the electric field can be improved, reflection reliability of the reflecting device can be improved, and the service life of the reflecting device can be prolonged. It should be noted that the dielectric constant of the filler particle may have a 10% error, and an actual dielectric constant of the filler particle may be 18 or more.

The dielectric constant of the filler particle may range from 25 to 150. A material of the filler particle may be one of lead titanate, barium titanate, lanthanum titanate, titanium oxide and zirconium oxide, or a material of the filler particle may be a combination of a plurality of materials of lead titanate, barium titanate, lanthanum titanate, titanium oxide, and zirconium oxide.

In some embodiments, when the seal is doped with filler particles with different dielectric constants, voltage withstand performance between the transparent conductive layer and the reflective layer in the reflecting device is different. For details, refer to the following table. In the table, when the seal is doped with filler particles whose dielectric constant is 26, a voltage of 7 V is required for breakdown between the transparent conductive layer and the reflective layer. When the seal is doped with filler particles whose dielectric constant is 50, a voltage of 12 V is required for breakdown between the transparent conductive layer and the reflective layer. However, when the seal is doped with filler particles whose dielectric constant is 1.56, only a voltage of 3 V is required for breakdown between the transparent conductive layer and the reflective layer.

| | Dielectric constant of a filler particle | Voltage withstand performance |
|---|---|---|
| Example 1 | 26 | Breakdown failure at 7 V |
| Example 2 | 50 | Breakdown failure at 12 V |
| Comparative Example 1 | 1.56 | Breakdown failure at 3 V |

A shape of the filler particle may be any one of a cuboid, a cube, a sphere, or a cylinder. In the sealant 70, shapes of the filler particles may all be the same. Alternatively, in the sealant 70, filler particles of different shapes may exist at the same time. A filler whose filler particles are regular in shape and even in size may be used as a support, to effectively ensure that the thickness of the seal is even, so as to ensure that a gap between the first transparent substrate material and the second transparent substrate material is even, the electric field of positive and negative electrode plates of the device is stable and even, and reflectivity is even and stable.

In embodiments provided in this application, when the filler particle is a sphere, a size of the filler particle ranges from 30 µm to 300 µm, and the filler particles disposed in the glue are even in size, so that the seal 70 overall tends to be flat, and stability of the seal 70 in connecting the first transparent substrate sheet 10 and the second transparent substrate sheet 30 is improved.

In embodiments provided in this application, in a possible implementation, the transparent conductive layer 20 completely covers the second surface 12, a transition layer 60 completely covers the third surface 31, and the reflective layer 40 completely covers the transition layer 60. The seal 70 is connected between and encloses the cavity with the transparent conductive layer 20 and the reflective layer 40.

In embodiments provided in this application, referring to FIG. 3, a surface of the transparent conductive layer 20 that faces the first transparent substrate sheet comprises a contact region 21 in contact with the second surface and a concave region 22 concave in a direction away from the second surface 12. The concave region 22 surrounds the contact region 21, and the concave region 22 is spaced apart from the second surface 12. A decorative layer 80 is disposed between the concave region 22 and the second surface 12, and reflectivity of the decorative layer 80 is greater than or equal to 50%. The reflectivity of the decorative layer 80 is greater than or equal to 50%. The reflectivity of the decorative layer 80 may have a 10% error. During actual application, the reflectivity of the decorative layer 80 may be greater than or equal to 45%. The decorative layer 80 can improve overall aesthetics of the reflecting device. In addition, the decorative layer 80 can reduce escape of light incident to the light adjustment composition 50 from the seal 70.

In embodiments provided in this application, the seal 70 comprises a first seal 71 and a second seal 72, and the first seal 71 and the second seal 72 enclose and form the seal 70.

In embodiments provided in this application, the light adjustment composition 50 is in contact with the transparent conductive layer 20 and the reflective layer 40. In other words, if the first transparent substrate sheet 10 and the second transparent substrate sheet 30 are disposed vertically, and the light adjustment composition 50 is disposed on the third surface 31 of the second transparent substrate sheet 30, the light adjustment composition 50 can support the first transparent substrate sheet 10, so that stability of an overall structure of the reflecting device can be improved.

The light adjustment composition 50 has a cathode active material and an anode active material. Under the electric field, the light adjustment composition 50 can undergo an electrochemical oxidation-reduction reaction, so that a molecular mechanism in the light adjustment composition 50 is transformed. In this way, absorption of incident light by the light adjustment composition 50 can be improved, and reflectivity of the reflecting device is reduced. For example, under the electric field, the light adjustment composition 50 can change absorption of incident light. If the light adjustment composition 50 improves a light absorption capability under the electric field, the reflectivity of the reflecting device can be reduced from more than 60% to less than 15%. It should be noted that when the reflectivity of the reflecting device is specifically adjusted, the reflectivity of the reflecting device can be controlled through adjustment of electric-field strength.

In embodiments provided in this application, the reflecting device further comprises a transition layer 60. The transition layer 60 is disposed between the reflective layer 40 and the third surface 31. The transition layer 60 comprises at least one of SiO (silicon monoxide), TiO (indium tin oxide), Nb₂O₅ (niobium pentoxide), and Al₂O₃ (aluminum oxide). It should be noted that the second transparent substrate sheet 30 comprises one of glass, acrylic, and polyvinyl chloride, and the reflective layer 40 comprises one of silver, a silver alloy, aluminum, an aluminum alloy, chromium, and a chromium alloy. If the reflective layer 40 is directly disposed on the second transparent substrate sheet 30, connection between the reflective layer 40 and the second transparent substrate sheet 30 is prone to instability. The transition layer 60 comprises at least one of SiO, TiO, Nb₂O₅, and Al₂O₃. The transition layer 60 can be well attached to the second transparent substrate sheet 30, and the reflective layer 40 can be further well attached to the transition layer 60. The transition layer 60 is disposed on the third surface 31 of the second transparent substrate sheet 30, and then the reflective layer 40 is disposed on the transition layer 60, so that the reflective layer 40 can be more stably disposed on the second transparent substrate sheet 30. A thickness of the transition layer 60 may range from 1 nm to 300 nm, a 10% error is allowed in a process of forming the transition layer 60, and the thickness of the transition layer 60 may range from 0.9 nm to 330 nm.

In embodiments provided in this application, the reflecting device further comprises a first electrode plate 90 and a second electrode plate 100. The first electrode plate 90 is electrically connected to the transparent conductive layer 20, and the second electrode plate 100 is electrically connected to the reflective layer 40. The first electrode plate 90 and the second electrode plate 100 are disposed on the reflecting device, so that the reflecting device can be electrically connected to an external power supply. Specifically, the first electrode plate 90 is connected to a positive electrode of the external power supply, and the second electrode plate 100 is connected to a negative electrode of the external power supply, so that the transparent conductive layer 20 and the reflective layer 40 form an electric field.

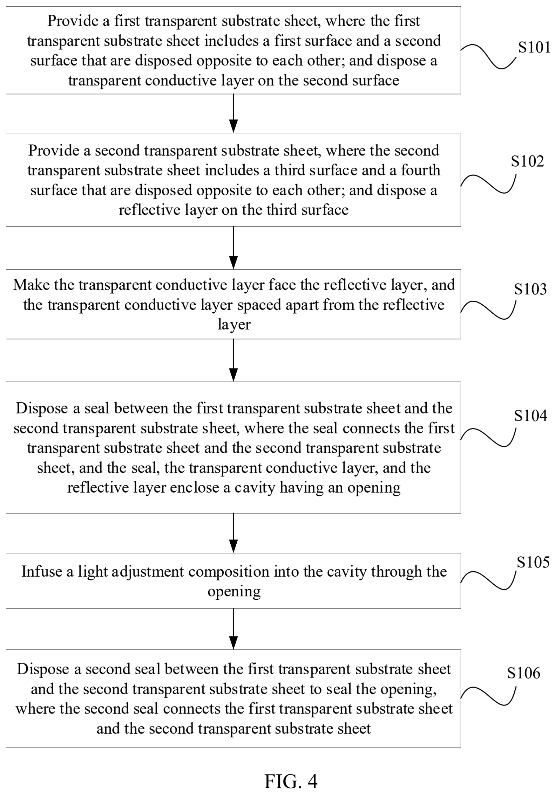

Referring to FIG. 4, an embodiment of this application further provides a manufacturing method for a reflecting device. For a specific structure of the reflecting device, refer to the content described in Example 1. The method comprises the following steps.

S101: provide a first transparent substrate sheet, where the first transparent substrate sheet comprises a first surface and a second surface that are disposed opposite to each other; and dispose a transparent conductive layer on the second surface.

The transparent conductive layer is plated on the second surface through vacuum plating.

S102: provide a second transparent substrate sheet, where the second transparent substrate sheet comprises a third surface and a fourth surface that are disposed opposite to each other; and dispose a reflective layer on the third surface.

In some embodiments, disposing the reflective layer on the third surface comprises: disposing a transition layer on the third surface, and disposing the reflective layer on a surface of the transition layer that is away from the second transparent substrate sheet.

Specifically, to ensure that the reflective layer can be stably disposed on the second transparent substrate sheet, the transition layer is vacuum-plated on the third surface, and then the reflective layer is vacuum-plated on the transition layer.

S103: make the transparent conductive layer face the reflective layer, and the transparent conductive layer spaced apart from the reflective layer.

S104: dispose a seal between the first transparent substrate sheet and the second transparent substrate sheet, wherein the seal connects the first transparent substrate sheet and the second transparent substrate sheet, and the seal, the transparent conductive layer, and the reflective layer enclose a cavity having an opening. The seal comprises filler particles whose dielectric constant is greater than or equal to 20.

The seal can connect the first transparent substrate sheet and the second transparent substrate sheet, to improve connection stability between the first transparent substrate sheet and the second transparent substrate sheet.

When the seal is disposed, the seal may be dispensed on the third surface of the second transparent substrate sheet or the reflective layer to form the cavity having the opening, and pressure is applied on the first transparent substrate sheet and the second transparent substrate sheet to cure the first seal.

S105: infuse a light adjustment composition into the cavity through the opening.

Connecting the first transparent substrate sheet and the second transparent substrate sheet by the seal can further form a cavity accommodating a regulating layer. Specifically, the cavity has an opening, and the light adjustment composition is infused into the cavity from the opening in a vacuum infusion manner.

In some embodiments, the seal comprises a first seal and a second seal. Forming the seal between the first transparent substrate sheet and the second transparent substrate sheet, the seal, the transparent conductive layer, and the reflective layer enclosing the cavity, and infusing the light adjustment composition into the cavity comprises:
disposing the first seal between the first transparent substrate sheet and the second transparent substrate sheet, where the first seal connects the first transparent substrate sheet and the second transparent substrate sheet, and the first seal, the transparent conductive layer, and the reflective layer enclose the cavity having the opening; and
infusing the light adjustment composition into the cavity through the opening.

In some embodiments, the manufacturing method for a reflecting device further comprises the following step.

S106: dispose the second seal between the first transparent substrate sheet and the second transparent substrate sheet to seal the opening, where the second seal connects the first transparent substrate sheet and the second transparent substrate sheet.

The second seal can seal the opening and confine the light adjustment composition to the cavity. In addition, the second seal connects the first transparent substrate sheet and the second transparent substrate sheet, to improve connection stability between the first transparent substrate sheet and the second transparent substrate sheet

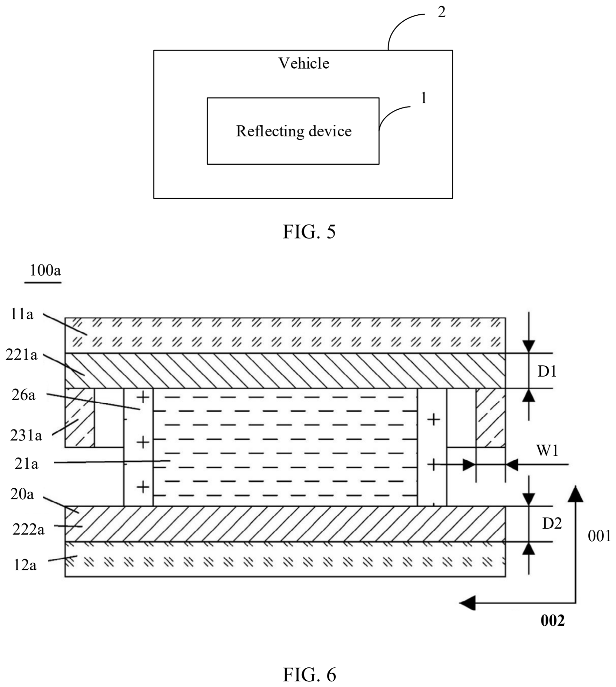

Referring to FIG. 5, an embodiment of this application further provides a vehicle 2. The vehicle 2 comprises the reflecting device 1 according to any one of the foregoing embodiments. As described above, the reflecting device 1 can reflect incident light. For example, the reflecting device 1 may be a reflector, and the reflector can be used as a rearview mirror of the vehicle, so that a driver observes a situation behind the vehicle through the rearview mirror while driving the vehicle 2. The vehicle may be, but is not limited to, a fuel vehicle, an electric vehicle, a motorcycle, and an electric moped.

In some embodiments, this application further provides color-changing glass and a vehicle.

In some embodiments, the color-changing glass comprises two glass substrate boards and a color-changing assembly sandwiched between the two glass substrate boards, wherein the color-changing assembly comprises a color-changing layer, a diffusion ring, a first conductive layer, and a second conductive layer. The diffusion ring and the color-changing layer are disposed on the first conductive layer. The second conductive layer is located on a side of the color-changing layer that is away from the first conductive layer. The diffusion ring is separately insulated from the color-changing layer and the second conductive layer. The diffusion ring and the second conductive layer are separately connected to an external circuit to form a voltage difference between the first conductive layer and the second conductive layer to change a color of the color-changing layer. The diffusion ring is disposed around a periphery of the color-changing layer. A conductive sheet resistance of a material of the diffusion ring is less than a conductive sheet resistance of a material of the first conductive layer.

In some embodiments, the conductive sheet resistance of the material of the diffusion ring ranges from 5 mΩ/□ to 30 mΩ/□, and/or the conductive sheet resistance of the material of the first conductive layer ranges from 5 Ω/□ to 100 Ω/□.

In some embodiments, the diffusion ring is prepared by using one of metallic silver, copper, silver paste, optically clear adhesive, and conductive ink; and/or the first conductive layer is prepared by using one of indium tin oxide, tin oxide, antimony-doped tin oxide, fluorine-doped tin oxide, antimony-doped zinc oxide, and aluminum-doped zinc oxide.

In some embodiments, the color-changing assembly further comprises a first protective layer, wherein the first protective layer is conductive and located between the first conductive layer and the color-changing layer, and the first protective layer is configured to prevent the first conductive layer from being corroded; and/or the color-changing assembly further comprises a second protective layer, wherein the second protective layer is conductive and located between the second conductive layer and the color-changing layer, and the second protective layer is configured to prevent the second conductive layer from being corroded.

In some embodiments, the first protective layer and/or the second protective layer are/is prepared by using at least one of titanium, silver, aluminum, platinum, iridium, rhodium, ruthenium, and copper.

In some embodiments, a thickness of the first protective layer is less than a thickness of the first conductive layer, and the thickness of the first protective layer ranges from 5 nm to 50 nm; and/or a thickness of the second protective layer is less than a thickness of the second conductive layer, and the thickness of the second protective layer ranges from 5 nm to 50 nm.

In some embodiments, the color-changing assembly further comprises a second diffusion ring. The second diffusion ring is disposed on the second conductive layer around the periphery of the color-changing layer, and the second diffusion ring is separately insulated from the color-changing layer and the diffusion ring. The second conductive layer is connected to the external circuit through the second diffusion ring.

In some embodiments, the second diffusion ring and the diffusion ring are prepared by using a same material; and/or the second conductive layer and the first conductive layer are prepared by using a same material.

In some embodiments, the color-changing assembly further comprises an insulation layer. The insulation layer is located between the diffusion ring and the second diffusion ring, and the insulation layer is configured to implement insulation between the diffusion ring and the second diffusion ring.

In some embodiments, the insulation layer extends toward the first conductive layer and is filled between the diffusion ring and the color-changing layer; and/or the insulation layer extends toward the second conductive layer, and is filled between the second diffusion ring and the color-changing layer.

In some embodiments, a vehicle is further provided, comprising a vehicle body and the color-changing glass according to any one of the foregoing embodiments, where the color-changing glass is embedded in the vehicle body.

Further, in the color-changing glass in this application, the diffusion ring is disposed around the periphery of the color-changing layer, so that a current of the external circuit can be diffused by the diffusion ring first and then flow into the first conductive layer, and diffuse from an edge of the first conductive layer to a center of the first conductive layer. Because the conductive sheet resistance of the material of the diffusion ring is smaller, the diffusion ring can implement diffusion of the current on the periphery of the color-changing layer faster than the first conductive layer, so that the current can be diffused to the color-changing layer faster to change the color of the color-changing layer, so as to improve the response speed of the color-changing glass in this application.

It will be understood that, because the vehicle provided in this application uses the color-changing glass provided in this application, the vehicle also has beneficial effects of improved response speed.

Specific implementations of the color-changing glass and the vehicle are as follows.

Specifically, this application provides a vehicle, comprising a vehicle body and color-changing glass. The color-changing glass is fixed to the vehicle body. The color-changing glass can change colors under an external current. Therefore, it will be understood that the color-changing glass can absorb a part of light based on its own color, to implement adjustment of light inside the vehicle. This improves user experience. For example, the color-changing glass may be used in a structure such as a sunroof, a rearview mirror, a windshield, or a window in the vehicle.

It will be understood that, in some other embodiments, the color-changing glass may be further used in other scenarios that require light adjustment, for example, scenarios such as eyeglass lenses, mobile phone screens, or mobile phone films. This is not specifically limited in this application.

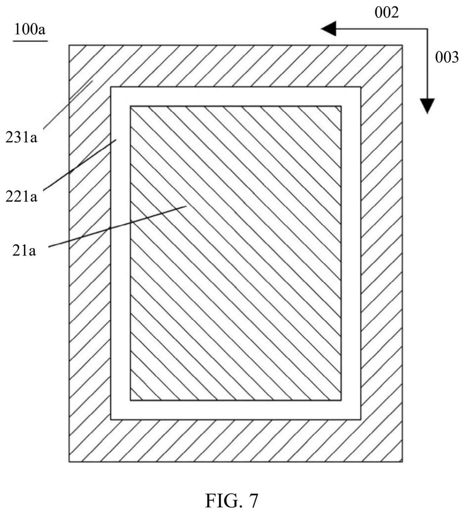

FIG. 6 is a diagram of a structure of color-changing glass 100a according to an embodiment of this application, and FIG. 7 is a diagram of a sectional top view of the color-changing glass 100a according to an embodiment of this application. For ease of description, a thickness direction of the color-changing glass 100a in this application is set to a first direction 001, and both a second direction 002 and a third direction 003 that are perpendicular to each other are perpendicular to the first direction 001.

As shown in FIG. 6 and FIG. 7, the color-changing glass 100a in this application comprises a first glass substrate board 11a, a second glass substrate board 12a, and a color-changing assembly 20a. The first glass substrate board 11a, the color-changing assembly 20a, and the second glass substrate board 12a are stacked in the first direction 001. Light emitted from the first glass substrate board 11a or the second glass substrate board 12a can be directed to the color-changing assembly 20a, and the color-changing assembly 20a can absorb a part of light based on its own color, to implement adjustment of the light emitted from the second glass substrate board 12a or the first glass substrate board 11a.

In addition, the color-changing assembly 20a can change its own color under an external circuit, so that external light can adjust, under the color-changing assembly 20a, a color and light intensity of light passing through the color-changing assembly 20a, to increase a light adjustment range of the color-changing glass 100a in this application.

Specifically, as shown in FIG. 6, the color-changing assembly 20a comprises a color-changing layer 21a, a first conductive layer 221a, a second conductive layer 222a, and a diffusion ring 231a. In the first direction 001, the first conductive layer 221a is located between the color-changing layer 21a and the first glass substrate board 11a, the second conductive layer 222a is located between the color-changing layer 21a and the second glass substrate board 12a, and the diffusion ring 231a is disposed on the first conductive layer 221a. The diffusion ring 231a is electrically connected to a positive electrode of the external circuit, and the second conductive layer 222a is electrically connected to a negative electrode of the external circuit.

It will be understood that a current of the external circuit may enter the first conductive layer 221a through the diffusion ring 231a, enter the second conductive layer 222a from the first conductive layer 221a through the color-changing layer 21a, and flow back to the external circuit from the negative electrode of the external circuit, to form a closed loop.

In the first direction 001, when a voltage difference exists between two opposite sides of the color-changing layer 21a, the current of the external circuit may flow into the color-changing layer 21a, so that the color-changing layer 21a can adjust its own color under the current, to achieve color-changing effect of the color-changing assembly 20a, so as to implement a color-changing function of the color-changing glass 100a in this application, and implement a light adjustment function of the color-changing glass 100a in this application.

As shown in FIG. 7, the diffusion ring 231a is disposed on a surface of the first conductive layer 221a that faces the second conductive layer 222a, and the diffusion ring 231a is disposed around a periphery of the color-changing layer 21a. The diffusion ring 231a is in an annular shape. In view of this, it will be understood that the current entering from the diffusion ring 231a is diffused from an edge region to a center region in the second direction 002 and the third direction 003, so that diffusion time of the current in the first conductive layer 221a is reduced.

Under actions of different voltages, the color-changing layer 21a changes to different colors. It will be understood that, a reduction in the diffusion time of the current in the first conductive layer 221a can reduce time required for current density of all regions in the first conductive layer 221a to be consistent. In view of this, when the current density is consistent, magnitudes of the current acting on all regions of the color-changing layer 21a are also relatively consistent, so that color uniformity of the color-changing layer 21a is good, to improve color uniformity of the color-changing glass 100a in this application.

In addition, the reduction in the diffusion time of the current in the first conductive layer 221a can also reduce time in which the current passes the first conductive layer 221a and acts on the color-changing layer 21a, so that a color-changing rate of the color-changing layer 21a is improved, to improve a response speed of the color-changing glass 100a in this application, and improve user experience.

As shown in FIG. 6 and FIG. 7, the diffusion ring 231a is spaced apart from the second conductive layer 222a in the first direction 001, so that the second conductive layer 222a and the diffusion ring 231a are insulated from each other, and a short circuit phenomenon caused by mutual contact between the diffusion ring 231a and the second conductive layer 222a is avoided.

The diffusion ring 231a is spaced apart from the color-changing layer 21a in the second direction 002 and the third direction 003, to prevent a case in which a color of the edge region of the color-changing layer 21a is inconsistent with a color of a remaining region and color uniformity of the color-changing glass 100a in this application is affected because the current of the external circuit directly enters the color-changing layer 21a through the diffusion ring 231a. Meanwhile, the diffusion ring 231a is located between the first conductive layer 221a and the second conductive layer 222a, and the color-changing layer 21a has conductivity. In view of this, it will be understood that spacing the diffusion ring 231a from the color-changing layer 21a can further prevent a short circuit phenomenon occurring between the diffusion ring 231a and the second conductive layer 222a due to the color-changing layer 21a.

Therefore, this application is different from solutions, in conventional technology, in which a conductive layer is directly connected to an external circuit in that the diffusion ring 231a disposed around the periphery of the color-changing layer 21a is disposed in the color-changing glass 100a, so that the current of the external circuit can be acted on by the diffusion ring 231a first and then flow into the first conductive layer 221a. A manner in which the current is diffused from the edge region to the center region and that is implemented by cooperating with the diffusion ring 231a reduces the diffusion time of the current in the first conductive layer 221a, so that the current can be conducted to the color-changing layer 21a faster and more uniformly, to improve the response speed and color uniformity of the color-changing glass 100a in this application.

In an embodiment, a conductive sheet resistance of a material of the diffusion ring 231a is less than a conductive sheet resistance of a material of the first conductive layer 221a. For materials of identical thickness, a larger sheet resistance of the material indicates a coorespondingly larger resistance of the material and worse conductivity of the corresponding material. It will be understood that the diffusion ring 231a is prepared by using a material whose sheet resistance is less than that of the material required for preparing the first conductive layer 221a, so that diffusion time of the current of the external circuit in the diffusion ring 231a can be reduced, and diffusion time of the current in the diffusion ring 231a can be reduced, to improve a rate at which the current is conducted to the color-changing layers 21a, and improve the response speed of the color-changing glass 100a in this application.

In an embodiment, the sheet resistance of the material of the diffusion ring 231a ranges from 5 mΩ/□ to 30 mΩ/□. For example, the sheet resistance of the material of the diffusion ring 231a ranges from 6 mΩ/□ to 10 mΩ/□. It will be understood that when the sheet resistance of the material of the diffusion ring 231a is less than 5 mΩ/□, a voltage between the first conductive layer 221a and the second conductive layer 222a of the external circuit is increased, and a voltage on the two opposite sides of the color-changing layer 21a is increased. This is not conducive to adjusting the voltage on the two sides of the color-changing layer 21a by a user by adjusting a voltage of the external circuit.

When the sheet resistance of the material of the diffusion ring 231a is greater than 30 mΩ/□, the diffusion time of the external current in the diffusion ring 231a is increased, and the external current may flow directly into the first conductive layer 221a without being diffused by the diffusion ring 231a, which increases the diffusion time of the external current in the first conductive layer 221a, and also affects color-changing uniformity and the response speed of the color-changing glass 100a in this application.

Therefore, in the color-changing glass 100a in this application, the diffusion ring 231a is prepared by using the material whose sheet resistance ranges from 5 mΩ/□ to 30 mΩ/□, so that the user adjusts color-changing effect of the color-changing layer 21a by adjusting the voltage of the external circuit, and color-changing uniformity and the response speed of the color-changing glass 100a in this application can be further improved. In this way, user experience is improved.

In an embodiment, as shown in FIG. 6, the diffusion ring 231a has a first thickness D1 in the first direction 001, where the first thickness D1 ranges from 40 µm to 200 µm. For example, the first thickness D1 is 100 µm. It will be understood that when the first thickness D1 is less than 40 µm, it is not conducive to implementing connection between the diffusion ring 231a and the external circuit. In addition, this may lead to disconnection between the diffusion ring 231a and the external circuit during transportation, which affects the color-changing function of the color-changing glass 100a in this application.

When the first thickness D1 is greater than 200 µm, due to a spacing between the first conductive layer 221a and the second conductive layer 222a, an increase in the first thickness D1 reduces the spacing between the diffusion ring 231a and the second conductive layer 222a, which may lead to contact between the diffusion ring 231a and the second conductive layer 222a, and consequently causes a short circuit.

Therefore, in the color-changing glass 100a in this application, the first thickness D1 is set to range from 40 µm to 200 µm, so that connection effect between the diffusion ring 231a and the external circuit is ensured, and the short circuit phenomenon caused between the diffusion ring 231a and the second conductive layer 222a can be further avoided, to ensure the color-changing function of the color-changing glass 100a in this application.

In an embodiment, as shown in FIG. 6, the diffusion ring 231a has a first width W1 in the second direction 002, where the first width W1 ranges from 1 mm to 3 mm. For example, the first width W1 of the diffusion ring 231a is 2 mm. It will be understood that when the first width W1 is less than 1 mm, it is not conducive to implementing connection between the diffusion ring 231a and the external circuit. In addition, this may lead to disconnection between the diffusion ring 231a and the external circuit during transportation, which affects the color-changing function of the color-changing glass 100a in this application.

In addition, when the first width W1 is less than 1 mm, a contact area between the diffusion ring 231a and the first conductive layer 221a is also reduced, which increases the diffusion time of the current in the first conductive layer 221a, and reduces the response speed of the color-changing glass 100a in this application.

When the first width W1 is greater than 3 mm, the diffusion ring 231a extends toward the color-changing layer 21a in the second direction 002, and a size of the color-changing layer 21a in the second direction 002 is reduced, which affects the color-changing effect of the color-changing glass 100a in this application. At the same time, if the diffusion ring 231a extends in the second direction 002 in a direction away from the color-changing layer 21a, a size of the entire color-changing glass 100a in the second direction 002 is also increased, and a proportion of the color-changing layer 21a in the color-changing glass 100a in this application is decreased, which affects the color-changing effect of the color-changing glass 100a in this application.

Therefore, in the color-changing glass 100a in this application, the first width W1 is set to range from 1 mm to 3 mm, so that the connection effect between the diffusion ring 231a and the external circuit is ensured, and the impact of the diffusion ring 231a on the proportion of the color-changing layer 21a can be further avoided. In addition, the effect of the diffusion ring 231a on reducing the diffusion time of the first conductive layer 221a is further ensured. In this way, the color-changing function and the color-changing effect of the color-changing glass 100a in this application are ensured, and the response speed of the color-changing glass 100a in this application is improved.

In an embodiment, the diffusion ring 231a is prepared by using one of metallic silver, copper, silver paste, optically clear adhesive, and conductive ink. For example, the diffusion ring 231a is prepared by using silver paste.

In an embodiment, as shown in FIG. 6, the sheet resistance of the material of the first conductive layer 221a ranges from 5 Ω/□ to 100 Ω/□. For example, the sheet resistance of the material of the first conductive layer 221a ranges from 8 Ω/□ to 15 Ω/□. It will be understood that when the sheet resistance of the material of the first conductive layer 221a is less than 5 Ω/□, the voltage on the two opposite sides of the color-changing layer 21a is increased. This is not conducive to adjusting the voltage on the two sides of the color-changing layer 21a by the user by adjusting the voltage of the external circuit.

When the sheet resistance of the material of the first conductive layer 221a is greater than 100 Ω/□, the diffusion time of the external current in the first conductive layer 221a is increased, which affects color-changing uniformity and the response speed of the color-changing glass 100a in this application.

Therefore, in the color-changing glass 100a in this application, the first conductive layer 221a is prepared by using the material whose sheet resistance ranges from 5 Ω/□ to 100 Ω/□, so that the user adjusts the color-changing effect of the color-changing layer 21a by adjusting the voltage of the external circuit, and color-changing uniformity and the response speed of the color-changing glass 100a in this application can be further improved. In this way, user experience is improved.

In an embodiment, as shown in FIG. 6, the first conductive layer 221a has a second thickness D2 in the first direction 001, wherein the second thickness D2 ranges from 50 nm to 500 nm. For example, the second thickness D2 ranges from 80 nm to 150 nm. The first conductive layer 221a can reduce electronic radiation, ultraviolet light, and infrared light. In view of this, it will be understood that when the second thickness D2 is less than 50 nm, an absorption capability of the first conductive layer 221a for electronic radiation, ultraviolet light, and infrared light is reduced, which affects absorption efficiency of the color-changing glass 100a in this application for electronic radiation, ultraviolet light, and infrared light.

The thickness of the first conductive layer 221a is further related to conductivity and transparency of the first conductive layer 221a. In view of this, it will be understood that when the second thickness D2 is greater than 500 nm, the first conductive layer 221a may have a specific color, which affects color uniformity of the color-changing glass 100a in this application. In addition, an increase in the second thickness D2 further affects conductivity of the first conductive layer 221a. Consequently, the voltage difference between the two opposite sides of the color-changing layer 21a is affected, and the color-changing function of the color-changing glass 100a in this application is affected.

Therefore, disposing the first conductive layer 221a whose second thickness D2 ranges from 50 nm to 500 nm can ensure absorption efficiency of the first conductive layer 221a for electronic radiation, ultraviolet light, and infrared light, and further ensure conductivity and transparency of the first conductive layer 221a, to ensure color uniformity and the color-changing function of the color-changing glass 100a in this application.

In an embodiment, the first conductive layer 221a is prepared by using one of indium tin oxide, tin oxide, antimony-doped tin oxide, fluorine-doped tin oxide, antimony-doped zinc oxide, and aluminum-doped zinc oxide, so that light transmission of the first conductive layer 221a is ensured, and conductivity of the first conductive layer 221a can be further ensured. For example, the first conductive layer 221a is prepared by using indium tin oxide.

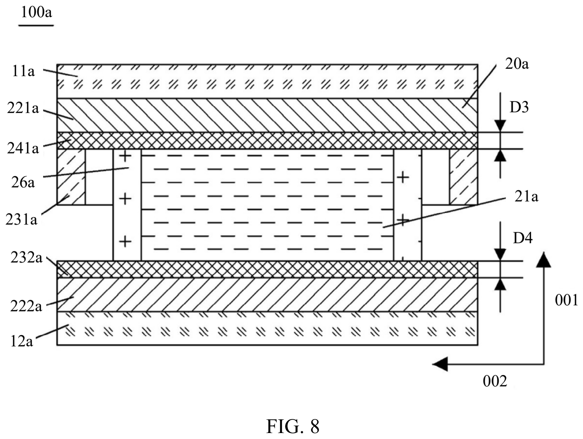

FIG. 8 is a diagram of another structure of the color-changing glass 100a according to an embodiment of this application.

As shown in FIG. 8, the color-changing assembly 20a further comprises a first protective layer 241a. The first protective layer 241a is prepared by using a conductive material, and is located between the first conductive layer 221a and the color-changing layer 21a, to space the first conductive layer 221a and the color-changing layer 21a from each other. A material for preparing the color-changing layer 21a may include acids and bases. In view of this, it will be understood that providing the first protective layer 241a can prevent the acids and the bases of the color-changing layer 21a from acting on the first conductive layer 221a, to prevent the first conductive layer 221a from being corroded, ensure integrity of the first conductive layer 221a, and ensure color-changing efficiency of the color-changing glass 100a in this application.

As shown in FIG. 8, the color-changing assembly 20a further comprises a second protective layer 242a. The second protective layer 242a is prepared by using a conductive material, and is located between the second conductive layer 222a and the color-changing layer 21a, to space the second conductive layer 222a and the color-changing layer 21a from each other. The material for preparing the color-changing layer 21a may include acids and bases. In view of this, it will be understood that providing the second protective layer 242a can prevent the acids and the bases of the color-changing layer 21a from acting on the second conductive layer 222a, to prevent the second conductive layer 222a from being corroded, ensure integrity of the second conductive layer 222a, and ensure color-changing efficiency of the color-changing glass 100a in this application.

It will be understood that, in some other embodiments, alternatively, the color-changing glass 100a in this application may only have the first protective layer 241a disposed between the first conductive layer 221a and the color-changing layer 21a, or only have the second protective layer 242a disposed between the second conductive layer 222a and the color-changing layer 21a. This is not specifically limited in this application.

In an embodiment, the first protective layer 241a is prepared by using at least one of titanium, silver, aluminum, platinum, iridium, rhodium, ruthenium, and copper.

In an embodiment, as shown in FIG. 6 and FIG. 8, the first protective layer 241a has a third thickness D3, wherein the third thickness D3 is less than the second thickness D2. Light transmission of the material for preparing the first protective layer 241a is poor. In view of this, it may be understood that disposing the first protective layer 241a whose third thickness D3 is less than the second thickness D2 of the first conductive layer 221a can ensure conductivity of the first protective layer 241a, reduce light absorption effect of the first protective layer 241a, reduce impact of the first protective layer 241a on a color of the color-changing glass 100a in this application, and ensure color uniformity of the color-changing glass 100a in this application.

The third thickness D3 ranges from 5 nm to 50 nm. For example, the third thickness D3 ranges from 8 nm to 20 anm. Anti-corrosion performance of the first protective layer 241a is limited. In view of this, it will be understood that when the third thickness D3 is less than 5 nm, protection effect of the first protective layer 241a on the first conductive layer 221a is reduced. Consequently, acidic and basic substances in the color-changing layer 21a may pass through the first protective layer 241a and corrode the first conductive layer 221a, which affects the color-changing function of the color-changing glass 100a in this application.

Light transmission of the material for preparing the first protective layer 241a is poor. In view of this, it will be understood that when the third thickness D3 is greater than 50 nm, light emitted to the first protective layer 241a is absorbed to a greater extent, and there may even be a possibility of the light being blocked by the first protective layer 241a, which affects the light transmission effect of the color-changing glass 100a in this application.

Therefore, the third thickness D3 is set to range from 5 nm to 50 nm, so that the protection effect of the first protective layer 241a on the first conductive layer 221a can be ensured, and blocking of light by the first protective layer 241a can be further reduced, to ensure the light transmission effect of the color-changing glass 100a in this application.

In an embodiment, as shown in FIG. 6 and FIG. 8, the second protective layer 242a has a fourth thickness D4, where the fourth thickness D4 is less than a thickness of the second conductive layer 222a. In this way, conductivity of the second protective layer 242a is ensured, light absorption effect of the second protective layer 242a is reduced, impact of the second protective layer 242a on the color of the color-changing glass 100a in this application is reduced, and color uniformity of the color-changing glass 100a in this application is ensured.

The fourth thickness D4 ranges from 5 nm to 50 nm. For example, the fourth thickness D4 ranges from 8 nm to 20 nm. In this way, the protection effect of the second protective layer 242a on the second conductive layer 222a can be ensured, and blocking of light by the second protective layer 242a can be further reduced, to ensure the light transmission effect of the color-changing glass 100a in this application.

In an embodiment, the second protective layer 242a is prepared by using at least one of titanium, silver, aluminum, platinum, iridium, rhodium, ruthenium, and copper.

In an embodiment, the first protective layer 241a and the second protective layer 242a are prepared by using a same material.

In an embodiment, a thickness of the second protective layer 242a ranges from 5 nm to 50 nm, and for example, the thickness of the second protective layer 242a ranges from 8 nm to 20 nm.

In an embodiment, the second conductive layer 222a is prepared by using one of indium tin oxide, tin oxide, antimony-doped tin oxide, fluorine-doped tin oxide, antimony-doped zinc oxide, and aluminum-doped zinc oxide, so that light transmission of the second conductive layer 222a is ensured, and conductivity of the second conductive layer 222a can be further ensured. For example, the second conductive layer 222a is prepared by using indium tin oxide.

In an embodiment, the first conductive layer 221a and the second conductive layer 222a are prepared by using a same material.

In an embodiment, a sheet resistance of a material of the second conductive layer 222a ranges from 5 Ω/□ to 100 Ω/□. For example, the sheet resistance of the material of the second conductive layer 222a ranges from 8 Ω/□ to 15 Ω/□.

In an embodiment, the thickness of the second conductive layer 222a also ranges from 50 nm to 500 nm. For example, the thickness of the second conductive layer 222a ranges from 80 nm to 150 nm.

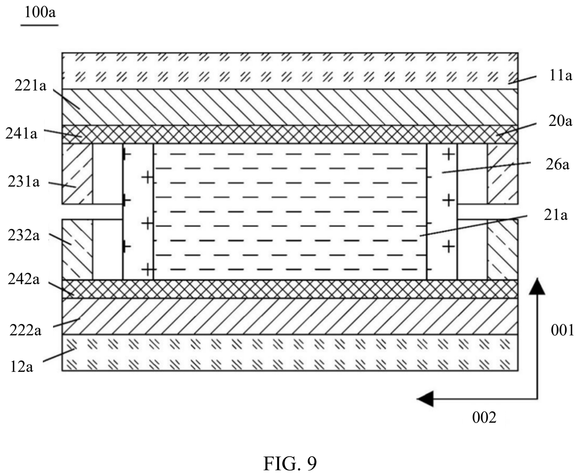

FIG. 9 is a diagram of still another structure of the color-changing glass 100a according to an embodiment of this application.

As shown in FIG. 9, the color-changing assembly 20a further comprises a second diffusion ring 232a. The second diffusion ring 232a is disposed on a surface of the second conductive layer 222a that faces the first conductive layer 221a, and the second diffusion ring 232a is disposed around the periphery of the color-changing layer 21a.

The second diffusion ring 232a is in an annular shape. In view of this, it will be understood that the current flowing to the second conductive layer 222a through the color-changing layer 21a is diffused from the center region to the edge region in the second direction 002 and the third direction 003, so that diffusion time of the current in the second conductive layer 222a is reduced.

The diffusion ring 231a can reduce the diffusion time of the current in the first conductive layer 221 a. In view of this, it will be understood that cooperation between the diffusion ring 231a and the second diffusion ring 232a reduces the diffusion time of the currents in the first conductive layer 221a and the second conductive layer 222a, so that the time required for currents on the two opposite sides of the color-changing layer 21a to be uniform is reduced. In this way, the color-changing rate of the color-changing layer 21a is improved, the response speed of the color-changing glass 100a in this application is improved, and user experience is improved.

As shown in FIG. 9, the second diffusion ring 232a is spaced apart from the diffusion ring 231a in the first direction 001, so that the second diffusion ring 232a and the diffusion ring 231a are insulated from each other, and a short circuit phenomenon caused by mutual contact between the diffusion ring 231a and the second diffusion ring 232a is avoided. In addition, impact, of the current flowing directly from the color-changing layer 21a into the second diffusion ring 232a, on the color of the color-changing layer 21a is further avoided, and color uniformity of the color-changing glass 100a is ensured.

The second diffusion ring 232a is spaced apart from the color-changing layer 21a in the second direction 002 and the third direction 003, to prevent a case in which the diffusion ring 231a and the second diffusion ring 232a are connected because the diffusion ring 231a and the second diffusion ring 232a form an electric field under the external circuit, avoiding a short circuit phenomenon between the diffusion ring 231a and the second diffusion ring 232a.

In an embodiment, the second diffusion ring 232a is prepared by using one of metallic silver, copper, silver paste, optically clear adhesive, and conductive ink. For example, the second diffusion ring 232a is prepared by using silver paste.

In an embodiment, the second diffusion ring 232a and the diffusion ring 231a are prepared by using a same material.

In an embodiment, the sheet resistance of the material of the second diffusion ring 232a ranges from 5 mΩ/□ to 30 mΩ/□. For example, the sheet resistance of the material of the diffusion ring 231a ranges from 6 mΩ/□ to 10 mΩ/□.

In an embodiment, a thickness of the second diffusion ring 232a ranges from 40 µm to 200 µm. For example, the thickness of the second diffusion ring 232a is 100 µm.

In an embodiment, a width of the second diffusion ring 232a ranges from 1 mm to 3 mm. For example, the width of the second diffusion ring 232a is 2 mm.

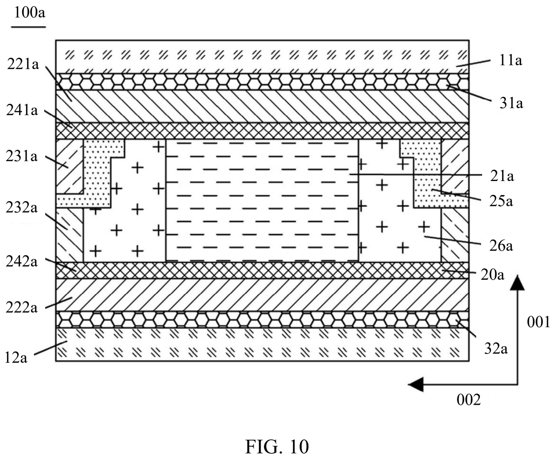

FIG. 10 is a diagram of a sectional structure of the color-changing glass 100a according to an embodiment of this application.

As shown in FIG. 10, the color-changing assembly 20a further comprises an insulation layer 25. The insulation layer 25 is located between the diffusion ring 231a and the second diffusion ring 232a in the first direction 001, to implement insulation between the diffusion ring 231a and the second diffusion ring 232a, and reduce a possibility that the diffusion ring 231a and the second diffusion ring 232a are connected and short-circuited, so that use safety of the color-changing glass 100a in this application is ensured.

It will be understood that, in another embodiment, two insulation layers 25 may alternatively be provided, and are both located between the diffusion ring 231a and the second diffusion ring 232a in the first direction 001. One of the insulation layers 25 is coated on a surface of the diffusion ring 231a that faces the second diffusion ring 232a, the other one of the insulation layers 25 is coated on a surface of the second diffusion ring 232a that faces the diffusion ring 231a, and the two insulation layers 25 are spaced apart from each other, to implement insulation between the diffusion ring 231a and the second diffusion ring 232a.

In an embodiment, as shown in FIG. 10, the insulation layer 25 extends toward the first conductive layer 221a and is filled between the diffusion ring 231a and the color-changing layer 21a, to implement insulation between the diffusion ring 231a and the color-changing layer 21a, and reduce a possibility that the current in the diffusion ring 231a is directly transmitted to the color-changing layer 21a. In addition, a case in which the diffusion ring 231a and the second diffusion ring 232a are connected due to the color-changing layer 21a is further avoided. In addition, formation of the electric field between the diffusion ring 231a and the second diffusion ring 232a under the external current is further avoided, and a possibility of a short circuit between the diffusion ring 231a and the second diffusion ring 232a under the electric field is avoided, to realize use safety of the color-changing glass 100a in this application.

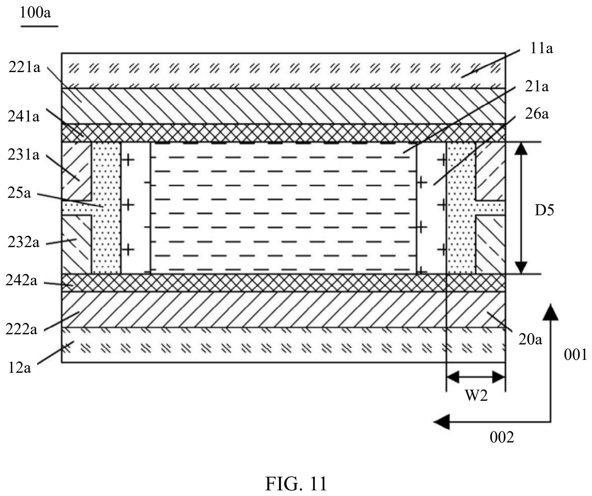

It will be understood that, in another embodiment, as shown in FIG. 11, when filled between the diffusion ring 231a and the color-changing layer 21a, the insulation layer 25 further extends toward the second conductive layer 222a and is filled between the second diffusion ring 232a and the color-changing layer 21a, to avoid impact of the diffusion ring 231a and the second diffusion ring 232a on color-changing effect of the color-changing layer 21a, ensure insulation performance between the diffusion ring 231a and the second diffusion ring 232a, and improve use safety of this application color-changing glass.

In another embodiment, the insulation layer 25 may extend only toward the second conductive layer 222a and is filled between the second diffusion ring 232a and the color-changing layer 21a. This is not specifically limited in this application.

In an embodiment, insulation layer 25 is prepared by using insulating ink.

In an embodiment, a resistance of a material of the insulation layer 25 is greater than 10⁵ Ω. For example, the resistance of the material of the insulation layer 25 is greater than 10⁶ Ω.

In an embodiment, a thickness of the insulation layer 25 ranges from 5 µm to 80 µm. For example, the thickness of the insulation layer 25 ranges from 8 µm to 20 µm. It will be understood that the thickness of the insulation layer 25 is limited to 5 µm to 80 µm, so that impact of an excessively small thickness on insulation effect of the insulation layer 25 can be avoided, and impact of an excessively large thickness of the insulation layer 25 on an overall thickness of the color-changing glass 100a can be further avoided, to ensure use safety of the color-changing glass 100a in this application

In an embodiment, a width of the insulation layer 25 ranges from 3 mm to 5 mm. For example, the width of the insulation layer 25 ranges from 4 mm to 4.5 mm. It will be understood that the width of the insulation layer 25 is limited to 3 mm to 5 mm, so that impact of an excessively small width on insulation effect of the insulation layer 25 can be avoided, and impact of an excessively large width on the space proportion of the color-changing layer 21a can be further avoided, to ensure color-changing efficiency of the color-changing glass 100a in this application.

In an embodiment, as shown in FIG. 6 to FIG. 11, the color-changing assembly 20a further comprises an encapsulation layer 26. The encapsulation layer 26 is in an annular shape and surrounds the periphery of the color-changing layer 21a. The insulation layer 25, the diffusion ring 231a, and the second diffusion ring 232a are all spaced apart from the color-changing layer 21a by use of the encapsulation layer 26.

A material used for the color-changing layer 21a usually has fluidity. Therefore, it will be understood that disposing the encapsulation layer 26 surrounding the color-changing layer 2a1 can improve insulation performance between the color-changing layer 21a and the diffusion ring 231a and the second diffusion ring 232a, and can further define a relative position of the color-changing layer 21a. In addition, the color-changing layer 21a can be further separated from an external environment to avoid a phenomenon that water and oxygen enter the color-changing layer 21a and react with the material of the color-changing layer 2a1, so as to improve color-changing effect of the color-changing glass 100a in this application.

In an embodiment, the encapsulation layer 26 is prepared by using at least one of phenolic resin, epoxy resin, and organic silica gel adhesive. For example, the encapsulation layer 26 is prepared by using epoxy resin. It will be understood that, in some other embodiments, the encapsulation layer 26 may alternatively use another material that has bonding effect, good sealing performance, and low permeability to water, oxygen, and an organic solvent, and does not react with the material of the color-changing layer 21a.

In an embodiment, as shown in FIG. 11, the encapsulation layer 26 has a fifth thickness D5 in the first direction 001, where the fifth thickness D5 ranges from 70 µm to 250 µm. For example, the fifth thickness D5 ranges from 100 µm to 150 µm. A thickness of the color-changing layer 21a in the first direction 001 is unchanged. In view of this, it will be understood that when the fifth thickness D5 is less than 70 µm, some regions of the color-changing layer 21a are connected to an external environment, and water and oxygen in the external environment reacts with an exposed part of the color-changing layer 21a, which affects color-changing effect of the color-changing glass 100a in this application.

When the fifth thickness D5 is greater than 250 µm, a gap exists between the color-changing layer 21a and the encapsulation layer 26. The color-changing layer 21a has fluidity. In view of this, it will be understood that the color-changing layer 21a may be separated from the first conductive layer 22 1a or the second conductive layer 222a, which affects conduction between the external current and the color-changing layer 21a, and further affects the color-changing function and color-changing effect of the color-changing glass 100a in this application.

Therefore, the fifth thickness D5 is set to range from 70 µm to 250 µm, so that blocking effect of the encapsulation layer 26 on the color-changing layer 21a can be ensured, and connection between the color-changing layer 21a and the first conductive layer 221a and the second conductive layer 222a can be further ensured, to ensure the color-changing function and color-changing effect of the color-changing glass 100a in this application.

In an embodiment, as shown in FIG. 11, the encapsulation layer 26 has a second width W2, where the second width W2 ranges from 1.2 mm to 4 mm. For example, the second width W2 ranges from 1.8 mm to 2.2 mm. It will be understood that the second width W2 is set to range from 1.2 mm to 4 mm, so that a case in which water-oxygen blocking effect of the encapsulation layer 26 is poor due to an excessively small second width W2 can be avoided, and a case in which the space proportion of the color-changing layer 21a is small due to an excessively large second width W2 can be further avoided, to ensure water-oxygen blocking effect of the encapsulation layer 26, and ensure color-changing effect of the color-changing glass 100a in this application.

In an embodiment, as shown in FIG. 10 and FIG. 11, the color-changing glass 100a in this application further comprises a first substrate layer 31a and a second substrate layer 32a. In the first direction 001, the first substrate layer 31a is disposed between the first glass substrate board 11a and the first conductive layer 221a, and the second substrate layer 32a is disposed between the second glass substrate board 12a and the second conductive layer 222a.

In view of a process of providing the first conductive layer 221a and the second conductive layer 222a in an existing process, it will be understood that providing the first substrate layer 31a and the second substrate layer 32a can reduce difficulty in providing the first conductive layer 221a and the second conductive layer 222a on the first glass substrate board 11a and the second glass substrate board 12a, so that the connection effect between the first conductive layer 221a and the second conductive layer 222a and the first glass substrate board 11a and the second glass substrate board 12a is ensured, and process difficulty is further reduced, to facilitate preparation.

In an embodiment, the first substrate layer 31a is prepared by using one of titanium dioxide, tantalum pentoxide, niobium pentoxide, silicon dioxide, and magnesium fluoride. For example, the first substrate layer 31a is prepared by using niobium pentoxide.

In an embodiment, a thickness of the first substrate layer 31a ranges from 30 nm to 100 nm. For example, the thickness of the first substrate layer 31a ranges from 30 nm to 50 nm. It will be understood that the first substrate layer 31a whose thickness ranges from 30 nm to 100 nm is disposed, so that impact of an excessively small thickness of the first substrate layer 31a on preparation effect of the first conductive layer 221a can be avoided, and impact of an excessively large thickness of the first substrate layer 31 on the overall thickness of the color-changing glass 100a can be further avoided.

In an embodiment, the second substrate layer 32a is prepared by using one of titanium dioxide, tantalum pentoxide, niobium pentoxide, silicon dioxide, and magnesium fluoride. For example, the second substrate layer 32a is prepared by using niobium pentoxide.

In an embodiment, a thickness of the second substrate layer 32a ranges from 30 nm to 100 nm. For example, the thickness of the second substrate layer 32a ranges from 30 nm to 50 nm. It will be understood that the second substrate layer 32a whose thickness ranges from 30 nm to 100 nm is provided, so that impact of an excessively small thickness of the second substrate layer 32a on preparation effect of the second conductive layer 222a can be avoided, and impact of an excessively large thickness of the second substrate layer 32a on the overall thickness of the color-changing glass 100a can be further avoided.

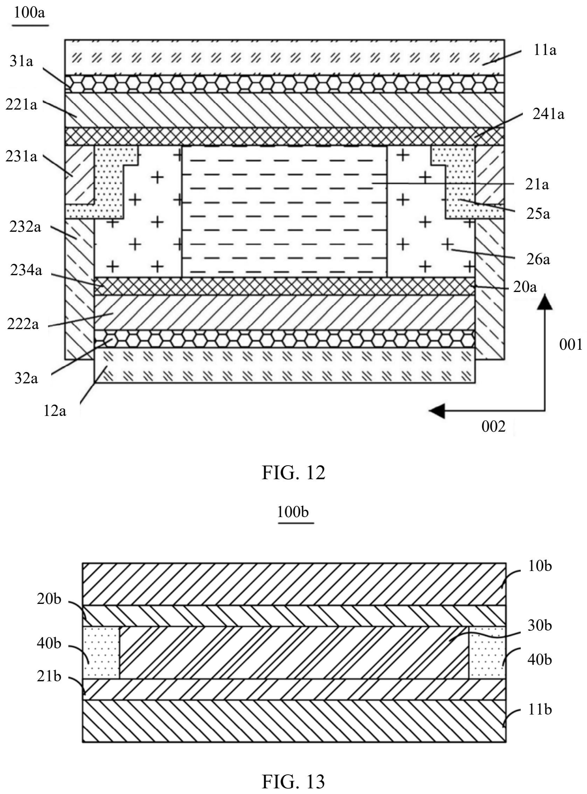

FIG. 12 is a diagram of still another sectional structure of the color-changing glass 100a according to an embodiment of this application.

As shown in FIG. 12, a size of the second glass substrate board 12a is smaller than a size of the first glass substrate board 11a. Correspondingly, the second diffusion ring 232a may further extend in the first direction 001 and directly in contact with a side edge of the second conductive layer 222a. It will be understood that the size of the second glass substrate board 12a is set to be different from the size of the first glass substrate board 11a, so that the color-changing glass 100a in this application matches different use conditions.

In an embodiment, the color-changing layer 21a is a composition, comprising a cathode color-changing material and an anode color-changing material. The cathode color-changing material is at least one of viologen, substituted viologen, anthraquinone, and substituted anthraquinone. For example, the cathode color-changing material is methyl viologen. Concentration of the cathode color-changing material ranges from 10 mmol/L to 300 mmol/L. For example, the concentration of the cathode color-changing material ranges from 50 mmol/L to 80 mmol/L.

The anode color-changing material is at least one of diphenylamine, substituted diphenylamine, an N-substituted compound of diphenylamine, triphenylamine, substituted triphenylamine, ferrocene, substituted ferrocene, ferrocene salt, substituted ferrocene salt, phenothiazine, substituted phenothiazine, thianthrene, substituted thianthrene, phenazine, substituted phenazine, 5,10-dihydrophenazine, and substituted 5,10-dihydrophenazine. For example, the anode color-changing materials are an N-substituted compound of diphenylamine, substituted phenothiazine, and substituted 5,10-dihydrophenazine. Concentration of the anode color-changing material ranges from 10 mmol/L to 300 mmol/L. For example, the concentration of the anode color-changing material ranges from 60 mmol/L to 100 mmol/L.

It will be understood that the anode color-changing material and the cathode color-changing material can respectively change their own colors under the voltage difference between the two opposite sides of the color-changing layer 21a, to implement the color-changing function of the color-changing glass 100a in this application.

In an embodiment, the color-changing layer 21a further comprises a solvent, wherein the solvent is at least one of sulfone, amide, ether, alcohol, nitrile, ketone, and ester. Specifically, the solvent is at least one of 3-methylsulfolane, dimethylsulfoxide, dimethylformamide, tetraethylene glycol dimethyl ether, ethoxyethanol, acetonitrile, glutaronitrile, 3-hydroxypropionitrile, 2-methylglutaronitrile, 2-acetylbutyrolactone, cyclopentanone, β-propiolactone, γ-butyrolactone, γ-valrolactone, polypropylene carbonate, ethylene carbonate, and propylene carbonate. For example, the solvents are propylene carbonate, dimethylsulfoxide and dimethylformamide.

The solvent can dissolve and disperse the anode color-changing material and the cathode color-changing material, so that the anode color-changing material and the cathode color-changing material can be mixed with each other, to ensure color changing uniformity of the color-changing layer 21a in this application, and ensure color uniformity of the color-changing glass 100a in this application. It will be understood that, in some other embodiments, the solvent may be another material that dissolves or disperses the anode color-changing material and the cathode color-changing material and reacts with the anode color-changing material and the cathode color-changing material.

In an embodiment, the color-changing layer 21a further comprises an anti-delamination agent. The anti-delamination agent is a polymer comprising an ester group. Specifically, the anti-delamination agent is at least one of polyacrylate, polymethacrylate, and polyaromatic ester. For example, the anti-delamination agent is polymethyl methacrylate. Concentration of the anti-delamination agent ranges from 1 wt% to 6 wt%. For example, the concentration of the anti-delamination agent ranges from 4 wt% to 6 wt%.

The anti-delamination agent can prevent a delamination problem of the color-changing layer 21a, ensure uniform dispersion of devices of the color-changing layer 21a, and improve color-changing uniformity of the color-changing layer 21a. Meanwhile, the anti-delamination agent can also increase the service life of each device of the color-changing layer 21a.

In an embodiment, the color-changing layer 21a further comprises an electrolyte, to improve ionic conductivity of the color-changing layer 21a, improve a color-changing response speed of the color-changing layer 21a, and improve the response speed of the color-changing glass 100a in this application.

The electrolyte is at least one of lithium trifluoromethanesulfonate, lithium perchlorate, lithium tetrafluoroborate, and lithium hexafluorophosphate. For example, the electrolyte is lithium tetrafluoroborate. Content of the electrolyte ranges from 0.05 mol/L to 1 mol/L. For example, concentration of the electrolyte is 0.5 mol/L.

In an embodiment, the color-changing layer 21a further comprises a thickening agent, to adjust viscosity of the color-changing layer 21a, and avoid detachment from the first conductive layer 221a or the second conductive layer 222a due to low viscosity of the color-changing layer 21a.

The thickening agent is at least one of polyamide, polyimide, polycarbonate, polymethacrylate, polyacrylate, polysilane, polysiloxane, polyvinyl acetate, polymethacrylonitrile, polyacrylonitrile, polyvinyl phenol, polyvinyl alcohol, and polyvinylidene dihalide. For example, the thickening agent is polyvinylidene difluoride. Content of the thickening agent ranges from 0.05 wt% to 3 wt%. For example, the content of the thickening agent ranges from 0.05 wt% to 1.5 wt%.

In an embodiment, the color-changing layer 21a further comprises an antioxidant, to improve durability of the color-changing layer 21a and prolong the service life. The antioxidant is an organic non-sterically hindered phenol compound. For example, the antioxidant is at least one of 1,3,5-tri-tert-butylphenol, 1,5-tert-butyl-3-methylphenol, 2-(2'-hydroxy-5'-methylphenyl)benzotriazole, 2-(2'-hydroxy-3'-tert-butyl-5'-methylphenyl) 5-chlorobenzotriazole, 2-(2'-hydroxy-3',5'-di-tert-butylphenyl)-5-chlorobenzotriazole, 2-(2'-hydroxy-3',5'-dipentylphenyl)benzotriazole, 2-(2'-hydroxy5'-tert-octylphenyl)benzotriazole, and 2-(2'-hydroxy-3',5'-di-tert-butylphenyl)benzotriazole.

In some other embodiments, the antioxidant may alternatively be an organic alkenyl ester compound. For example, the antioxidant is at least one of methyl methacrylate, ethyl methacrylate, and the like, for example, at least one of 2-(2'-hydroxy-5'-methylphenyl)benzotriazole, 1,5-tert-butyl-3-methylphenol, and methyl methacrylate.

In an embodiment, concentration of the antioxidant ranges from 20 mmol/L to 500 mmol/L. For example, the concentration of the antioxidant ranges from 50 mmol/L to 100 mmol/L.

In an embodiment, the color-changing layer 21a further comprises an anti-ultraviolet agent, to improve light stability of the color-changing layer 21a and prolong the service life of the color-changing layer 21a. The anti-ultraviolet agent is at least one of 2-ethyl-2-cyano-3,3-diphenyl acrylate, acrylic acid (2-ethylhexyl)-2-cyano-3,3-diphenyl ester, 2-(2'-hydroxy-4'-methylphenyl)benzotriazole, 3-[3-(2H-benzotriazol-2-yl)-5-(1, 1-dimethylethyl)-4-hydroxyphenyl]propionate amyl ester, 2,4-dihydroxybenzophenone, 2-hydroxy-4-methoxybenzophenone, and 2-ethyl-2'-ethoxypropionanilide. For example, the anti-ultraviolet agent is 2-hydroxy-4-methoxybenzophenone.

Content of the anti-ultraviolet agent ranges from 1 wt% to 4 wt%. For example, the content of the anti-ultraviolet agent ranges from 3 wt% to 4 wt%.

In an embodiment, as shown in FIG. 11 and FIG. 12, in the first direction 001, an L*a*b* value is measured for an entire structure formed through cooperation between the first glass substrate board 11a, the first substrate layer 31, the first conductive layer 221a, and the first protective layer 241a. L*>80, -3<a*<3, and -10<b*<-1. For example, L*>85, -1.5<a*<0, and - 8<b*<-4.

The L*a*b* value can reflect lightness, a red-green degree, and a yellow-blue degree of the structure to light. That is, a larger range of the L*a*b* value of the structure correspondingly indicates a smaller amount of light absorbed by the structure when the light passes through the structure, and smaller absorptivity of the structure for the light. It will be understood that the range of the L*a*b* value of the structure formed through cooperation between the first glass substrate board 11a, the first substrate layer 31, the first conductive layer 221a, and the first protective layer 241a is set to L*>80, -3<a*<3, and -10<b*<-1, so that effect of the first glass substrate board 11a, the first substrate layer 31, the first conductive layer 221a, and the first protective layer 241a can be ensured, and impact of the first glass substrate board 11a, the first substrate layer 31, the first conductive layer 221a, and the first protective layer 241a on light can be further reduced, to ensure color-changing effect of the color-changing glass 100a in this application.

Beneficial effects that may be achieved by the color-changing glass 100a in this application is described through comparison with reference to three possible embodiments (Example 3, Example 4, and Example 5) of the color-changing glass 100a in this application and a typical embodiment (Comparative Example 2) in the conventional technology.

### Example 3

A color-changing glass 100a is provided. The color-changing glass 100a comprises the first glass substrate board 11a, the second glass substrate board 12a, and the color-changing assembly 20a, and the color-changing assembly 20a is sandwiched between the first glass substrate board 11a and the second glass substrate board 12a.

The color-changing assembly 20a comprises the color-changing layer 21a, the first conductive layer 221a, the second conductive layer 222a, and the diffusion ring 231a. In the first direction 001, the first conductive layer 221a is located between the color-changing layer 21a and the first glass substrate board 11a, the second conductive layer 222a is located between the color-changing layer 21a and the second glass substrate board 12a, and the diffusion ring 231a is disposed on the first conductive layer 221a around the periphery of the color-changing layer 21a, and is insulated from the second conductive layer 222a and the color-changing layer 21a. The diffusion ring 231a is electrically connected to the positive electrode of the external circuit, and the second conductive layer 222a is electrically connected to the negative electrode of the external circuit. In addition, a length and a width of the color-changing glass 100a are both 40 mm, and coloring response time and fading response time of the color-changing glass 100a are tested at a test voltage of 1.3 V.

### Example 4

A color-changing glass 100a is provided. The color-changing glass 100a comprises the first glass substrate board 11a, the second glass substrate board 12a, and the color-changing assembly 20a, and the color-changing assembly 20a is sandwiched between the first glass substrate board 11a and the second glass substrate board 12a.

The color-changing assembly 20a comprises the color-changing layer 21a, the first conductive layer 221a, the second conductive layer 222a, and the diffusion ring 231a. In the first direction 001, the first conductive layer 221a is located between the color-changing layer 21a and the first glass substrate board 11a, the second conductive layer 222a is located between the color-changing layer 21a and the second glass substrate board 12a, and the diffusion ring 231a is disposed on the first conductive layer 221a around the periphery of the color-changing layer 21a, and is insulated from the second conductive layer 222a and the color-changing layer 21a. The diffusion ring 231a is electrically connected to the negative electrode of the external circuit, and the second conductive layer 222a is electrically connected to the positive electrode of the external circuit. In addition, a length and a width of the color-changing glass 100a are both 40 mm, and coloring response time and fading response time of the color-changing glass 100a are tested at a test voltage of 1.3 V.

### Example 5

A color-changing glass 100a is provided. The color-changing glass 100a comprises the first glass substrate board 11a, the second glass substrate board 12a, and the color-changing assembly 20a, and the color-changing assembly 20a is sandwiched between the first glass substrate board 11a and the second glass substrate board 12a.

The color-changing assembly 20a comprises the color-changing layer 21a, the first conductive layer 221a, the second conductive layer 222a, the diffusion ring 231a, and the second diffusion ring 232a. In the first direction 001, the first conductive layer 221a is located between the color-changing layer 21a and the first glass substrate board 11a, and the second conductive layer 222a is located between the color-changing layer 21a and the second glass substrate board 12a.

The diffusion ring 231a is disposed on the first conductive layer 221a around the periphery of the color-changing layer 21a, and the second diffusion ring 232a is disposed on the second conductive layer 222a around the periphery of the color-changing layer 21a. The diffusion ring 231a and the second diffusion ring 232a are insulated from each other, and are both insulated from the color-changing layer 21a. The diffusion ring 231a is electrically connected to the positive electrode of the external circuit, and the second diffusion ring 231a is electrically connected to the negative electrode of the external circuit. In addition, a length and a width of the color-changing glass 100a are both 40 mm, and coloring response time and fading response time of the color-changing glass 100a are tested at a test voltage of 1.3 V.

### Comparative Example 2

A color-changing glass 100a' is provided. The color-changing glass 100a' comprises a first glass substrate board 11a', a second glass substrate board 12a', and a color-changing assembly 20a', and the color-changing assembly 20a' is sandwiched between the first glass substrate board 11a' and the second glass substrate board 12a'.

The color-changing assembly 20a' comprises a color-changing layer 21a', a first conductive layer 22a', and a second conductive layer 23a'. The first conductive layer 22a' and the second conductive layer 23a' are disposed on two opposite sides of the color-changing layer 21a'. The first conductive layer 22a' is electrically connected to the positive electrode of the external circuit, and the second conductive layer 23a' is electrically connected to the negative electrode of the external circuit. In addition, a length and a width of the color-changing glass 100a' are both 40 mm, and coloring response time and fading response time of the color-changing glass 100a' are tested at a test voltage of 1.3 V.

Test statistics on response speeds of the color-changing glass in Example 3, Example 4, Example 5, and Comparative Example 2 are collected, and results are shown in Table 1.

**Table 1:**

| Experiment | Positive electrode | Negative electrode | Response time/s | Fading time/s |
|---|---|---|---|---|
| Example 3 | Diffusion ring | Second conductive layer | 2.0 | 13.1 |
| Example 4 | Second conductive layer | Diffusion ring | 3.9 | 18.4 |
| Example 5 | Diffusion ring | Second diffusion ring | 1.7 | 11a.2 |
| Comparative Example 2 | First conductive layer | Second conductive layer | 5.1 | 25.1 |

It can be concluded from the obtained test data that the coloring response times of the color-changing glass 100a in Example 3, Example 4, and Example 5 are all less than the coloring response time of the color-changing glass 100a' in Comparative Example 1. This is because Example 3, Example 4, and Example 5 all use the annular diffusion ring 231a provided in this application. In this way, it is ensured that the external current can be conducted to the corresponding first conductive layer 221a or the corresponding second conductive layer 222a, and the diffusion time of the current in the corresponding first conductive layer 221a or the second conductive layer 222a can be further reduced, to reduce the time required for conducting the external current from the two opposite sides of the color-changing layer 21a. Therefore, the coloring response times of the color-changing glass 100a in Example 3, Example 4, and Example 5 are all less than the coloring response time in Comparative Example 2.

In addition, it can be further concluded from the obtained test data that the fading response times of the color-changing glass 100a in Example 3, Example 4, and Example 5 are all less than the fading response time of the color-changing glass 100a' in Comparative Example 2. This is because Example 3, Example 4, and Example 5 all use the annular diffusion ring 231a provided in this application. In this way, it is ensured that the external current can be conducted to the corresponding first conductive layer 221a or the corresponding second conductive layer 222a, and the diffusion time of the current in the corresponding first conductive layer 221a or the second conductive layer 222a can be further reduced, to reduce the time required for cutting off the external current from the two opposite sides of the color-changing layer 21a. Therefore, the fading response times of the color-changing glass 100a in Example 3, Example 4, and Example 5 are all less than the fading response time in Comparative Example 2.

In conclusion, this application is different from the conventional technology in that the annular diffusion ring 231a is disposed in the color-changing glass 100a, and the diffusion ring 231a is disposed around the periphery of the color-changing layer 21a, so that the external current can be diffused by the diffusion ring 231a first and then transmitted to the corresponding first conductive layer 221a or the corresponding second conductive layer 222a. In this way, the external current can be diffused from the edge region of the corresponding first conductive layer 221a or the corresponding second conductive layer 222a to the center region, to reduce the diffusion time of the current in the first conductive layer 221a or the second conductive layer 222a, reduct coloring response time and fading response time required for the current to act on the color-changing layer 21a, and improve the response speed of the color-changing glass 100a in this application.

In some embodiments, this application further provides an anode electrochromic material, an electrochromic composition, and an electrochromic device.

An anode electrochromic material is provided, and a molecular structure of the anode electrochromic material is represented by Formula (I):

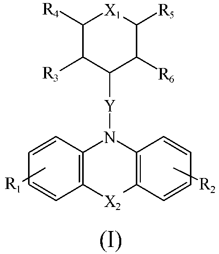

In Formula (I), R₁ to R₆ each are independently any one of H, OH, F, Cl, Br, I, CN, NO₂, a substituted or unsubstituted alkyl group, a substituted or unsubstituted alkoxy group, a substituted or unsubstituted aryl group, a substituted or unsubstituted amino group, and a substituted or unsubstituted heterocyclic group.

Y is a single bond or an alkylene group having 1 to 4 carbon atoms.

X₁ is N, N-R₂₁, or S, and X₂ is N, N-R₂₂, O, or S. R₂₁ and R₂₂ each are independently any one of hydrogen, a substituted or unsubstituted alkyl group, a substituted or unsubstituted alkoxy group, a substituted or unsubstituted aryl group, a substituted or unsubstituted amino group, and a substituted or unsubstituted heterocyclic group.

In some embodiments, the substituted or unsubstituted alkyl group has 1 to 18 carbon atoms, the substituted or unsubstituted alkoxy group has 1 to 18 carbon atoms, the substituted or unsubstituted aryl group has 6 to 18 carbon atoms, and the substituted or unsubstituted heterocyclic group has 2 to 18 carbon atoms.

In some embodiments, a substituent group in the substituted alkyl group, the substituted alkoxy group, the substituted aryl group, the substituted amino group, and the substituted heterocyclic group is at least one of a halogen atom, a substituted or unsubstituted alkyl group, a substituted or unsubstituted alkoxy group, and a substituted or unsubstituted aryl group.

In some embodiments, the substituted or unsubstituted heterocyclic group comprises any one of a substituted or unsubstituted pyridyl group, a substituted or unsubstituted pyrrolyl group, a substituted or unsubstituted furyl group, a substituted or unsubstituted pyranyl group, a substituted or unsubstituted thienyl group, a substituted or an unsubstituted thiothioanyl group, a substituted or unsubstituted quinolinyl group, and a substituted or unsubstituted indoleyl group.

In some embodiments, R₁ and R₂ each are independently any one of a substituted or unsubstituted alkyl group, a substituted or unsubstituted alkoxy group, and a substituted or unsubstituted aryl group, and R₃, R₄, R₅, and R₆ are H.

In some embodiments, coloring response time of the anode electrochromic material ranges from 0s to 3s, and fading response time of the anode electrochromic material ranges from 0s to 15s.

In some embodiments, a difference between faded state transmittance and colored state transmittance of the anode electrochromic material in a visible light range ranges from 55% to 80%.

In some embodiments, a preparation method for the anode electrochromic material comprises the following step:
adding a raw material 1 and a raw material 2 into an organic solvent; after uniform mixing, adding a catalytic agent to obtain a mixed solution; and allowing the mixed solution to react at 60°C to 90°C for 12 h to 96 h to obtain the anode electrochromic material.

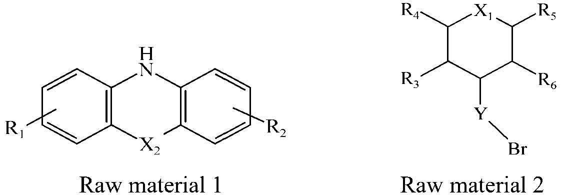

The catalytic agent comprises a strong base or a combination of a weak base and cuprous iodide, where the strong base is at least one of sodium hydroxide, potassium hydroxide, sodium cyanide, sodium hydride, and butyllithium, and the weak base is at least one of sodium carbonate and potassium carbonate.

In some embodiments, an electrochromic composition is provided, comprising a cathode electrochromic material, a solvent, and the foregoing anode electrochromic material.

In some embodiments, in the electrochromic composition, concentration of the anode electrochromic material ranges from 10 mmol/L to 150 mmol/L.

In some embodiments, the cathode electrochromic material comprises a viologen compound, where the viologen compound comprises a compound whose molecular structure is represented by Formula (II):

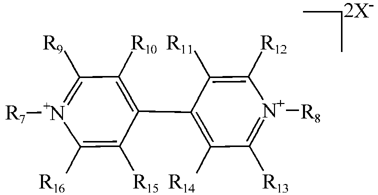

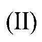

In Formula (II), R₇ and R₈ each are independently any one of an alkyl group, an alkenyl group, an alkynyl group, an aralkyl group, an alkenylalkyl group, an alkynylalkyl group, a monohydroxyalkyl or polyhydroxyalkyl group, a monoaminealkyl or polyaminealkyl group, a monosubstituted haloalkyl or polysubstituted haloalkyl group, a monoalkoxy or polyalkoxy group, a phosphoniumalkyl group, a siloxyalkyl group, alkylcarboxylate, alkylphosphonate, alkylisocyanate, carboxylate, phosphonate group, isocyanate, a pyridyl group, a pyrrolyl group, a furyl group, a pyranyl group, a thienyl group, a quinolinyl group, and an indoleyl group that each have 1 to 18 carbon atoms.

R₉ to R₁₆ each are independently any one of H, OH, F, Cl, Br, I, CN, NO₂, a substituted or unsubstituted alkyl group, a substituted or unsubstituted alkoxy group, a substituted or unsubstituted aryl group, a substituted or unsubstituted amino group, and a substituted or unsubstituted heterocyclic group.

X is an anion, where the anion comprises any one of halide, borate, fluoroborate, tetraarylborate, metal hexafluoride or metalloid hexafluoride, sulfate, sulfonate, sulfonamide, carboxylate, perchlorate, and tetrachloroferrate.

In some embodiments, in the electrochromic composition, concentration of the cathode electrochromic material ranges from 30 mmol/L to 120 mmol/L.

In some embodiments, the solvent comprises at least one of 3-methylsulfolane, dimethylsulfoxide, dimethylformamide, tetraethylene glycol dimethyl ether, polyethylene glycol, ethoxyethanol, acetonitrile, glutaronitrile, 2-acetylbutyrolactone, cyclopentanone, β-propiolactone, y-butyrolactone, γ-valrolactone, polypropylene carbonate, ethylene carbonate and propylene carbonate.

In some embodiments, the electrochromic composition further comprises at least one of an anti-delamination agent, an antioxidant, a UV stabilizing agent, a thickening agent, and an ionic conductivity enhancing agent.

The anti-delamination agent comprises any one of polyacrylate, polymethacrylate, and polyaromatic ester.

The antioxidant comprises at least one of 1,3,5-tri-tert-butylphenol, 1,5-tert-butyl-3-methylphenol, 2-(2'-hydroxy-5'-methylphenyl)benzotriazole, 2-(2'-hydroxy-3'-tert-butyl-5'-methylphenyl) 5-chlorobenzotriazole, 2-(2'-hydroxy-3',5'-di-tert-butylphenyl), 5-chlorobenzotriazole, 2-(2'-hydroxy-3',5'-dipentylphenyl)benzotriazole, 2-(2'-hydroxy5'-tert-octylphenyl)benzotriazole, 2-(2'-hydroxy-3',5'-di-tert-butylphenyl)benzotriazole, bis(2,2,6,6-tetramethyl-4-piperidinyl) sebacate, 2,2,6,6-tetramethylpiperidine, di-tert-butylamine, methyl methacrylate, and ethyl methacrylate.

The UV stabilizing agent comprises at least one of 2-ethyl-2-cyano-3,3-diphenyl acrylate, acrylic acid (2-ethylhexyl)-2-cyano-3,3-diphenyl ester, 2-(2'-hydroxy-4'-methylphenyl)benzotriazole, 3-[3-(2H-benzotriazol-2-yl)-5-(1, 1-dimethylethyl)-4-hydroxyphenyl]propionate amyl ester, 2,4-dihydroxybenzophenone, 2-hydroxy-4-methoxybenzophenone, and 2-ethyl-2'-ethoxypropionanilide.

The thickening agent comprises any one of polyamide, polyimide, polycarbonate, polyester, polyether, polymethacrylate, polyacrylate, polysilane, polysiloxane, polyvinyl acetate, polymethacrylonitrile, polyacrylonitrile, polyvinyl phenol, polyvinyl alcohol, polyvinylidene dihalide, and a copolymer thereof.

The ionic conductivity enhancing agent comprises any one of lithium trifluoromethanesulfonate, lithium perchlorate, lithium tetrafluoroborate, and lithium hexafluorophosphate.

In some embodiments, in the electrochromic composition, a mass percentage of the anti-delamination agent ranges from 1% to 6%, molar concentration of the antioxidant ranges from 0.02 mol/L to 0.5 mol/L, a mass percentage of the UV stabilizing agent ranges from 1% to 4%, a mass percentage of the thickening agent ranges from 0.05% to 3%, and concentration of the ionic conductivity enhancing agent ranges from 0.05 mol/L to 0.5 mol/L.

In some embodiments, an electrochromic device is further provided, comprising a first electrode, a second electrode, and an electrochromic layer disposed between the first electrode and the second electrode. The electrochromic layer comprises the anode electrochromic material according to any one of the foregoing embodiments or the electrochromic composition according to any one of the foregoing embodiments.

In some embodiments, an electronic device is further provided, comprising the foregoing electrochromic device.

Embodiments of this application are implemented, so that electrochemical performance of the electrochromic device is greatly improved, and problems such as slow coloring and fading response speeds, nonuniform color-changing, poor cycle stability, and a short service life of the electrochromic device in the conventional technology are resolved.

Specific implementations of the anode electrochromic material, the electrochromic composition, and the electrochromic device are as follows.

In recent years, due to excellent performance and characteristics of energy saving and environmental protection of electrochromic materials, the electrochromic materials conform to a development trend of future intelligent materials, and have an excessively broad application prospect in large screen information display, "smart windows", anti-dazzle rearview mirrors, electrochromic displays, electronic ink, and the like. Electrochromism is a phenomenon that when an electric field is applied to or a current is conducted to a color-changing material, optical performance (transmittance, reflectivity, or absorptivity of light) of the material has a stable and reversible change in a wavelength range comprising a wavelength of visible light. In terms of appearance effect, electrochromism is represented as a reversible change in a color and transparency. When a voltage is applied to the electrochromic material, visible light transmittance of the material decreases and the material appears as a darker color. This phenomenon is referred to as "coloring". When application of the voltage is stopped, the visible light transmittance of the material increases. This phenomenon is referred to as "fading". Among numerous electrochromic materials, organic electrochromic materials have been studied in depth because the organic electrochromic materials have excellent optical performance and are likely to optimize performance through molecular design. Among the organic electrochromic materials, viologen and derivatives of the viologen are widely studied. The viologen and derivatives of the viologen have good cyclic reversibility and a stable redox state, and are most widely used color-changing materials in electrochromic devices. Because a viologen compound is a cathode color-changing material, people usually choose another anode material to form complementary color-changing materials with the viologen compound, to produce an electrochromic device with better performance than that merely uses the viologen compound. However, currently, most anode electrochromic material have problems such as a slow response speed, nonuniform color-changing, and a short cycle life. Therefore, it is necessary to develop an anode electrochromic material to form complementary electrochromic materials with a viologen cathode electrochromic material, and use the anode electrochromic material in the electrochromic device, so that a color-changing response speed can be improved, coloring and fading display effect can be improved, and the service life of the electrochromic device can be prolonged.

In view of this, an embodiment of this application provides an anode electrochromic material, where a molecular structure of the anode electrochromic material is represented by Formula (I):

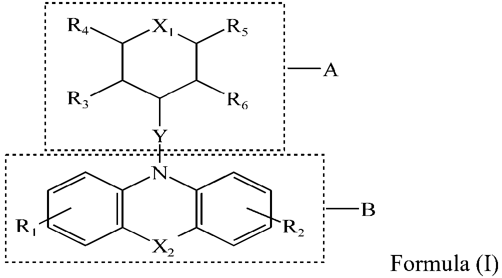

In Formula (I), R₁ to R₆ each are independently any one of H, OH, F, Cl, Br, I, CN, NO₂, a substituted or unsubstituted alkyl group, a substituted or unsubstituted alkoxy group, a substituted or unsubstituted aryl group, a substituted or unsubstituted amino group, and a substituted or unsubstituted heterocyclic group.

Y is a single bond or an alkylene group having 1 to 4 carbon atoms.

X₁ is N, N-R₂₁, or S, and X₂ is N, N-R₂₂, O, or S. R₂₁ and R₂₂ each are independently any one of hydrogen, a substituted or unsubstituted alkyl group, a substituted or unsubstituted alkoxy group, a substituted or unsubstituted aryl group, a substituted or unsubstituted amino group, and a substituted or unsubstituted heterocyclic group.

In some implementations, the substituted or unsubstituted alkyl group has 1 to 18 carbon atoms. In some implementations, the substituted or unsubstituted alkyl group may have 1, 2, 3, 4, 5, 6, 7, 8, 10, 13, 15, or 18 carbon atoms. In some embodiments, the substituted or unsubstituted alkyl group may be, for example, a substituted or unsubstituted methyl group, an ethyl group, an n-propyl group, an isopropyl group, an n-butyl group, an isobutyl group, a sec-butyl group, a tert-butyl group, an n-pentyl group, a 2-methylbutyl group, a 3-methylbutyl group, a 4-methylbutyl group, a 2,2-dimethylpropyl group, an n-hexyl group, a heptyl group, a 2-methylhexyl group, a 3-methylhexyl group, a 4-methylpentyl group, a 5-methylpentyl group, a 2-ethylbutyl group, a 3-ethylbutyl group, a heptyl group, an octyl group, a nonyl group, or a decyl group.

In some implementations, the substituted or unsubstituted alkoxy group has 1 to 18 carbon atoms. In some implementations, the substituted or unsubstituted alkoxy group may have 1, 2, 3, 4, 5, 9, 10, 13, 15, 16, or 18 carbon atoms. In some embodiments, the substituted or unsubstituted alkoxy group may be, for example, a substituted or unsubstituted methoxy group, an ethoxy group, a propoxy group, a butoxy group, an isobutoxy group, or a tert-butoxy group.

In some implementations, the substituted or unsubstituted aryl group has 6 to 18 carbon atoms. In some implementations, the substituted or unsubstituted aryl group may have 6, 7, 9, 10, 12, 13, 15, or 18 carbon atoms. In some embodiments, the substituted or unsubstituted aryl group may be, for example, a substituted or unsubstituted phenyl group, a naphthyl group, an anthryl group, a tetraphenyl group, or a tetrahydronaphthyl group.

In some implementations, the substituted or unsubstituted heterocyclic group has 2 to 18 carbon atoms. In some implementations, the substituted or unsubstituted heterocyclic group may have 2, 3, 4, 5, 6, 7, 8, 9, 10, 12, 13, 15, 16, or 18 carbon atoms. The substituted or unsubstituted heterocyclic group may be a monocyclic heterocyclic group or a polycyclic heterocyclic group. A heteroatom in the heterocyclic group may include at least one of O, N, or S.

In an implementation of this application, the substituted or unsubstituted heterocyclic group may be a five-membered heterocyclic group or a six-membered heterocyclic group, and may include a substituted or unsubstituted pyridyl group, a substituted or unsubstituted pyrrolyl group, a substituted or unsubstituted furyl group, a substituted or unsubstituted pyranyl group, a substituted or unsubstituted thienyl group, a substituted or an unsubstituted thiothioanyl group, a substituted or unsubstituted quinolinyl group, and a substituted or unsubstituted indoleyl group. In some specific embodiments, the heterocyclic group may be, for example, a tetrahydrofuran ring, a tetrahydrothiophene ring, a hexahydropyrrole ring, a tetrahydropyran ring, a tetrahydropyridine ring, or a tetrahydrothiothioan ring.

In some implementations, a substituent group in the substituted alkyl group, the substituted alkoxy group, the substituted aryl group, the substituted amino group, and the substituted heterocyclic group is any one of a halogen atom (F, Cl, Br, or I), a substituted or unsubstituted alkyl group, a substituted or unsubstituted alkoxy group, and a substituted or unsubstituted aryl group. In some embodiments of this application, the substituted alkyl group may be, for example, a haloalkyl group or an arylalkyl group. The haloalkyl may be, for example, a trifluoromethyl group, a trifluoroethyl group, a dichloroethyl group, or the like. The arylalkyl group may be, for example, a phenylalkyl group (a benzyl group, a phenylethyl group, or a phenylpropyl group), a naphthylmethyl group, a naphthylbenzyl group, or the like.

In some implementations, R₁ and R₂ each are independently any one of a substituted or unsubstituted alkyl group, a substituted or unsubstituted alkoxy group, and a substituted or unsubstituted aryl group, and R₃, R₄, R₅, and R₆ are H. When R₁ and R₂ of this application each are an electron-donating group such as a substituted or unsubstituted alkyl group, a substituted or unsubstituted alkoxy group, or a substituted or unsubstituted aryl group, more electrons may be provided to a structure of the anode electrochromic material provided in this application uniformly and symmetrically from two sides of the 5,10-dihydrophenazine or the analog thereof represented by the structure B in Formula (I), so that electron cloud density of the anode electrochromic material can be increased, to improve a color-changing response speed of the anode electrochromic material. In some implementations of this application, the anode electrochromic material may be compounds represented by Formula (III) to Formula (VI):

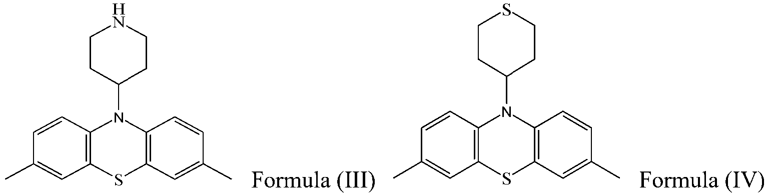

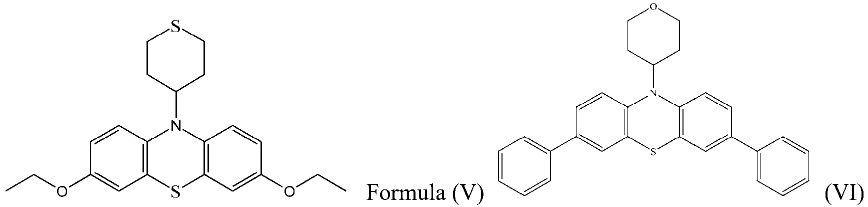

In the anode electrochromic material provided in this embodiment of this application, a six-membered heterocyclic structure (A) in Formula (I) is grafted onto an N atom in the 5,10-dihydrophenazine or the analog (B) thereof, to form the anode electrochromic material of the structure represented by Formula (I). The anode electrochromic material has a good color-changing response speed, uniform color-changing effect, and low production costs, and using the anode electrochromic material in an electrochromic device can effectively improve color-changing performance of the electrochromic device. This is because there is strong intermolecular interaction between the six-membered heterocyclic structure in a compound represented by Formula (I) and the N atom in the 5,10-dihydrophenazine or the analog thereof, and the compound as a whole has large steric hindrance. A structure of the compound is more unstable than that of a linear chain or an N-terminal substituted compound modified by a linear chain. A more unstable structure of the compound forming the anode electrochromic material indicates that it is easier for electrons to be extracted from and injected into the material. Therefore, the electrochromic device prepared by using the compound has a higher color-changing response speed. In addition, when the N atom is located at a para position of a heteroatom in the six-membered heterocyclic structure, relative to another position (such as an ortho position or a meta position), a raw material is more easily obtained at low costs and synthesis difficulty is low, which is conducive to reducing production costs. Therefore, the anode electrochromic material provided in this embodiment of this application has low production costs, a high color-changing response speed, and good color-changing effect.

In an implementation of this application, coloring response time of the anode electrochromic material ranges from 0s to 3s, and fading response time of the anode electrochromic material ranges from 0s to 15s. In some implementations of this application, the coloring response time of the anode electrochromic material may be 0.5s, 1.0s, 1.1s, 1.2s, 1.3s, 1.4s, 1.5s, 1.6s, 1.7s, 1.8s, 1.9s, 2.0s, 2.2s, 2.5s, 2.8s, or 3s. In some embodiments of this application, the fading response time of the anode electrochromic material may be divided into fading response time during power-off and fading response time during a short circuit. In this application, the fading response time of the anode color-changing material during a short circuit may be 1.0s, 2.0s, 3.0s, 4.0s, 4.5s, 4.8s, 5.1s, 5.3s, 5.4s, 5.6s, 5.7s, 6.0s, 6.5s, 7.0s, 7.2s, 7.5s, 7.8s, 8.0s, 8.3s, 8.6s, 8.9s, or 9.0 s, and the fading response time during power-off may be 9.5s, 10.0s, 10.2s, 10.8s, 11.1s, 11.6s, 11.4s, 12.3s, 13.0s, 14.0s, or 15.0s. A structure of the anode electrochromic material provided in this application has large steric hindrance and high electron density, so that the coloring response time and the fading response time can be controlled within a fast range.

In an implementation of this application, a difference between faded state transmittance and colored state transmittance of the anode electrochromic material in a visible light range ranges from 55% to 80%. In some implementations of this application, differences between the faded state transmittance and the colored state transmittance of the anode electrochromic material in the visible light range before and after each cycle are both within a range of 55% to 80%. The difference between the faded state transmittance and the colored state transmittance in the visible light range may be 55%, 55.6%, 57%, 58%, 60%, 63.9%, 64.3%, 64.5%, 65.1%, 65.3%, 66.0%, 66.1%, 68.4%, 68.9%, 69.1%, 70.2%, 70.5%, 71.3%, 71.7%, 72.4%, 72.5%, 72.7%, 73.2%, 74%, 75%, 76%, 78%, or 80%. The anode electrochromic material of this application can achieve good electrochromic effect when the difference between the faded state transmittance and the colored state transmittance ranges from 55% to 80%. In some embodiments of this application, after 50,000 power-on cycles, the difference between the faded state transmittance and the colored state transmittance of the anode electrochromic material in the visible light range may be 55.6%, 63.9%, 64.5%, 65.1%, 65.3%, 66%, or 66.1%. Cycle performance of the anode electrochromic material provided in this application is stable, and a cycle life of the prepared electrochromic device is longer.

Correspondingly, an embodiment of this application further provides a preparation method for an anode electrochromic material, comprising the following step:
adding a raw material 1 and a raw material 2 into an organic solvent; after uniform mixing, adding a catalytic agent to obtain a mixed solution; and allowing the mixed solution to react at 60°C to 90°C for 12 h to 96 h to obtain the foregoing anode electrochromic material in embodiments of this application:

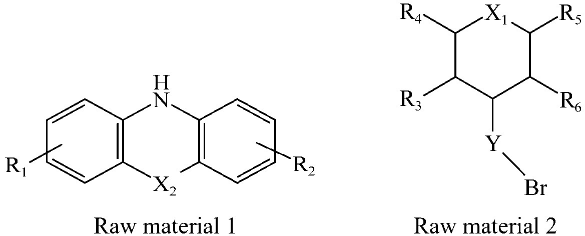

The catalytic agent comprises a strong base or a combination of a weak base and cuprous iodide, wherein the strong base is at least one of sodium hydroxide, potassium hydroxide, sodium cyanide, sodium hydride, and butyllithium (such as tetraisobutyllithium), and the weak base is at least one of sodium carbonate and potassium carbonate. Under the base, dihydrophenazine or an analog thereof dehydrogenates a nitrogen atom and makes the nitrogen atom carry a negative charge.

In some implementations of this application, the catalytic agent may be a combination of a weak base and cuprous iodide, and a specific reaction synthesis route is shown in Formula (a):

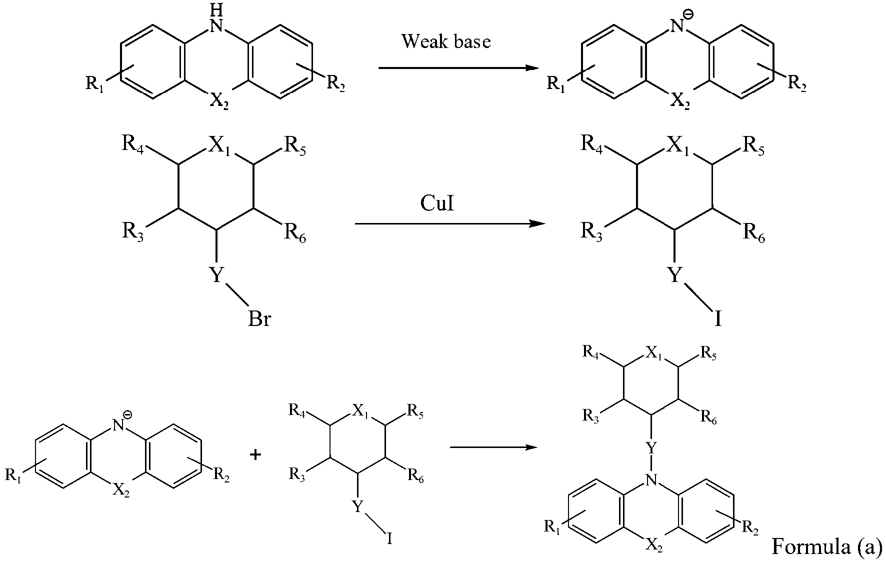

In an implementation of this application, each reactant for preparing the anode electrochromic material may be fed according to a molar ratio of raw material 1:raw material 2:catalytic agent=1:(1 to 2):(1 to 3). The organic solvent may be toluene, N,N-dimethylformamide, DMSO, or chloroform. For example, the organic solvent is toluene. A product synthesized according to Formula (a) may be separated and purified through silica gel column chromatography, to obtain a crude anode electrochromic material. The crude anode electrochromic material is redissolved in a commonly used organic solvent for recrystallization, to obtain a refined anode electrochromic material. The commonly used organic solvent may be, for example, acetonitrile, ethanol, methanol, dichloromethane, chloroform, or ethyl acetate.

In the preparation method for an anode electrochromic material provided in this embodiment of this application, the raw materials six-membered heterocyclic compound and 5,10-dihydrophenazine or an analog thereof are easily obtained at low costs. In addition, an N atom of the 5,10-dihydrophenazine or the analog thereof is located at a para position of a heteroatom of the six-membered heterocyclic structure, which contributes to low synthesis difficulty relative to another position (such as an ortho position or a meta position), a mild reaction condition, a simple preparation process, and easy operation.

An embodiment of this application further provides an electrochromic composition, comprising a cathode electrochromic material, a solvent, and the foregoing anode electrochromic material in embodiments of this application. The electrochromic composition provided in embodiments of this application comprises both the foregoing anode electrochromic material in this application and the cathode electrochromic material, and is a combination of complementary electrochromic materials. An electrochromic device made of the complementary color-changing materials has advantages of a high response speed, a long working life, electric energy saving, rich coloring, and adjustment of light transmittance to a greatest extent, and is highly valuable for promotion and application.

In an implementation of this application, in the electrochromic composition, concentration of the anode electrochromic material ranges from 10 mmol/L to 150 mmol/L. In some implementations of this application, the concentration of the anode electrochromic material may be 10 mmol/L, 20 mmol/L, 30 mmol/L, 40 mmol/L, 50 mmol/L, 60 mmol/L, 65 mmol/L, 70 mmol/L, 75 mmol/L, 80 mmol/L, 85 mmol/L, 90 mmol/L, 100 mmol/L, 110 mmol/L, 120 mmol/L, 140 mmol/L, or 150 mmol/L.

In an implementation of this application, the cathode electrochromic material comprises a viologen compound. As described above, the viologen compound comprises a compound whose molecular structure is represented by Formula (II):

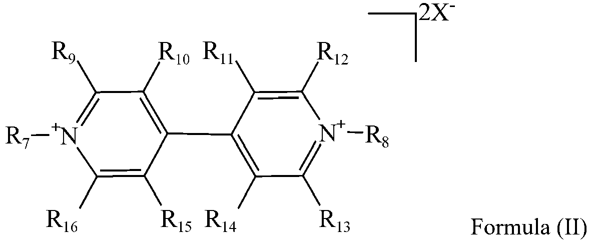

In Formula (II), R₇ and R₈ each are independently any one of an alkyl group, an alkenyl group, an alkynyl group, an aralkyl group, an alkenylalkyl group, an alkynylalkyl group, a monohydroxyalkyl or polyhydroxyalkyl group, a monoaminealkyl or polyaminealkyl group, a monosubstituted haloalkyl or polysubstituted haloalkyl group, a monoalkoxy or polyalkoxy group, a phosphoniumalkyl group, a siloxyalkyl group, alkylcarboxylate, alkylphosphonate, alkylisocyanate, carboxylate, phosphonate group, isocyanate, a pyridyl group, a pyrrolyl group, a furyl group, a pyranyl group, a thienyl group, a quinolinyl group, and an indoleyl group that each have 1 to 18 carbon atoms.

R₉ to R₁₆ each are independently any one of H, OH, F, Cl, Br, I, CN, NO₂, a substituted or unsubstituted alkyl group, a substituted or unsubstituted alkoxy group, a substituted or unsubstituted aryl group, a substituted or unsubstituted amino group, and a substituted or unsubstituted heterocyclic group.

X is an anion, where the anion comprises any one of halide, borate, fluoroborate, tetraarylborate, metal hexafluoride or metalloid hexafluoride, sulfate, sulfonate, sulfonamide, carboxylate, perchlorate, and tetrachloroferrate. In some implementations of this application, X may be F⁻, Cl , Br , I⁻, BF₄⁻, PF₆⁻, SbF₆⁻, AsF₆⁻, ClO₄⁻, SO₃CF₃⁻, N(CN)₂⁻, N(CF₃SO₂)₂⁻, C(CF₃SO₂)₃⁻, N(SO₂C₂F₅)₂⁻, -Al(OC(CF₃)₃)₄, a bis(trifluoromethylsulfonyl)imide anion, or - BAr₄, where Ar is an aryl group or a fluorinated aryl group. In an implementation of this application, X is -BAr₄, and Ar is a pentafluorophenyl group.

Specifically, in an implementation of this application, the cathode electrochromic material is ethyl viologen ditetrafluoroborate, and a molecular structure of the cathode electrochromic material is represented by Formula (VII):

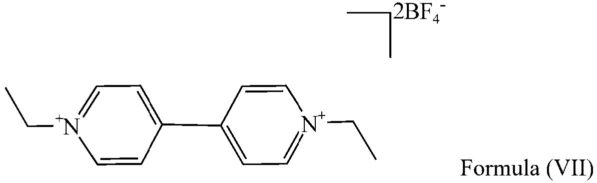

The cathode electrochromic material in this embodiment of this application is a viologen compound, has good cyclic reversibility and a stable redox state, and is combined with the anode electrochromic material in this embodiment to form complementary color-changing materials, so that overall cyclic reversibility and stability of the material can be improved.

In an implementation of this application, in the electrochromic composition, concentration of the cathode electrochromic material ranges from 30 mmol/L to 120 mmol/L. In some implementations of this application, the concentration of the cathode electrochromic material may be 30 mmol/L, 40 mmol/L, 50 mmol/L, 60 mmol/L, 70 mmol/L, 80 mmol/L, 85 mmol/L, 90 mmol/L, 95 mmol/L, 100 mmol/L, 110 mmol/L, or 120 mmol/L.

In an implementation of this application, the solvent comprises at least one of 3-methylsulfolane, dimethylsulfoxide, dimethylformamide, tetraethylene glycol dimethyl ether, polyethylene glycol, ethoxyethanol, acetonitrile, glutaronitrile, 2-acetylbutyrolactone, cyclopentanone, β-propiolactone, γ-butyrolactone, γ-valrolactone, polypropylene carbonate, ethylene carbonate and propylene carbonate. The electrochromic composition provided in this application uses the foregoing solvent, so that the anode electrochromic material and the cathode electrochromic material are uniformly dispersed in the composition, and color-changing effect of the obtained electrochromic composition is more uniform.

In an implementation of this application, the electrochromic composition further comprises at least one of an anti-delamination agent, an antioxidant, a UV stabilizing agent, a thickening agent, and an ionic conductivity enhancing agent. Adding the anti-delamination agent and the UV stabilizing agent to the electrochromic composition can prolong the service life of the material. Adding the ionic conductivity enhancing agent can accelerate color-changing response speed of the material. Adding the antioxidant can prevent deactivation of the material due to oxidation, improve durability of the electrochromic composition, and prolong the service life. Adding the thickening agent can increase structural stability of the material.

In an implementation of this application, the anti-delamination agent comprises any one of polyacrylate, polymethacrylate, and polyaromatic ester. In the electrochromic composition, a mass percentage of the anti-delamination agent ranges from 1% to 6%. In some implementations of this application, the mass percentage of the anti-delamination agent may be 1%, 2%, 3%, 4%, 4.5%, 5%, 5.5%, or 6%. The anti-delamination agent in the electrochromic composition can slow down material delamination deterioration and prolong a cycle service life of the electrochromic composition.

In an implementation of this application, the antioxidant include at least one of 1,3,5-tri-tert-butylphenol, 1,5-tert-butyl-3-methylphenol, 2-(2'-hydroxy-5'-methylphenyl)benzotriazole, 2-(2'-hydroxy-3'-tert-butyl-5'-methylphenyl) 5-chlorobenzotriazole, 2-(2'-hydroxy-3',5'-di-tert-butylphenyl), 5-chlorobenzotriazole, 2-(2'-hydroxy-3',5'-dipentylphenyl)benzotriazole, 2-(2'-hydroxy5'-tert-octylphenyl)benzotriazole, 2-(2'-hydroxy-3',5'-di-tert-butylphenyl)benzotriazole, bis(2,2,6,6-tetramethyl-4-piperidinyl) sebacate, 2,2,6,6-tetramethylpiperidine, di-tert-butylamine, methyl methacrylate, and ethyl methacrylate. In some embodiments, the antioxidant may be at least one of 2-(2'-hydroxy-5'-methylphenyl)benzotriazole, 1,5-tert-butyl-3-methylphenol, and methyl methacrylate. In the electrochromic composition, molar concentration of the antioxidant ranges from 0.02 mol/L to 0.5 mol/L. In some embodiments of this application, the molar concentration of the antioxidant may be 0.02 mol/L, 0.03 mol/L, 0.04 mol/L, 0.05 mol/L, 0.06 mol/L, 0.07 mol/L, 0.08 mol/L, 0.09 mol/L, 0.1 mol /L, 0.15 mol/L, 0.18 mol/L, 0.2 mol/L, 0.25 mol/L, 0.3 mol/L, 0.4 mol/L, or 0.5 mol/L. Adding the antioxidant can prevent the anode electrochromic material from losing a color-changing capability due to oxidative deactivation, and improve color-changing uniformity and the service life of the electrochromic composition.

In an implementation of this application, the UV stabilizing agent comprises at least one of 2-ethyl-2-cyano-3, 3-diphenyl acrylate, acrylic acid (2-ethylhexyl)-2-cyano-3, 3-diphenyl ester, 2-(2'-hydroxy-4'-methylphenyl)benzotriazole, 3-[3-(2H-benzotriazol-2-yl)-5-(1, 1-dimethylethyl)-4-hydroxyphenyl]propionate amyl ester, 2,4-dihydroxybenzophenone, 2-hydroxy-4-methoxybenzophenone, and 2-ethyl-2'-ethoxypropionanilide. In the electrochromic composition, a mass percentage of the UV stabilizing agent ranges from 1% to 4%. In some implementations of this application, the mass percentage of the UV stabilizing agent may be 1%, 1.5%, 2%, 2.5%, 3%, 3.5%, or 4%. Adding the UV stabilizing agent can also improve stability of the electrochromic composition and prolong the cycle service life of the composition.

In an implementation of this application, the thickening agent comprises any one of polyamide, polyimide, polycarbonate, polyester, polyether, polymethacrylate, polyacrylate, polysilane, polysiloxane, polyvinyl acetate, polymethacrylonitrile, polyacrylonitrile, polyvinyl phenol, polyvinyl alcohol, polyvinylidene dihalide, and a copolymer thereof. In the electrochromic composition, a mass percentage of the thickening agent ranges from 0.05% to 3%. In some implementations of this application, the mass percentage of the thickening agent may be 0.05%, 0.1%, 0.3%, 0.5%, 0.8%, 1%, 1.2%, 1.5%, 2%, 2.5%, or 3%. The thickening agent can increase structural stability of the material, so that color changing of the obtained electrochromic device is more uniform and the service life is longer.

In an implementation of this application, the ionic conductivity enhancing agent comprises any one of lithium trifluoromethanesulfonate, lithium perchlorate, lithium tetrafluoroborate, and lithium hexafluorophosphate. In the electrochromic composition, concentration of the ionic conductivity enhancing agent ranges from 0.05 mol/L to 0.5 mol/L. In some implementations of this application, the concentration of the ionic conductivity enhancing agent may be 0.05 mol/L, 0.1 mol/L, 0.2 mol/L, 0.3 mol/L, 0.05 mol/L, 0.1 mol/L, 0.15 mol/L, 0.2 mol/L, 0.3 mol/L, 0.4 mol/L, or 0.5 mol/L. Adding the ionic conductivity enhancing agent to the electrochromic composition can improve ionic conductivity of the material, so that the electrochromic composition obtains a faster electrochromic response speed.

According to the amounts of the additives described above in this application, the anti-delamination agent, the antioxidant, the UV stabilizing agent, the ionic conductivity enhancing agent, and the thickening agent may all be added to the electrochromic composition, to synergistically improve cycle stability, a response speed, and the service life of the composition.

The electrochromic composition provided in this embodiment of this application has an excellent color-changing response speed, uniform color-changing effect, good cycle stability, and low production costs. Using the electrochromic composition in the electrochromic device can increase coloring response time and fading response time of the color-changing device, improve color-changing display effect, and prolong the service life, and can further reduce production costs and effectively improve optical performance and electrochemical performance of the electrochromic device.

An embodiment of this application provides an electrochromic device, comprising a first electrode, a second electrode, and an electrochromic layer disposed between the first electrode and the second electrode. The electrochromic layer comprises the foregoing anode electrochromic material or the foregoing electrochromic composition of this application. In an implementation of this application, as shown in FIG. 13, the electrochromic device 100b comprises a first substrate board 10b, a first electrode 20b, a second substrate board 11b, a second electrode 21b, an electrochromic layer 30b, and a sealing member 40b. The first electrode 20b is disposed on the first substrate board 10b, the second electrode 21a is disposed on the second substrate board 11b, and the electrochromic layer 30b is disposed between the first electrode 20b and the second electrode 21b. The sealing member 40b is disposed between the first electrode 20b and the second electrode 21b, and joins the first electrode 20b and the second electrode 21b together. When the electrochromic device works, a specific voltage is applied between the first electrode and the second electrode, so that a material of the electrochromic layer undergoes an oxidation-reduction reaction under the voltage and changes a color. When the electrochromic layer uses the anode electrochromic material or the electrochromic composition provided in this application, a color-changing response speed of the electrochromic device can be improved, and color-changing display effect and cycle stability of the device can be improved.

An embodiment of this application further provides an electronic device, comprising the foregoing electrochromic device in embodiments of this application. The electronic device comprises an electrochromic vehicle rearview mirror, a vehicle sunroof, VR glasses, an electrochromic window of a building and an airplane, sunglasses and goggles, an electrochromic display, or the like.

The following describes embodiments of this application by using a plurality of embodiments.

### Example 6

### (1) Preparation of an anode electrochromic material (as represented by Formula (III))

22.7 g of 3,7-dimethylphenothiazine and 16.3 g of 4-bromohexahydropyridine are dissolved in 500 g of toluene. After uniform mixing, 13.2 g of potassium carbonate and 2 g of cuprous iodide are added. A temperature is raised to 60°C to 90°C, and a reaction of heating under condensation reflux is performed for 12 h to 96 h, to obtain a reactant comprising the anode electrochromic material. The reactant is separated and purified through silica gel column chromatography, to obtain a crude anode electrochromic material. The crude anode electrochromic material is dissolved in acetonitrile for recrystallization, to obtain a refined anode electrochromic material (III) whose molecular structure is shown as follows:

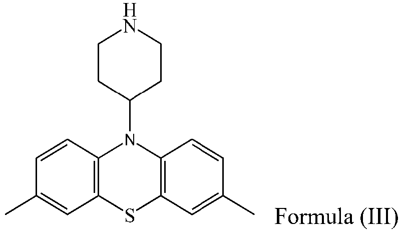

### (2) Preparation of an electrochromic composition

The electrochromic composition is prepared according to the following chemical constitution: 60 mmol/L of the anode electrochromic material (III), 60 mmol/L of ethyl viologen ditetrafluoroborate, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride, and a balance of propylene carbonate.

### (3) Preparation of an electrochromic device

The electrochromic composition provided in step (2) of Example 6 is sandwiched between two glass plates plated with ITO layers, and a frame seal is used for encapsulation, to prepare the electrochromic device of Example 6 of this application whose length and width are both 40 mm, where a thickness of accommodation space is 62 µm, and transmittance of a single ITO glass plate is 92%.

### Example 7

### (1) Preparation of an anode electrochromic material (as represented by Formula (IV))

22.7 g of 3,7-dimethylphenothiazine and 18.0 g of 4-bromotetrahydrothione are dissolved in 500 g of toluene. After uniform mixing, 13.2 g of potassium carbonate and 2 g of cuprous iodide are added. A temperature is raised to 60°C to 90°C, and a reaction of heating under condensation reflux is performed for 12 h to 96 h, to obtain a reactant comprising the anode electrochromic material. The reactant is separated and purified through silica gel column chromatography, to obtain a crude anode electrochromic material. The crude anode electrochromic material is dissolved in acetonitrile for recrystallization, to obtain a refined anode electrochromic material (IV) whose molecular structure is shown as follows:

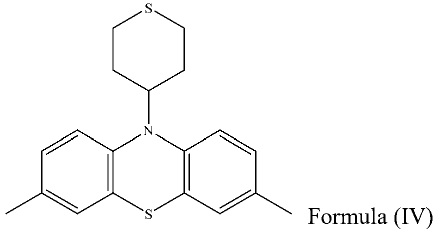

### (2) Preparation of an electrochromic composition

The electrochromic composition is prepared according to the following chemical constitution: 60 mmol/L of the anode electrochromic material (IV), 60 mmol/L of ethyl viologen ditetrafluoroborate, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride, and a balance of propylene carbonate.

### (3) Preparation of an electrochromic device

The electrochromic composition provided in step (2) of Example 7 is sandwiched between two glass plates plated with ITO layers, and a frame seal is used for encapsulation, to prepare the electrochromic device of Example 6 of this application whose length and width are both 40 mm, where a thickness of accommodation space is 62 µm, and transmittance of a single ITO glass plate is 92%.

### Example 8

### (1) Preparation of an anode electrochromic material (as represented by Formula (V))

28.7 g of 3,7-diethoxyphenothiazine and 18.0 g of 4-bromotetrahydrothione are dissolved in 500 g of toluene. After uniform mixing, 13.2 g of potassium carbonate and 2 g of cuprous iodide are added. A temperature is raised to 60°C to 90°C, and a reaction of heating under condensation reflux is performed for 12 h to 96 h, to obtain a reactant comprising the anode electrochromic material. The reactant is separated and purified through silica gel column chromatography, to obtain a crude anode electrochromic material. The crude anode electrochromic material is dissolved in acetonitrile for recrystallization, to obtain a refined anode electrochromic material (V) whose molecular structure is shown as follows:

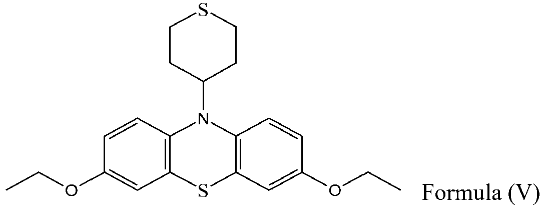

### (2) Preparation of an electrochromic composition

The electrochromic composition is prepared according to the following chemical constitution: 60 mmol/L of the anode electrochromic material (V), 60 mmol/L of ethyl viologen ditetrafluoroborate, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride, and a balance of propylene carbonate.

### (3) Preparation of an electrochromic device

The electrochromic composition provided in step (2) of Example 8 is sandwiched between two glass plates plated with ITO layers, and a frame seal is used for encapsulation, to prepare the electrochromic device of Example 7 of this application whose length and width are both 40 mm, where a thickness of accommodation space is 62 µm, and transmittance of a single ITO glass plate is 92%.

### Example 9

### (1) Preparation of an anode electrochromic material (as represented by Formula (VI))

35.2 g of 3,7-diphenylphenothiazine and 18.0 g of 4-bromotetrahydrothione are dissolved in 500 g of toluene. After uniform mixing, 13.2 g of potassium carbonate and 2 g of cuprous iodide are added. A temperature is raised to 60°C to 90°C, and a reaction of heating under condensation reflux is performed for 12 h to 96 h, to obtain a reactant comprising the anode electrochromic material. The reactant is separated and purified through silica gel column chromatography, to obtain a crude anode electrochromic material. The crude anode electrochromic material is dissolved in acetonitrile for recrystallization, to obtain a refined anode electrochromic material (VI) whose molecular structure is shown as follows:

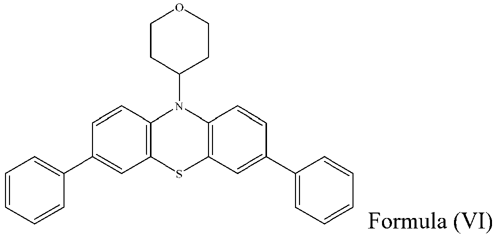

### (2) Preparation of an electrochromic composition

The electrochromic composition is prepared according to the following chemical constitution: 60 mmol/L of the anode electrochromic material (VI), 60 mmol/L of ethyl viologen ditetrafluoroborate, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride, and a balance of propylene carbonate.

### (3) Preparation of an electrochromic device

The electrochromic composition provided in step (2) of Example 9 is sandwiched between two glass plates plated with ITO layers, and a frame seal is used for encapsulation, to prepare the electrochromic device of Example 8 of this application whose length and width are both 40 mm, where a thickness of accommodation space is 62 µm, and transmittance of a single ITO glass plate is 92%.

### Example 10

### (1) Preparation of an electrochromic composition

The electrochromic composition is prepared according to the following chemical constitution: 60 mmol/L of the anode electrochromic material (III), 60 mmol/L of ethyl viologen ditetrafluoroborate, 0.5 mol/L of lithium perchlorate, 4 wt% of ethyl polyacrylate, 3 wt% of 2-(2'-hydroxy-4'-methylphenyl)benzotriazole, 1 wt% of polyvinylidene difluoride, and a balance of propylene carbonate.

### (2) Preparation of an electrochromic device

The electrochromic composition provided in step (2) of Example 10 is sandwiched between two glass plates plated with ITO layers, and a frame seal is used for encapsulation, to prepare the electrochromic device of Example 1 of this application whose length and width are both 40 mm, where a thickness of accommodation space is 62 µm, and transmittance of a single ITO glass plate is 92%.

### Example 11

### (1) Preparation of an electrochromic composition

The electrochromic composition is prepared according to the following chemical constitution: 60 mmol/L of the anode electrochromic material (III), 60 mmol/L of ethyl viologen ditetrafluoroborate, 0.1 mol/L of lithium tetrafluoroborate, 4 wt% of ethyl polyacrylate, 3 wt% of 2-(2'-hydroxy-4'-methylphenyl)benzotriazole, 1 wt% of polyvinylidene difluoride, and a balance of propylene carbonate.

### (2) Preparation of an electrochromic device

The electrochromic composition provided in step (2) of Example 11 is sandwiched between two glass plates plated with ITO layers, and a frame seal is used for encapsulation, to prepare the electrochromic device of Example 6 of this application whose length and width are both 40 mm, where a thickness of accommodation space is 62 µm, and transmittance of a single ITO glass plate is 92%.

### Example 12

### (1) Preparation of an electrochromic composition

The electrochromic composition is prepared according to the following chemical constitution: 60 mmol/L of the anode electrochromic material (III), 60 mmol/L of ethyl viologen ditetrafluoroborate, 0.5 mol/L of lithium tetrafluoroborate, 4 wt% of ethyl polyacrylate, 3 wt% of 2-(2'-hydroxy-4'-methylphenyl)benzotriazole, 1 wt% of polyvinylidene difluoride, and a balance of propylene carbonate.

### (2) Preparation of an electrochromic device

The electrochromic composition provided in step (2) of Example 12 is sandwiched between two glass plates plated with ITO layers, and a frame seal is used for encapsulation, to prepare the electrochromic device of Example 6 of this application whose length and width are both 40 mm, where a thickness of accommodation space is 62 µm, and transmittance of a single ITO glass plate is 92%.

### Comparative Example 3

### (1) Preparation of an electrochromic composition

The electrochromic composition is prepared according to the following chemical constitution: 60 mmol/L of phenothiazine, 60 mmol/L of ethyl viologen ditetrafluoroborate, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride, and a balance of propylene carbonate.

### (2) Preparation of an electrochromic device

The electrochromic composition provided in step (1) of Comparative Example 3 is sandwiched between two glass plates plated with ITO layers, and a frame seal is used for encapsulation, to prepare the electrochromic device of this comparative example of this application whose length and width are both 40 mm, where a thickness of accommodation space is 62 µm, and transmittance of a single ITO glass plate is 92%.

The following tests are performed on the electrochromic devices prepared in Examples 6 to 12 and Comparative Example 3.

### (1) Color-changing performance test

At a test voltage of 1.2 V, coloring response time, fading response time during power-off, and fading response time during a short circuit of each electrochromic device are tested. Test results are shown in Table 2.

**Table 2 Response time of different electrochromic devices**

| Electrochromic device | Coloring response time/s | Fading response time (power-off)/s | Fading response time (short circuit)/s |
|---|---|---|---|
| Example 6 | 2.2 | 12.3 | 6.9 |
| Example 7 | 1.9 | 11.4 | 5.7 |
| Example 8 | 1.8 | 11.6 | 5.6 |
| Example 9 | 1.7 | 11.1 | 5.1 |
| Example 10 | 1.5 | 10.8 | 5.3 |
| Example 11 | 1.7 | 11.1 | 5.4 |
| Example 12 | 1.3 | 10.2 | 4.8 |
| Comparative Example 3 | 3.2 | 15.67 | 7.01 |

It can be understood from the test results in Table 2 that the coloring response time, the fading response time during power-off, and the fading response time during a short circuit of the electrochromic devices in Example 6 to Example 12 are all less than those of Comparative Example 3, which indicates that the anode electrochromic material provided in embodiments of this application can improve a coloring speed and a fading speed of the prepared electrochromic device. Examples 8, 10, 11 and 12 indicate that addition of an ionic conductivity enhancing agent lithium salt can increase a color-changing speed of the device, enhance color-changing performance of the device, and effect of lithium tetrafluoroborate is slightly stronger than that of lithium perchlorate.

### (2) Cycle life test

At a test voltage of 1.2 V, statuses of each electrochromic device after 0 power-on cycles, 20,000 power-on cycles, and 50,000 power-on cycles are observed, and light transmittance (Tᵥ₌₀) during fading and light transmittance (T_{v=1.2}) during coloring are measured. A difference (ΔT=T_{V=0}-T_{V=1.2}) between light transmittance before a color change and light transmittance after the color change is calculated. Applying a voltage of 1.2 V for 5s power on and applying a voltage of 0 V for 10s is a cycle. Cycle life test results are shown in Table 3 and Table 4.

**Table 3 Color-changing performance of different electrochromic devices after 20,000 power-on cycles and 50,000 power-on cycles**

| Electrochromic device | 20,000 power-on cycles | 50,000 power-on cycles |
|---|---|---|
| Example 6 | Color-changing performance does not deteriorate significantly, the solution has no variegated color, and color-changing is uniform. | Color-changing performance slightly deteriorates, and the solution at edges and corners of the device has a variegated color that does not fade away. |
| Example 7 | Color-changing performance does not deteriorate significantly, the solution has no variegated color, and color-changing is uniform. | Color-changing performance does not deteriorate significantly, the solution has no variegated color, and color-changing is uniform. |
| Example 8 | Color-changing performance does not deteriorate significantly, the solution has no variegated color, and color-changing is uniform. | Color-changing performance does not deteriorate significantly, the solution has no variegated color, and color-changing is uniform. |
| Example 9 | Color-changing performance does not deteriorate significantly, the solution has no variegated color, and color-changing is uniform. | Color-changing performance does not deteriorate significantly, the solution has no variegated color, and color-changing is uniform. |
| Example 10 | Color-changing performance does not deteriorate significantly, the solution has no variegated color, and color-changing is uniform. | Color-changing performance does not deteriorate significantly, the solution has no variegated color, and color-changing is uniform. |
| Example 11 | Color-changing performance does not deteriorate significantly, the solution has no variegated color, and color-changing is uniform. | Color-changing performance does not deteriorate significantly, the solution has no variegated color, and color-changing is uniform. |
| Example 12 | Color-changing performance does not deteriorate significantly, the solution has no variegated color, and color-changing is uniform. | Color-changing performance does not deteriorate significantly, the solution has no variegated color, and color-changing is uniform. |
| Comparative Example 3 | Color-changing performance does not deteriorate significantly, and the solution at edges and corners of the device has a green variegated color. | Color-changing performance deteriorates significantly, an overall color of the device becomes darker, and edges and corners have a variegated color that does not fade away. |

**Table 4 Light transmittance of different electrochromic devices after 0 power-on cycles, 20,000 power-on cycles, and 50,000 power-on cycles**

| Electrochromic device | 0 power-on cycles | | | 20,000 power-on cycles | | | 50,000 power-on cycles | | |
|---|---|---|---|---|---|---|---|---|---|
| | T_{v=1.2}/ % | Tᵥ₌₀/ % | ΔT/ % | T_{v=1.2}/ % | Tᵥ₌₀/ % | ΔT/ % | T_{v=1.2}/ % | Tᵥ₌₀/ % | ΔT/ % |
| Example 6 | 7.2 | 80.4 | 73.2 | 7.5 | 71.8 | 64.3 | 10.7 | 66.3 | 55.6 |
| Example 7 | 7.0 | 79.7 | 72.7 | 8.1 | 77.2 | 69.1 | 9.6 | 73.5 | 63.9 |
| Example 8 | 7.1 | 79.6 | 72.5 | 8.4 | 76.8 | 68.4 | 9.7 | 74.2 | 64.5 |
| Example 9 | 7.3 | 79.8 | 72.5 | 8.2 | 77.1 | 68.9 | 9.4 | 74.5 | 65.1 |
| Example 10 | 7.6 | 80.0 | 72.4 | 8.1 | 78.6 | 70.5 | 9.1 | 75.1 | 66 |
| Example 11 | 7.5 | 79.2 | 71.7 | 8.3 | 78.5 | 70.2 | 9.2 | 75.3 | 66.1 |
| Example 12 | 7.6 | 78.9 | 71.3 | 8.4 | 76.8 | 68.4 | 9.1 | 74.4 | 65.3 |
| Comparative Example 3 | 7.7 | 78.7 | 71.0 | 9.6 | 73.3 | 63.7 | 14.2 | 64.4 | 50.2 |

It can be understood from Table 3 and Table 4 that in Example 6 to Example 12, the color-changing performance and color-changing uniformity have no significant change after 50,000 cycles of color changes. In Example 6, the color-changing performance is slightly deteriorated, and the solution at the edges and corners of the device has the variegated color that does not fade away. In Example 6 to Example 12, a difference between light transmittance before the color change and light transmittance after the color change can be kept at more than 55%. However, in Comparative Example 3, the color-changing performance is significantly deteriorated after 50,000 cycles of color changes, the overall color of the device becomes darker, the edges and corners have the variegated color that does not fade away, and a difference between light transmittance before the color change and light transmittance after the color change can be reduced to 50.2%, which indicates that using the anode electrochromic material provided in embodiments of this application can improve a cycle service life of the prepared electrochromic device.

This application further provides another anode electrochromic material, another electrochromic composition, and another electrochromic device.

In some embodiments, the anode electrochromic material comprises a compound whose molecular structure is represented by Formula (a1) and/or a compound whose molecular structure is represented by Formula (a2):

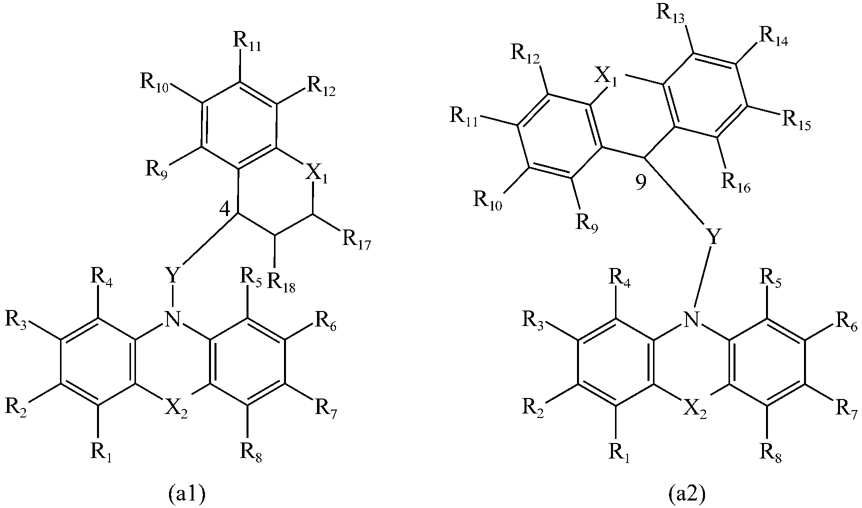

In Formula (a1) and Formula (a2), R₁ to R₁₈ each are independently any one of H, OH, F, Cl, Br, I, CN, NO₂, a substituted or unsubstituted alkyl group, a substituted or unsubstituted alkoxy group, a substituted or unsubstituted aryl group, a substituted or unsubstituted amino group, and a substituted or unsubstituted heterocyclic group.

Y is a single bond or an alkylene group having 1 to 4 carbon atoms.

X₁ is N, N-R₂₁, or S, and X₂ is N, N-R₂₂, O, or S. R₂₁ and R₂₂ each are independently any one of hydrogen, a substituted or unsubstituted alkyl group, a substituted or unsubstituted alkoxy group, a substituted or unsubstituted aryl group, a substituted or unsubstituted amino group, and a substituted or unsubstituted heterocyclic group.

In some embodiments, the substituted or unsubstituted alkyl group has 1 to 18 carbon atoms, the substituted or unsubstituted alkoxy group has 1 to 18 carbon atoms, the substituted or unsubstituted aryl group has 6 to 18 carbon atoms, and the substituted or unsubstituted heterocyclic group has 2 to 18 carbon atoms.

In some embodiments, a substituent group in the substituted alkyl group, the substituted alkoxy group, the substituted aryl group, the substituted amino group, and the substituted heterocyclic group is at least one of a halogen atom, a substituted or unsubstituted alkyl group, a substituted or unsubstituted alkoxy group, a substituted or unsubstituted aryl group, a substituted or unsubstituted amino group, and a substituted or unsubstituted heterocyclic group.

In some embodiments, the substituted or unsubstituted heterocyclic group comprises any one of a substituted or unsubstituted pyridyl group, a substituted or unsubstituted pyrrolyl group, a substituted or unsubstituted furyl group, a substituted or unsubstituted pyranyl group, a substituted or unsubstituted thienyl group, a substituted or an unsubstituted thiothioanyl group, a substituted or unsubstituted quinolinyl group, and a substituted or unsubstituted indoleyl group.

In some embodiments, R₁, R₃, R₄, R₅, R₆, and R₈ to R₁₈ are H. R₂ and R₇ each are independently any one of a substituted or unsubstituted alkyl group, a substituted or unsubstituted alkoxy group, and a substituted or unsubstituted aryl group.

In some embodiments, coloring response time of the anode electrochromic material ranges from 0s to 3s, and fading response time of the anode electrochromic material ranges from 0s to 15s.

In some embodiments, a difference between faded state transmittance and colored state transmittance of the anode electrochromic material in a visible light range ranges from 55% to 80%.

In some embodiments, a preparation method for an anode electrochromic material is further provided, comprising the following step:
adding a raw material 1 or raw material 2 and a raw material 3 into an organic solvent; after uniform mixing, adding a catalytic agent to obtain a mixed solution; and allowing the mixed solution to react at 60°C to 90°C for 12 h to 96 h to obtain the anode electrochromic material:

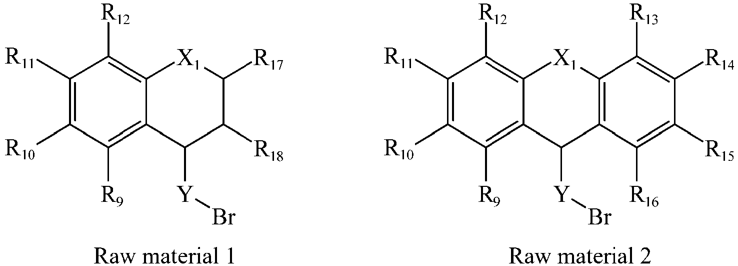

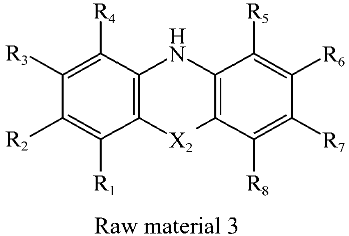

The catalytic agent comprises a strong base or a combination of a weak base and cuprous iodide, wherein the strong base is at least one of sodium hydroxide, potassium hydroxide, sodium cyanide, sodium hydride, and butyllithium, and the weak base is at least one of sodium carbonate and potassium carbonate.

In some embodiments, an electrochromic composition is further provided, comprising a cathode electrochromic material, a solvent, and the anode electrochromic material according to any one of claims 1 to 7.

In some embodiments, in the electrochromic composition, concentration of the anode electrochromic material ranges from 10 mmol/L to 150 mmol/L.

In some embodiments, the cathode electrochromic material comprises a viologen compound, where the viologen compound comprises a compound whose molecular structure is represented by Formula (a3):

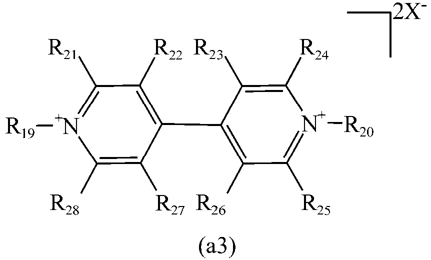

In Formula (a3), R₃₀ and R₃₁ each are independently any one of an alkyl group, an alkenyl group, an alkynyl group, an aralkyl group, an alkenylalkyl group, an alkynylalkyl group, a monohydroxyalkyl or polyhydroxyalkyl group, a monoaminealkyl or polyaminealkyl group, a monosubstituted haloalkyl or polysubstituted haloalkyl group, a monoalkoxy or polyalkoxy group, a phosphoniumalkyl group, a siloxyalkyl group, alkylcarboxylate, alkylphosphonate, alkylisocyanate, carboxylate, phosphonate group, isocyanate, a pyridyl group, a pyrrolyl group, a furyl group, a pyranyl group, a thienyl group, a quinolinyl group, and an indoleyl group that each have 1 to 18 carbon atoms.

R₃₂ to R₃₉ each are independently any one of H, OH, F, Cl, Br, I, CN, NO₂, a substituted or unsubstituted alkyl group, a substituted or unsubstituted alkoxy group, a substituted or unsubstituted aryl group, a substituted or unsubstituted amino group, and a substituted or unsubstituted heterocyclic group.

X is an anion, where the anion comprises any one of halide, borate, fluoroborate, tetraarylborate, metal hexafluoride or metalloid hexafluoride, sulfate, sulfonate, sulfonamide, carboxylate, perchlorate, and tetrachloroferrate.

In some embodiments, in the electrochromic composition, concentration of the cathode electrochromic material ranges from 30 mmol/L to 120 mmol/L.

In some embodiments, the solvent comprises at least one of 3-methylsulfolane, dimethylsulfoxide, dimethylformamide, tetraethylene glycol dimethyl ether, polyethylene glycol, ethoxyethanol, acetonitrile, glutaronitrile, 2-acetylbutyrolactone, cyclopentanone, β-propiolactone, γ-butyrolactone, γ-valrolactone, polypropylene carbonate, ethylene carbonate and propylene carbonate.

In some embodiments, the electrochromic composition further comprises at least one of an anti-delamination agent, an antioxidant, a UV stabilizing agent, a thickening agent, and an ionic conductivity enhancing agent.

The anti-delamination agent comprises any one of polyacrylate, polymethacrylate, and polyaromatic ester.

The antioxidant comprises at least one of 1,3,5-tri-tert-butylphenol, 1,5-tert-butyl-3-methylphenol, 2-(2'-hydroxy-5'-methylphenyl)benzotriazole, 2-(2'-hydroxy-3'-tert-butyl-5'-methylphenyl) 5-chlorobenzotriazole, 2-(2'-hydroxy-3',5'-di-tert-butylphenyl), 5-chlorobenzotriazole, 2-(2'-hydroxy-3',5'-dipentylphenyl)benzotriazole, 2-(2'-hydroxy5'-tert-octylphenyl)benzotriazole, 2-(2'-hydroxy-3',5'-di-tert-butylphenyl)benzotriazole, bis(2,2,6,6-tetramethyl-4-piperidinyl) sebacate, 2,2,6,6-tetramethylpiperidine, di-tert-butylamine, methyl methacrylate, and ethyl methacrylate.

The UV stabilizing agent comprises at least one of 2-ethyl-2-cyano-3,3-diphenyl acrylate, acrylic acid (2-ethylhexyl)-2-cyano-3,3-diphenyl ester, 2-(2'-hydroxy-4'-methylphenyl)benzotriazole, 3-[3-(2H-benzotriazol-2-yl)-5-(1, 1-dimethylethyl)-4-hydroxyphenyl]propionate amyl ester, 2,4-dihydroxybenzophenone, 2-hydroxy-4-methoxybenzophenone, and 2-ethyl-2'-ethoxypropionanilide.

The thickening agent comprises any one of polyamide, polyimide, polycarbonate, polyester, polyether, polymethacrylate, polyacrylate, polysilane, polysiloxane, polyvinyl acetate, polymethacrylonitrile, polyacrylonitrile, polyvinyl phenol, polyvinyl alcohol, polyvinylidene dihalide, and a copolymer thereof.

The ionic conductivity enhancing agent comprises any one of lithium trifluoromethanesulfonate, lithium perchlorate, lithium tetrafluoroborate, and lithium hexafluorophosphate.

In some embodiments, in the electrochromic composition, a mass percentage of the anti-delamination agent ranges from 1% to 6%, molar concentration of the antioxidant ranges from 0.02 mol/L to 0.5 mol/L, a mass percentage of the UV stabilizing agent ranges from 1% to 4%, a mass percentage of the thickening agent ranges from 0.05% to 3%, and molar concentration of the ionic conductivity enhancing agent ranges from 0.05 mol/L to 0.5 mol/L.

In some embodiments, an electrochromic device is further provided, comprising a first electrode, a second electrode, and an electrochromic layer disposed between the first electrode and the second electrode. The electrochromic layer comprises the foregoing anode electrochromic material or the foregoing electrochromic composition.

In some embodiments, an electronic device is further provided, comprising the foregoing electrochromic device.

Embodiments of this application are implemented, so that electrochemical performance of the electrochromic device is greatly improved, and problems such as slow coloring and fading response speeds, nonuniform color-changing, poor cycle stability, and a short service life of the electrochromic device in conventional technologies are resolved.

Specific implementations of another anode electrochromic material, another electrochromic composition, and another electrochromic device are as follows.

The following describes embodiments of this application with reference to accompanying drawings in embodiments of this application.

In recent years, due to excellent performance and characteristics of energy saving and environmental protection of electrochromic materials, the electrochromic materials conform to a development trend of future intelligent materials, and have an excessively broad application prospect in large screen information display, "smart windows", anti-dazzle rearview mirrors, electrochromic displays, electronic ink, and the like. Electrochromism is a phenomenon that when an electric field is applied to or a current is conducted to a color-changing material, optical performance (transmittance, reflectivity, or absorptivity of light) of the material has a stable and reversible change in a wavelength range comprising a wavelength of visible light. In terms of appearance effect, electrochromism is represented as a reversible change in a color and transparency. When a voltage is applied to the electrochromic material, visible light transmittance of the material decreases and the material appears as a darker color. This phenomenon is referred to as "coloring". When application of the voltage is stopped, the visible light transmittance of the material increases. This phenomenon is referred to as "fading". Among numerous electrochromic materials, organic electrochromic materials have been studied in depth because the organic electrochromic materials have excellent optical performance and are likely to optimize performance through molecular design. Among the organic electrochromic materials, viologen and derivatives of the viologen are widely studied. The viologen and derivatives of the viologen have good cyclic reversibility and a stable redox state, and are most widely used color-changing materials in electrochromic devices. Because a viologen compound is a cathode color-changing material, people usually choose another anode material to form complementary color-changing materials with the viologen compound, to produce an electrochromic device with better performance than that merely uses the viologen compound. However, currently, most anode electrochromic material have problems such as a slow response speed, nonuniform color-changing, and a short cycle life. Therefore, it is necessary to develop an anode electrochromic material to form complementary electrochromic materials with a viologen cathode electrochromic material, and use the anode electrochromic material in the electrochromic device, so that a color-changing response speed can be improved, coloring and fading display effect can be improved, and the service life of the electrochromic device can be prolonged.

In view of this, an embodiment of this application provides an anode electrochromic material, where the anode electrochromic material comprises a compound whose molecular structure is represented by Formula (a1) and/or a compound whose molecular structure is represented by Formula (a2):

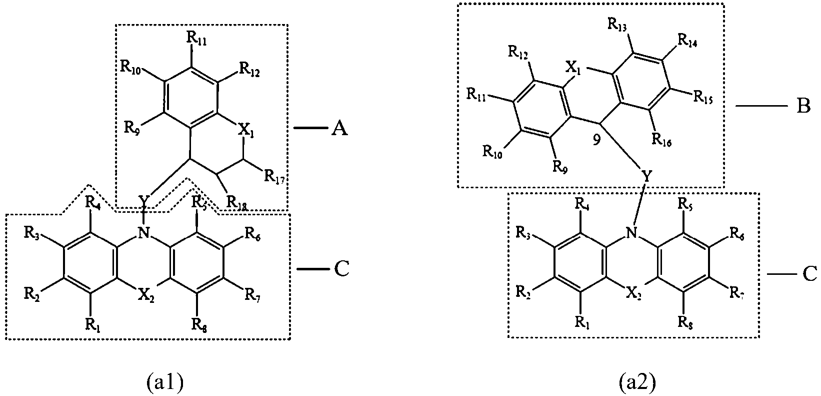

In Formula (a1) and Formula (a2), R₁ to R₁₈ each are independently any one of H, OH, F, Cl, Br, I, CN, NO₂, a substituted or unsubstituted alkyl group, a substituted or unsubstituted alkoxy group, a substituted or unsubstituted aryl group, a substituted or unsubstituted amino group, and a substituted or unsubstituted heterocyclic group.

Y is a single bond or an alkylene group having 1 to 4 carbon atoms.

X₁ is N, N-R₂₁, or S, and X₂ is N, N-R₂₂, O, or S. R₂₁ and R₂₂ each are independently any one of hydrogen, a substituted or unsubstituted alkyl group, a substituted or unsubstituted alkoxy group, a substituted or unsubstituted aryl group, a substituted or unsubstituted amino group, and a substituted or unsubstituted heterocyclic group.

In an implementation of this application, the substituted or unsubstituted alkyl group has 1 to 18 carbon atoms. In some implementations, the substituted or unsubstituted alkyl group may have 1, 2, 3, 4, 5, 6, 7, 8, 10, 13, 15, or 18 carbon atoms. In some embodiments, the substituted or unsubstituted alkyl group may be, for example, a substituted or unsubstituted methyl group, an ethyl group, an n-propyl group, an isopropyl group, an n-butyl group, an isobutyl group, a sec-butyl group, a tert-butyl group, an n-pentyl group, a 2-methylbutyl group, a 3-methylbutyl group, a 4-methylbutyl group, a 2,2-dimethylpropyl group, an n-hexyl group, a heptyl group, a 2-methylhexyl group, a 3-methylhexyl group, a 4-methylpentyl group, a 5-methylpentyl group, a 2-ethylbutyl group, a 3-ethylbutyl group, a heptyl group, an octyl group, a nonyl group, or a decyl group.

In an implementation of this application, the substituted or unsubstituted alkoxy group has 1 to 18 carbon atoms. In some implementations, the substituted or unsubstituted alkoxy group may have 1, 2, 3, 4, 5, 9, 10, 13, 15, 16, or 18 carbon atoms. In some embodiments, the substituted or unsubstituted alkoxy group may be, for example, a substituted or unsubstituted methoxy group, an ethoxy group, a propoxy group, a butoxy group, an isobutoxy group, or a tert-butoxy group.

In an implementation of this application, the substituted or unsubstituted aryl group has 6 to 18 carbon atoms. In some implementations, the substituted or unsubstituted aryl group may have 6, 7, 9, 10, 12, 13, 15, or 18 carbon atoms. In some embodiments, the substituted or unsubstituted aryl group may be, for example, a substituted or unsubstituted phenyl group, a naphthyl group, an anthryl group, a tetraphenyl group, or a tetrahydronaphthyl group.

In an implementation of this application, the substituted or unsubstituted heterocyclic group has 2 to 18 carbon atoms. In some implementations, the substituted or unsubstituted heterocyclic group may have 2, 3, 4, 5, 6, 7, 8, 9, 10, 12, 13, 15, 16, or 18 carbon atoms. The substituted or unsubstituted heterocyclic group may be a monocyclic heterocyclic group or a polycyclic heterocyclic group. A heteroatom in the heterocyclic group may include at least one of O, N, or S.

In an implementation of this application, the substituted or unsubstituted heterocyclic group may be a five-membered heterocyclic group or a six-membered heterocyclic group, and may include any one of a substituted or unsubstituted pyridyl group, a substituted or unsubstituted pyrrolyl group, a substituted or unsubstituted furyl group, a substituted or unsubstituted pyranyl group, a substituted or unsubstituted thienyl group, a substituted or an unsubstituted thiothioanyl group, a substituted or unsubstituted quinolinyl group, and a substituted or unsubstituted indoleyl group. In some specific embodiments, the heterocyclic group may be, for example, a tetrahydrofuran ring, a tetrahydrothiophene ring, a hexahydropyrrole ring, a tetrahydropyran ring, a tetrahydropyridine ring, or a tetrahydrothiothioan ring.

In an implementation of this application, a substituent group in the substituted alkyl group, the substituted alkoxy group, the substituted aryl group, the substituted amino group, and the substituted heterocyclic group is at least one of a halogen atom (F, Cl, Br, or I), a substituted or unsubstituted alkyl group, a substituted or unsubstituted alkoxy group, a substituted or unsubstituted aryl group, a substituted or unsubstituted amino group, and a substituted or unsubstituted heterocyclic group. In some embodiments of this application, the substituted alkyl group may be, for example, a haloalkyl group or an arylalkyl group. The haloalkyl may be, for example, a trifluoromethyl group, a trifluoroethyl group, a dichloroethyl group, or the like. The arylalkyl group may be, for example, a phenylalkyl group (a benzyl group, a phenylethyl group, or a phenylpropyl group), a naphthylmethyl group, a naphthylbenzyl group, or the like.

In an implementation of this application, R₁, R₃, R₄, R₅, R₆, and R₈ to R₁₈ are H. R₂ and R₇ each are independently any one of a substituted or unsubstituted alkyl group, a substituted or unsubstituted alkoxy group, and a substituted or unsubstituted aryl group. When R₂ and R₇ of this application each are an electron-donating group such as a substituted or unsubstituted alkyl group, a substituted or unsubstituted alkoxy group, or a substituted or unsubstituted aryl group, more electrons may be provided to a structure of the anode electrochromic material provided in this application uniformly and symmetrically from two sides of the 5,10-dihydrophenazine or the analog thereof represented by the structure C in Formula (a1) and Formula (a2), so that electron cloud density of the anode electrochromic material can be increased, to improve a color-changing response speed of the anode electrochromic material. In some embodiments of this application, the anode electrochromic material may be compounds represented by Formula (a4) to Formula (a11):

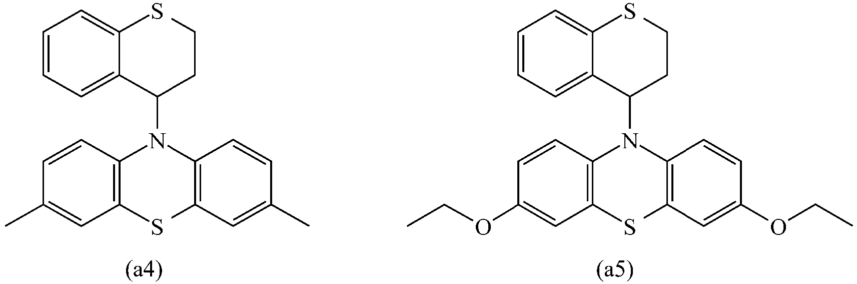

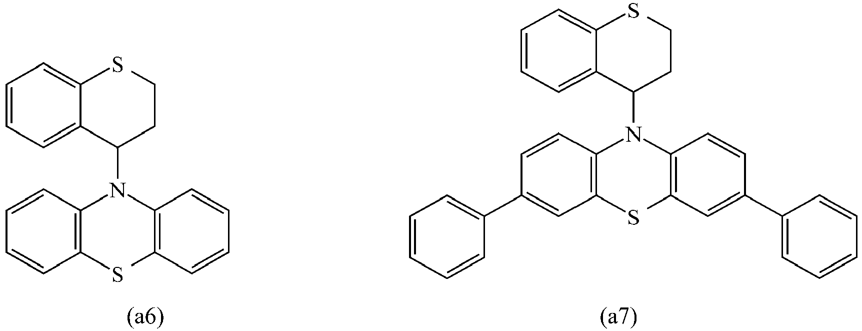

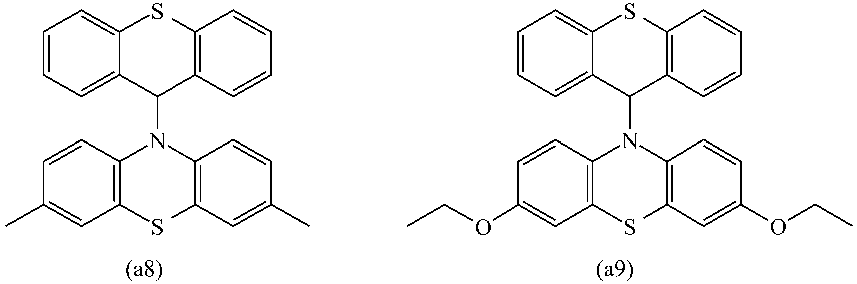

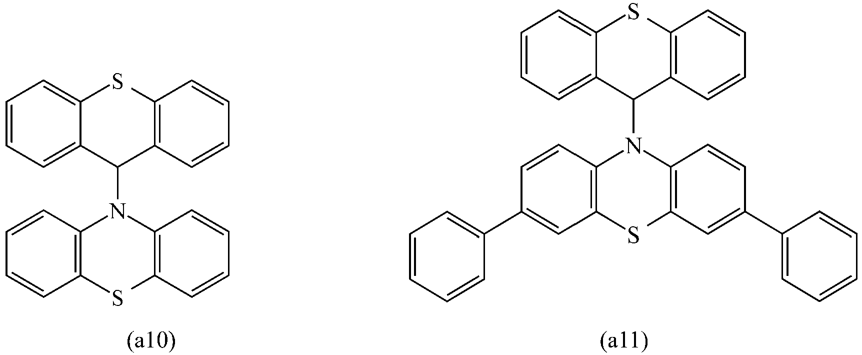

In the anode electrochromic material provided in this embodiment of this application, a benzo-six-membered heterocyclic structure represented by the structure A in Formula (a1) or a tricyclic dibenzo-six-membered heterocyclic structure represented by the structure B in Formula (a2) is grafted onto an N atom in 5,10-dihydrophenazine or an analog thereof represented by the structure C in Formula (a1) and Formula (a2), to form the anode electrochromic material of the structure represented by Formula (a1) or Formula (a2). The anode electrochromic material has a good color-changing response speed, uniform color-changing effect, and low production costs, and using the anode electrochromic material in an electrochromic device can effectively improve color-changing performance of the electrochromic device. When the anode electrochromic material loses electrons and forms a positively charged structure, more electrons carried by a group connected to the positively charged structure indicate a more stable anode electrochromic material and a faster rate of formation of the anode electrochromic material in an electrocatalytic state. The benzo-six-membered heterocyclic structure in the compound represented by Formula (a1) and the tricyclic dibenzo-six-membered heterocyclic structure in the compound represented by Formula (a2) can both provide more electrons for the anode electrochromic material than a monosix-membered heterocyclic structure. In addition, there is strong intermolecular interaction between the benzo-six-membered heterocyclic structure in the compound represented by Formula (a1) and the tricyclic dibenzo-six-membered heterocyclic structure in the compound represented by Formula (a2) and the N atom in 5,10-dihydrophenazine or the analog thereof. The compound as a whole has large steric hindrance, which is an unstable factor for an overall structure of the compound compared with that of a linear chain or an N-terminal substituted compound modified by the linear chain. When the electrocatalytic state disappears, the structure with large steric hindrance can be changed back to an original structure faster. Therefore, the electrochromic device prepared by using the compound has a higher color-changing response speed. In addition, when the N atom is located at a 4-position of the benzo-six-membered heterocyclic structure or a 9-position of the dibenzo-six-membered heterocyclic structure, that is, located at a benzyl position of a benzene ring, relative to another position (such as an ortho position or a meta position), a raw material is more easily obtained at low costs and synthesis difficulty is low, which is conducive to reducing production costs. Therefore, the anode electrochromic material provided in this embodiment of this application has low production costs, a high color-changing response speed, and good color-changing effect.

In an implementation of this application, coloring response time of the anode electrochromic material ranges from 0s to 3s, and fading response time of the anode electrochromic material ranges from 0s to 15s. In some embodiments of this application, the coloring response time of the anode electrochromic material may be 1.57s, 1.64s, 1.69s, 1.72s, 1.75s, 1.82s, 1.88s, or 1.91s. In some implementations of this application, the fading response time of the anode electrochromic material may be divided into fading response time during power-off and fading response time during a short circuit. In some embodiments of this application, the fading response time during power-off may be 11.22s, 12.01s, 12.57s, 12.77s, 12.88s, 12.89s, 13.14s, or 13.55s; and the fading response time during a short circuit may be 4.42s, 4.99s, 5.56s, 5.66s, 5.90s, 6.21s, 6.44s, or 6.81s. A structure of the anode electrochromic material provided in this application has large steric hindrance and high electron density, so that the coloring response time and the fading response time can be controlled within a fast range.

In an implementation of this application, a difference between faded state transmittance and colored state transmittance of the anode electrochromic material in a visible light range ranges from 55% to 80%. In some implementations of this application, differences between the faded state transmittance and the colored state transmittance of the anode electrochromic material in the visible light range before and after each cycle are both within a range of 55% to 80%. The difference between the faded state transmittance and the colored state transmittance in the visible light range may be 55%, 60%, 65%, 70%, 75%, or 80%. The anode electrochromic material of this application can achieve good electrochromic effect when the difference between the faded state transmittance and the colored state transmittance ranges from 55% to 80%. In some embodiments of this application, after 50,000 cycles, the difference between the faded state transmittance and the colored state transmittance of the anode electrochromic material in the visible light range may be 60.1%, 60.4%, 61.0%, 61.1%, 62.1%, 62.5%, 62.7%, or 60.1%. Cycle performance of the anode electrochromic material provided in this application is stable, and a cycle life of the prepared electrochromic device is longer.

In the anode electrochromic material provided in a first aspect of embodiments of this application, the benzo-six-membered heterocyclic structure represented by the structure A in Formula (a1) or the tricyclic dibenzo-six-membered heterocyclic structure represented by the structure B in Formula (a2) is grafted onto the N atom in 5,10-dihydrophenazine or the analog thereof represented by the structure C in Formula (a1) and Formula (a2), to form the anode electrochromic material of the structure represented by Formula (a1) or Formula (a2). The anode electrochromic material has an excellent color-changing response speed, uniform color-changing effect, and low production costs. Using the anode electrochromic material in the electrochromic device can increase coloring response time and fading response time of the color-changing device, and improve color-changing display effect, and can further reduce production costs and solve problems of a slow response speed, nonuniform color-changing, and high production costs of an existing anode electrochromic material.

Correspondingly, an embodiment of this application further provides a preparation method for an anode electrochromic material, comprising the following step:
adding a raw material 1 or raw material 2 and a raw material 3 into an organic solvent; after uniform mixing, adding a catalytic agent to obtain a mixed solution; and allowing the mixed solution to react at 60°C to 90°C for 12 h to 96 h to obtain the anode electrochromic material according to the first aspect of embodiments of this application:

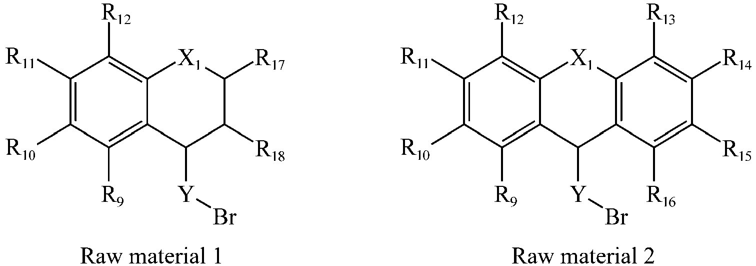

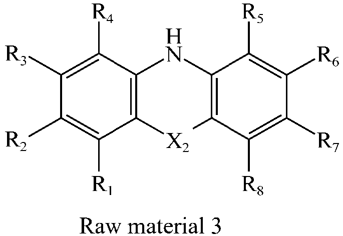

The catalytic agent comprises a strong base or a combination of a weak base and cuprous iodide, wherein the strong base is at least one of sodium hydroxide, potassium hydroxide, sodium cyanide, sodium hydride, and butyllithium (such as tetraisobutyllithium), and the weak base is at least one of sodium carbonate and potassium carbonate. Under the base, dihydrophenazine or an analog thereof dehydrogenates a nitrogen atom and makes the nitrogen atom carry a negative charge.

In some implementations, the catalytic agent may be a weak base and cuprous iodide, and specific reaction synthesis routes are shown in Formula (a) and Formula (b):

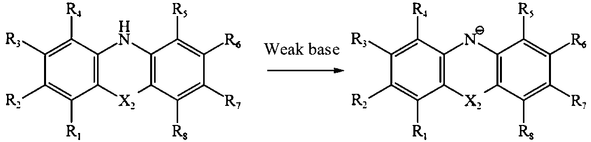

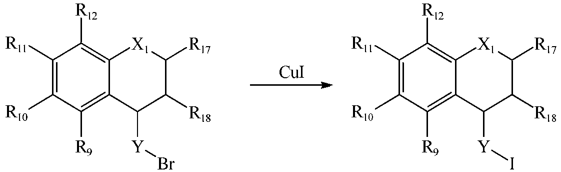

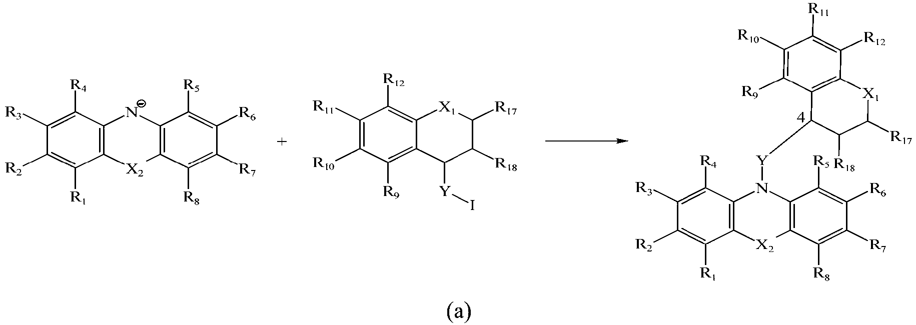

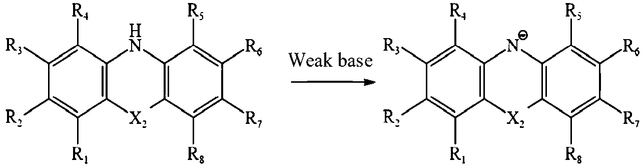

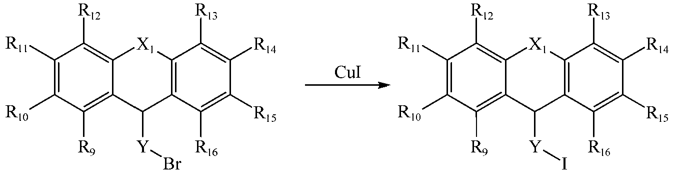

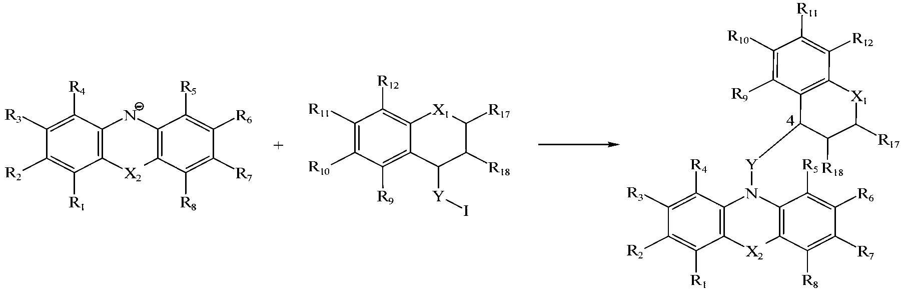

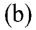

In an implementation of this application, each reactant for preparing the anode electrochromic material may be fed according to a mass ratio of raw material 3:raw material 1:catalytic agent=1:(1 to 2):(1 to 3) or raw material 3:raw material 2:catalytic agent=1:(1 to 2):(1 to 3). The organic solvent may be toluene, N,N-dimethylformamide, dimethylsulfoxide, or chloroform. A product synthesized according to Formula (a) or Formula (b) may be separated and purified through silica gel column chromatography, to obtain a crude anode electrochromic material. The crude anode electrochromic material is redissolved in a commonly used organic solvent for recrystallization, to obtain a refined anode electrochromic material. In some implementations, the commonly used organic solvent may be, for example, acetonitrile, ethanol, methanol, dichloromethane, chloroform, or ethyl acetate.

In the preparation method for an anode electrochromic material provided in this embodiment of this application, the raw materials benzo-six-membered heterocycle, tricyclic dibenzo-six-membered heterocycle, and 5,10-dihydrophenazine or the analog thereof are easily obtained at low costs. In addition, the N atom of 5,10-dihydrophenazine or the analog thereof is located at the 4-position of the benzo-six-membered heterocyclic structure or the 9-position of the dibenzo-six-membered heterocyclic structure, that is, located at the benzyl position of the benzene ring, which contributes to low synthesis difficulty relative to another position (such as an ortho position or a meta position), a mild reaction condition, a simple preparation process, and easy operation.

An embodiment of this application further provides an electrochromic composition, comprising a cathode electrochromic material, a solvent, and the foregoing anode electrochromic material in embodiments of this application. The electrochromic composition provided in embodiments of this application comprises both the foregoing anode electrochromic material in this application and the cathode electrochromic material, and is a combination of complementary electrochromic materials. An electrochromic device made of the complementary color-changing materials has advantages of a high response speed, a long working life, electric energy saving, rich coloring, and adjustment of light transmittance to a greatest extent, and is highly valuable for promotion and application.

In an implementation of this application, concentration of the anode electrochromic material ranges from 10 mmol/L to 150 mmol/L. In some embodiments of this application, the concentration of the anode electrochromic material may be 10 mmol/L, 20 mmol/L, 30 mmol/L, 40 mmol/L, 50 mmol/L, 60 mmol/L, 65 mmol/L, 70 mmol 75 mmol/L, 80 mmol/L, 85 mmol/L, 90 mmol/L, 100 mmol/L, 110 mmol/L, 120 mmol/L, 130 mmol/L, 140 mmol/L, or 150 mmol/L.

In an implementation of this application, the cathode electrochromic material comprises a viologen compound, where the viologen compound comprises a compound whose molecular structure is represented by Formula (a3):

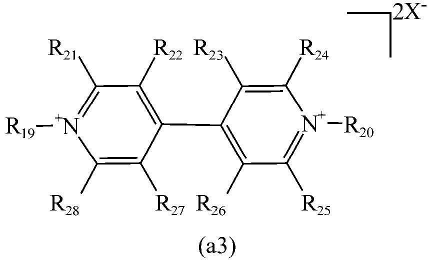

In Formula (a3), R₃₀ and R₃₁ each are independently any one of an alkyl group, an alkenyl group, an alkynyl group, an aralkyl group, an alkenylalkyl group, an alkynylalkyl group, a monohydroxyalkyl or polyhydroxyalkyl group, a monoaminealkyl or polyaminealkyl group, a monosubstituted haloalkyl or polysubstituted haloalkyl group, a monoalkoxy or polyalkoxy group, a phosphoniumalkyl group, a siloxyalkyl group, alkylcarboxylate, alkylphosphonate, alkylisocyanate, carboxylate, phosphonate group, isocyanate, a pyridyl group, a pyrrolyl group, a furyl group, a pyranyl group, a thienyl group, a quinolinyl group, and an indoleyl group that each have 1 to 18 carbon atoms.

R₃₂ to R₃₉ each are independently any one of H, OH, F, Cl, Br, I, CN, NO₂, a substituted or unsubstituted alkyl group, a substituted or unsubstituted alkoxy group, a substituted or unsubstituted aryl group, a substituted or unsubstituted amino group, and a substituted or unsubstituted heterocyclic group.

X is an anion, where the anion comprises any one of halide, borate, fluoroborate, tetraarylborate, metal hexafluoride or metalloid hexafluoride, sulfate, sulfonate, sulfonamide, carboxylate, perchlorate, and tetrachloroferrate.

In some implementations of this application, X may be F , Cl , Br⁻, I⁻, BF₄⁻, PF₆⁻, SbF₆⁻, AsF₆⁻, ClO₄⁻, SO₃CF₃⁻, N(CN)₂⁻, N(CF₃SO₂)₂⁻, C(CF₃SO₂)₃⁻, N(SO₂C₂F₅)₂⁻, Al(OC(CF₃)₃)₄, a bis(trifluoromethylsulfonyl)imide anion, or -BAr₄, where Ar is an aryl group or a fluorinated aryl group. In an embodiment of this application, X is -BAr₄, and Ar is a pentafluorophenyl group.

Specifically, in an embodiment of this application, the cathode electrochromic material is ethyl viologen ditetrafluoroborate whose molecular structure is represented by Formula (a12):

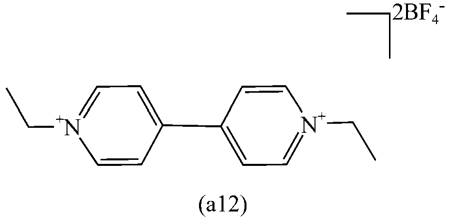

The cathode electrochromic material in this embodiment of this application is a viologen compound, has good cyclic reversibility and a stable redox state, and is combined with the anode electrochromic material in this embodiment to form complementary color-changing materials, so that overall cyclic reversibility and stability of the material can be improved.

In an implementation of this application, concentration of the cathode electrochromic material ranges from 30 mmol/L to 120 mmol/L. In some embodiments of this application, the concentration of the cathode electrochromic material may be 30 mmol/L, 40 mmol/L, 50 mmol/L, 60 mmol/L, 70 mmol/L, 80 mmol/L, 85 mmol/L, 90 mmol/L mol/L, 95 mmol/L, 100 mmol/L, 110 mmol/L, or 120 mmol/L.

In an implementation of this application, the solvent comprises at least one of 3-methylsulfolane, dimethylsulfoxide, dimethylformamide, tetraethylene glycol dimethyl ether, polyethylene glycol, ethoxyethanol, acetonitrile, glutaronitrile, 2-acetylbutyrolactone, cyclopentanone, β-propiolactone, γ-butyrolactone, γ-valrolactone, polypropylene carbonate, ethylene carbonate and propylene carbonate. The electrochromic composition provided in this application uses the foregoing solvent, so that the anode electrochromic material and the cathode electrochromic material are uniformly dispersed in the solvent, and color-changing effect of the obtained electrochromic composition is more uniform.

In an implementation of this application, the electrochromic composition further comprises at least one of an anti-delamination agent, an antioxidant, a UV stabilizing agent, a thickening agent, and an ionic conductivity enhancing agent. Adding the anti-delamination agent and the UV stabilizing agent to the electrochromic composition can prolong the service life of the material. Adding the ionic conductivity enhancing agent can accelerate a color-changing response speed of the material. Adding the antioxidant can prevent deactivation of the material due to oxidation. Adding the thickening agent can increase structural stability of the material.

In an implementation of this application, the anti-delamination agent comprises any one of polyacrylate, polymethacrylate, and polyaromatic ester. In the electrochromic composition, a mass percentage of the anti-delamination agent ranges from 1% to 6%. In some embodiments of this application, the mass percentage of the anti-delamination agent may be 1%, 2%, 3%, 4%, 4.5%, 5%, 5.5%, or 6%. The anti-delamination agent in the electrochromic composition can slow down material delamination deterioration and prolong a cycle service life of the electrochromic composition.

In an implementation of this application, the antioxidant comprises at least one of 1,3,5-tri-tert-butylphenol, 1,5-tert-butyl-3-methylphenol, 2-(2'-hydroxy-5'-methylphenyl)benzotriazole, 2-(2'-hydroxy-3'-tert-butyl-5'-methylphenyl) 5-chlorobenzotriazole, 2-(2'-hydroxy-3',5'-di-tert-butylphenyl), 5-chlorobenzotriazole, 2-(2'-hydroxy-3',5'-dipentylphenyl)benzotriazole, 2-(2'-hydroxy5'-tert-octylphenyl)benzotriazole, 2-(2'-hydroxy-3',5'-di-tert-butylphenyl)benzotriazole, bis(2,2,6,6-tetramethyl-4-piperidinyl) sebacate, 2,2,6,6-tetramethylpiperidine, di-tert-butylamine, methyl methacrylate, and ethyl methacrylate. In the electrochromic composition, molar concentration of the antioxidant ranges from 0.02 mol/L to 0.5 mol/L. In some embodiments of this application, the molar concentration of the antioxidant may be 0.02 mol/L, 0.03 mol/L, 0.05 mol/L, 0.08 mol/L, 0.1 mol/L, 0.2 mol/L, 0.25 mol/L, 0.3 mol/L, 0.4 mol/L, or 0.5 mol/L. Adding the antioxidant can prevent the anode electrochromic material from losing a color-changing capability due to oxidative deactivation, and improve color-changing uniformity and the service life of the electrochromic composition.

In an implementation of this application, the UV stabilizing agent comprises at least one of 2-ethyl-2-cyano-3, 3-diphenyl acrylate, acrylic acid (2-ethylhexyl)-2-cyano-3, 3-diphenyl ester, 2-(2'-hydroxy-4'-methylphenyl)benzotriazole, 3-[3-(2H-benzotriazol-2-yl)-5-(1, 1-dimethylethyl)-4-hydroxyphenyl]propionate amyl ester, 2,4-dihydroxybenzophenone, 2-hydroxy-4-methoxybenzophenone, and 2-ethyl-2'-ethoxypropionanilide. In the electrochromic composition, a mass percentage of the UV stabilizing agent ranges from 1% to 4%. In some embodiments of this application, the mass percentage of the UV stabilizing agent may be 1%, 1.5%, 2%, 2.5%, 3%, 3.5%, or 4%. Adding the UV stabilizing agent can also improve stability of the electrochromic composition and prolong the cycle service life of the composition.

In an implementation of this application, the thickening agent comprises any one of polyamide, polyimide, polycarbonate, polyester, polyether, polymethacrylate, polyacrylate, polysilane, polysiloxane, polyvinyl acetate, polymethacrylonitrile, polyacrylonitrile, polyvinyl phenol, polyvinyl alcohol, polyvinylidene dihalide, and a copolymer thereof. In the electrochromic composition, a mass percentage of the thickening agent ranges from 0.05% to 3%. In some embodiments of this application, the mass percentage of the thickening agent may be 0.05%, 0.1%, 0.3%, 0.5%, 0.8%, 1%, 1.2%, 1.5%, 2%, 2.5%, or 3%. The thickening agent can increase structural stability of the material, so that color changing of the obtained electrochromic device is more uniform and the service life is longer.

In an implementation of this application, the ionic conductivity enhancing agent comprises any one of lithium trifluoromethanesulfonate, lithium perchlorate, lithium tetrafluoroborate, and lithium hexafluorophosphate. In the electrochromic composition, concentration of the ionic conductivity enhancing agent ranges from 0.05 mol/L to 0.5 mol/L. In some embodiments of this application, the concentration of the ionic conductivity enhancing agent may be 0.05 mol/L, 0.1 mol/L, 0.2 mol/L, 0.3 mol/L, 0.05 mol/L, 0.1 mol/L, 0.15 mol/L, 0.2 mol/L, 0.3 mol/L, 0.4 mol/L, or 0.5 mol/L. Adding the ionic conductivity enhancing agent to the electrochromic composition can improve ionic conductivity of the material, so that the electrochromic composition obtains a faster electrochromic response speed.

According to the amounts of the additives described above in this application, the anti-delamination agent, the antioxidant, the UV stabilizing agent, the ionic conductivity enhancing agent, and the thickening agent may all be added to the electrochromic composition, to synergize with each other and improve cycle stability, response speed, and the service life of the composition.

The electrochromic composition provided in this embodiment of this application has excellent color-changing response speed, uniform color-changing effect, good cycle stability, and low production costs. Using the electrochromic composition in the electrochromic device can increase coloring response time and fading response time of the color-changing device, improve color-changing display effect, and prolong the service life, and can further reduce production costs and effectively improve optical performance and electrochemical performance of the electrochromic device.

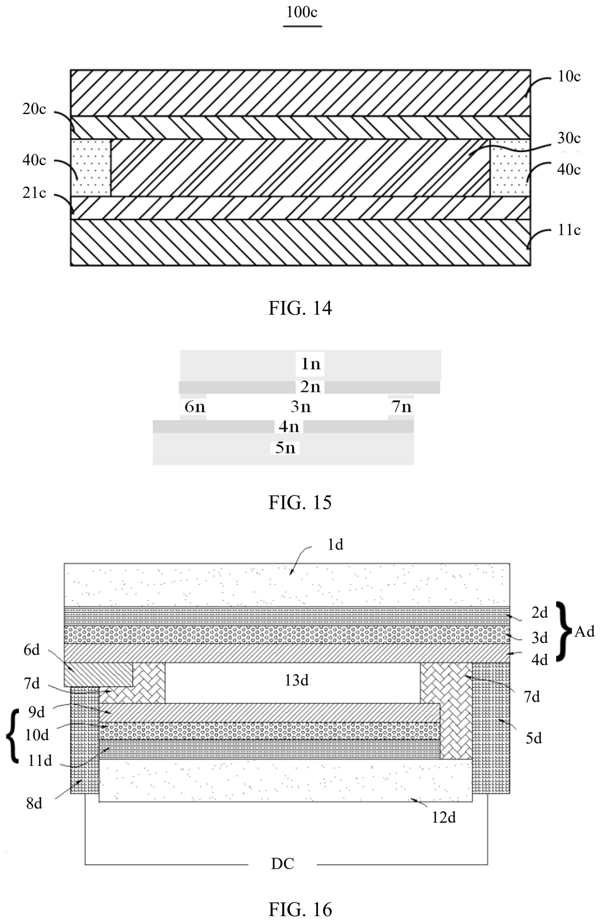

An embodiment of this application provides an electrochromic device, comprising a first electrode, a second electrode, and an electrochromic layer disposed between the first electrode and the second electrode. The electrochromic layer comprises the foregoing anode electrochromic material or the foregoing electrochromic composition in this application. In an implementation of this application, as shown in FIG. 14, the electrochromic device 100c comprises a first substrate board 10c, a first electrode 20c, a second substrate board 11c, a second electrode 21c, an electrochromic layer 30c, and a sealing member 40c. The first electrode 20c is disposed on the first substrate board 10c, the second electrode 21c is disposed on the second substrate board 11c, and the electrochromic layer 30c is disposed between the first electrode 20c and the second electrode 21c. The sealing member 40c is disposed between the first electrode 20c and the second electrode 21c, and joins the first electrode 20c and the second electrode 21c together. When the electrochromic device works, a specific voltage is applied between the first electrode and the second electrode, so that a material of the electrochromic layer undergoes an oxidation-reduction reaction under the voltage and changes a color. When the electrochromic layer uses the anode electrochromic material or the electrochromic composition provided in this application, a color-changing response speed of the electrochromic device can be improved, and color-changing display effect and cycle stability of the device can be improved.

An embodiment of this application further provides an electronic device, comprising the foregoing electrochromic device in embodiments of this application. The electronic device comprises an electrochromic vehicle rearview mirror, a vehicle sunroof, VR glasses, an electrochromic window of a building and an airplane, sunglasses and goggles, an electrochromic display, or the like.

The following describes embodiments of this application by using a plurality of embodiments.

### Example 13

22.7 g of 3,7-dimethylphenothiazine and 22.7 g of 4-bromobenzotetrahydrothione are dissolved in 500 g of toluene. After uniform mixing, 13.2 g of potassium carbonate and 2 g of cuprous iodide are added. A temperature is raised to 60°C to 90°C, and a reaction of heating under condensation reflux is performed for 12 h to 96 h, to obtain a reactant comprising an anode electrochromic material. The reactant is separated and purified through silica gel column chromatography, to obtain a crude anode electrochromic material. The crude anode electrochromic material is dissolved in acetonitrile for recrystallization, to obtain a refined anode electrochromic material (a4) whose molecular structure is shown as follows:

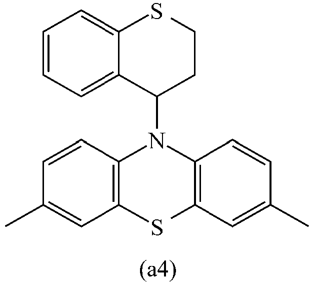

### Example 14

28.7 g of 3,7-diethoxyphenothiazine and 22.7 g of 4-bromobenzotetrahydrothione are dissolved in 500 g of toluene. After uniform mixing, 13.2 g of potassium carbonate and 2 g of cuprous iodide are added. A temperature is raised to 60°C to 90°C, and a reaction of heating under condensation reflux is performed for 12 h to 96 h, to obtain a reactant comprising an anode electrochromic material. The reactant is separated and purified through silica gel column chromatography, to obtain a crude anode electrochromic material. The crude anode electrochromic material is dissolved in acetonitrile for recrystallization, to obtain a refined anode electrochromic material (V) whose molecular structure is shown as follows:

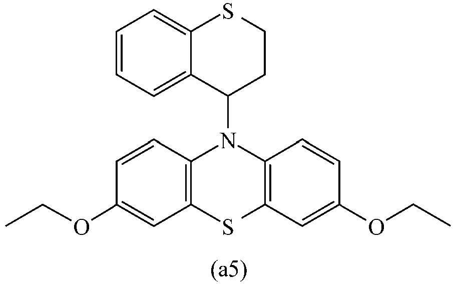

### Example 15

20.0 g of phenothiazine and 22.7 g of 4-bromobenzotetrahydrothione are dissolved in 500 g of toluene. After uniform mixing, 13.2 g of potassium carbonate and 2 g of cuprous iodide are added. A temperature is raised to 60°C to 90°C, and a reaction of heating under condensation reflux is performed for 12 h to 96 h, to obtain a reactant comprising an anode electrochromic material. The reactant is separated and purified through silica gel column chromatography, to obtain a crude anode electrochromic material. The crude anode electrochromic material is dissolved in acetonitrile for recrystallization, to obtain a refined anode electrochromic material (VI) whose molecular structure is shown as follows:

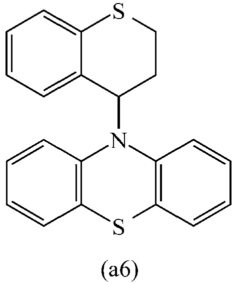

### Example 16

35.2 g of 3,7-dinitrophenothiazine and 22.7 g of 4-bromobenzotetrahydrothione are dissolved in 500 g of toluene. After uniform mixing, 13.2 g of potassium carbonate and 2 g of cuprous iodide are added. A temperature is raised to 60°C to 90°C, and a reaction of heating under condensation reflux is performed for 12 h to 96 h, to obtain a reactant comprising an anode electrochromic material. The reactant is separated and purified through silica gel column chromatography, to obtain a crude anode electrochromic material. The crude anode electrochromic material is dissolved in acetonitrile for recrystallization, to obtain a refined anode electrochromic material (VII) whose molecular structure is shown as follows:

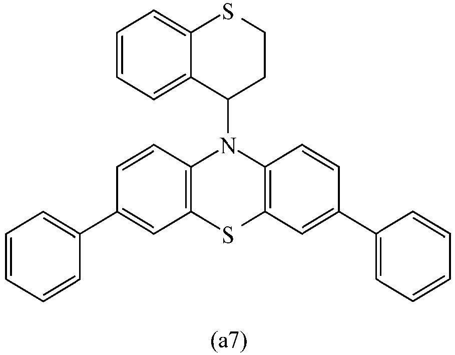

### Example 17

22.7 g of 3,7-dimethylphenothiazine and 27.6 g of 9-bromothioanthracene are dissolved in 500 g of toluene. After uniform mixing, 13.2 g of potassium carbonate and 2 g of cuprous iodide are added. A temperature is raised to 60°C to 90°C, and a reaction of heating under condensation reflux is performed for 12 h to 96 h, to obtain a reactant comprising an anode electrochromic material. The reactant is separated and purified through silica gel column chromatography, to obtain a crude anode electrochromic material. The crude anode electrochromic material is dissolved in acetonitrile for recrystallization, to obtain a refined anode electrochromic material (VIII) whose molecular structure is shown as follows:

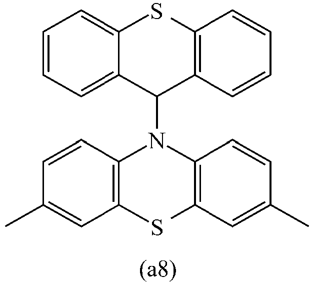

### Example 18

28.7 g of 3,7-diethoxyphenothiazine and 27.6 g of 9-bromothioanthracene are dissolved in 500 g of toluene. After uniform mixing, 13.2 g of potassium carbonate and 2 g of cuprous iodide are added. A temperature is raised to 60°C to 90°C, and a reaction of heating under condensation reflux is performed for 12 h to 96 h, to obtain a reactant comprising an anode electrochromic material. The reactant is separated and purified through silica gel column chromatography, to obtain a crude anode electrochromic material. The crude anode electrochromic material is dissolved in acetonitrile for recrystallization, to obtain a refined anode electrochromic material (IX) whose molecular structure is shown as follows:

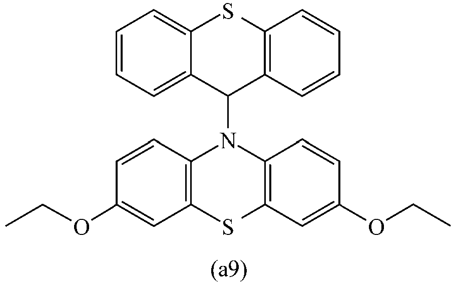

### Example 19

20.0 g of phenothiazine and 27.6 g of 9-bromothioanthracene are dissolved in 500 g of toluene. After uniform mixing, 13.2 g of potassium carbonate and 2 g of cuprous iodide are added. A temperature is raised to 60°C to 90°C, and a reaction of heating under condensation reflux is performed for 12 h to 96 h, to obtain a reactant comprising an anode electrochromic material. The reactant is separated and purified through silica gel column chromatography, to obtain a crude anode electrochromic material. The crude anode electrochromic material is dissolved in acetonitrile for recrystallization, to obtain a refined anode electrochromic material (X) whose molecular structure is shown as follows:

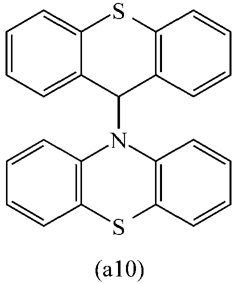

### Example 20

35.2 g of 3,7-diphenylphenothiazine and 27.6 g of 9-bromothioanthracene are dissolved in 500 g of toluene. After uniform mixing, 13.2 g of potassium carbonate and 2 g of cuprous iodide are added. A temperature is raised to 60°C to 90°C, and a reaction of heating under condensation reflux is performed for 12 h to 96 h, to obtain a reactant comprising an anode electrochromic material. The reactant is separated and purified through silica gel column chromatography, to obtain a crude anode electrochromic material. The crude anode electrochromic material is dissolved in acetonitrile for recrystallization, to obtain a refined anode electrochromic material (XI) whose molecular structure is shown as follows:

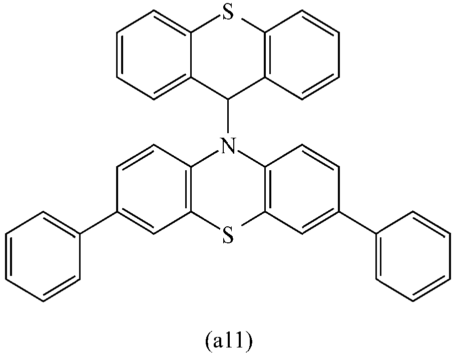

### Comparative Example 4

Phenothiazine is chosen as the anode electrochromic material.

Electrochromic compositions are prepared by using the anode electrochromic materials prepared in Example 13 to Example 20 and Comparative Example 4. Devices of the electrochromic composition and concentration of the devices are as follows: 60 mmol/L of the anode electrochromic material, 60 mmol/L of ethyl viologen ditetrafluoroborate, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride, and a balance of propylene carbonate. The prepared electrochromic composition is sandwiched between two glass plates plated with ITO layers, and a frame seal is used for encapsulation, to prepare an electrochromic device whose length and width are both 40 mm, where a thickness of accommodation space is 62 µm, and transmittance of a single ITO glass plate is 92%.

The following tests are performed on the electrochromic devices prepared in Example 13 to Example 20 and Comparative Example 4 of this application:

### (1) Color-changing performance test

At a test voltage of 1.3 V, coloring response time, fading response time during power-off, and fading response time during a short circuit of each electrochromic device are tested. Test results are shown in Table 5.

**Table 5 Response time of electrochromic devices prepared in Example 13 to Example 20 and Comparative Example 4**

| Electrochromic device | Coloring response time/s | Fading response time (power-off)/s | Fading response time (short circuit)/s |
|---|---|---|---|
| Example 13 | 1.72 | 13.14 | 5.66 |
| Example 14 | 1.69 | 12.57 | 6.21 |
| Example 15 | 1.82 | 13.55 | 6.81 |
| Example 16 | 1.91 | 12.88 | 6.44 |
| Example 17 | 1.64 | 12.01 | 4.99 |
| Example 18 | 1.57 | 11.22 | 4.42 |
| Example 19 | 1.75 | 12.89 | 5.56 |
| Example 20 | 1.88 | 12.77 | 5.90 |
| Comparative Example 4 | 2.6 | 15.67 | 7.01 |

It can be understood from the test results in Table 5 that the coloring response time, the fading response time during power-off, and the fading response time during a short circuit of the electrochromic devices in Example 13 to Example 20 are all less than those of Comparative Example 4, which indicates that the anode electrochromic material provided in embodiments of this application can improve a coloring speed and a fading speed of the prepared electrochromic device.

### (2) Cycle life test

At a test voltage of 1.2 V, statuses of each electrochromic device after 0 power-on cycles, 20,000 power-on cycles, and 50,000 power-on cycles are observed, and light transmittance (Tᵥ₌₀) during fading and light transmittance (T_{v=1.2}) during coloring are measured. A difference (ΔT=Tᵥ₌₀-T_{v=1.2}) between light transmittance before a color change and light transmittance after the color change is calculated. Applying a voltage of 1.2 V for 5s power on and applying a voltage of 0 V for 10s is a cycle. Cycle life test results are shown in Table 6 and Table 7.

**Table 6 Color-changing performance of different electrochromic devices after 20,000 power-on cycles and 50,000 power-on cycles**

| Electrochromic device | 20,000 power-on cycles | 50,000 power-on cycles |
|---|---|---|
| Example 13 | Color-changing performance does not deteriorate significantly, the solution has no variegated color, and color-changing is uniform. | Color-changing performance does not deteriorate significantly, the solution has no variegated color, and color-changing is uniform. |
| Example 14 | Color-changing performance does not deteriorate significantly, the solution has no variegated color, and color-changing is uniform. | Color-changing performance does not deteriorate significantly, the solution has no variegated color, and color-changing is uniform. |
| Example 15 | Color-changing performance does not deteriorate significantly, the solution has no variegated color, and color-changing is uniform. | Color-changing performance does not deteriorate significantly, the solution has no variegated color, and color-changing is uniform. |
| Example 16 | Color-changing performance does not deteriorate significantly, the solution has no variegated color, and color-changing is uniform. | Color-changing performance does not deteriorate significantly, the solution has no variegated color, and color-changing is uniform. |
| Example 17 | Color-changing performance does not deteriorate significantly, the solution has no variegated color, and color-changing is uniform. | Color-changing performance does not deteriorate significantly, the solution has no variegated color, and color-changing is uniform. |
| Example 18 | Color-changing performance does not deteriorate significantly, the solution has no variegated color, and color-changing is uniform. | Color-changing performance does not deteriorate significantly, the solution has no variegated color, and color-changing is uniform. |
| Example 19 | Color-changing performance does not deteriorate significantly, the solution has no variegated color, and color-changing is uniform. | Color-changing performance does not deteriorate significantly, the solution has no variegated color, and color-changing is uniform. |
| Example 20 | Color-changing performance does not deteriorate significantly, the solution has no variegated color, and color-changing is uniform. | Color-changing performance does not deteriorate significantly, the solution has no variegated color, and color-changing is uniform. |
| Comparative Example 4 | Color-changing performance slightly deteriorates, and the solution at edges and corners of the device has a variegated color that does not fade away. | Color-changing performance deteriorates significantly, an overall color of the device becomes darker, and edges and corners have a variegated color that does not fade away. |

**Table 7 Light transmittance of different electrochromic devices after 0 power-on cycles, 20,000 power-on cycles, and 50,000 power-on cycles**

| Electrochromic device | 0 power-on cycles | | | 20,000 power-on cycles | | | 50,000 power-on cycles | | |
|---|---|---|---|---|---|---|---|---|---|
| | T_{v=1.2}/ % | Tᵥ₌₀/ % | ΔT/ % | T_{v=1.2}/ % | Tᵥ₌₀/ % | ΔT/ % | T_{v=1.2}/ % | Tᵥ₌₀/ % | ΔT/ % |
| Example 13 | 7.3 | 78.4 | 71.1 | 7.9 | 75.8 | 67.9 | 8.8 | 69.8 | 61.0 |
| Example 14 | 7.0 | 77.2 | 70.2 | 7.5 | 75.2 | 67.7 | 8.5 | 71.2 | 62.7 |
| Example 15 | 7.8 | 77.3 | 69.5 | 8.1 | 74.6 | 66.5 | 8.7 | 68.8 | 60.1 |
| Example 16 | 7.3 | 78.1 | 70.8 | 8.4 | 73.9 | 65.5 | 8.8 | 69.2 | 60.4 |
| Example 17 | 7.1 | 78.2 | 71.1 | 8.0 | 76.1 | 68.1 | 9.0 | 71.5 | 62.5 |
| Example 18 | 6.9 | 78.7 | 71.8 | 8.1 | 75.2 | 67.1 | 9.2 | 71.3 | 62.1 |
| Example 19 | 7.0 | 77.9 | 70.9 | 8.7 | 73.5 | 64.8 | 9.1 | 70.2 | 61.1 |
| Example 20 | 7.1 | 78.0 | 70.9 | 9.4 | 75.5 | 66.1 | 8.2 | 72.3 | 63.1 |
| Comparative Example 4 | 7.7 | 78.7 | 71.0 | 9.6 | 71.2 | 61.6 | 10.2 | 62.1 | 51.9 |

It can be understood from Table 6 and Table 7 that in Example 13 to Example 20, the color-changing performance and color-changing uniformity have no significant change after 50,000 cycles of color changes, and a difference between light transmittance before the color change and light transmittance after the color change can be kept at more than 60%. However, in Comparative Example 4, the color-changing performance is significantly deteriorated after 50,000 cycles of color changes, the overall color of the device becomes darker, the edges and corners have the variegated color that does not fade away, and a difference between light transmittance before the color change and light transmittance after the color change can be reduced to 51.9%, which indicates that using the anode electrochromic material provided in embodiments of this application can improve a cycle service life of the prepared electrochromic device.

This application further provides a phenazine compound comprising a bridge ring structure and application thereof, and an electrochromic device and application thereof.

A phenazine compound comprising a bridge ring structure is provided, and the compound is of a structure represented by Formula b1:

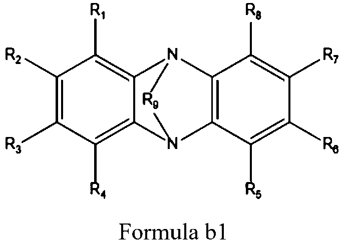

R₁, R₂, R₃, R₄, R₅, R₆, R₇, and R₈ each are independently hydrogen, a substituted or unsubstituted alkyl group, a substituted or unsubstituted alkenyl group, a substituted or unsubstituted alkynyl group, a substituted or unsubstituted alkenylalkyl group, a substituted or unsubstituted alkynylalkyl group, a substituted or unsubstituted aryl group, a substituted or unsubstituted aralkyl group, a substituted or unsubstituted heterocyclic aryl group, a substituted or unsubstituted alcyl group, a substituted or unsubstituted alkoxy group, a halogen, a cyano group, a nitro group, a carboxylate group, a phosphonate group, or an isocyanate group. R₉ is a substituted or unsubstituted alkyl group having 1 to 2 consecutive methylene structures.

For the foregoing phenazine compound,
the substituted or unsubstituted alkyl group is a substituted or unsubstituted C₁-C₁₄ alkyl group;
the substituted or unsubstituted alkenyl group is a substituted or unsubstituted C₂-C₁₄ alkenyl group;
the substituted or unsubstituted aryl group is a substituted or unsubstituted C₇-C₁₄ aryl group;
the substituted or unsubstituted aralkyl group is a substituted or unsubstituted C₈-C₁₄ aralkyl group;
the substituted or unsubstituted heterocyclic aryl group is a substituted or unsubstituted C₂-C₁₄ heterocyclic aryl group;
the substituted or unsubstituted alcyl group is a substituted or unsubstituted C₃-C₁₄ alcyl group; and
the substituted or unsubstituted alkoxy group is a substituted or unsubstituted C₁-C₁₄ alkoxy group.

For the foregoing phenazine compound, R₁, R₂, R₃, R₄, R₅, R₆, R₇, and R₈ each are independently an alkyl group, an alkenyl group, an alkynyl group, an alkenylalkyl group, an alkynylalkyl group, a monohydroxyalkyl group, a polyhydroxyalkyl group, a monoaminealkyl group, a polyaminealkyl group, a monosubstituted haloalkyl group, a polysubstituted haloalkyl group, a monoalkyloxyalkyl group, a polyalkyloxyalkyl group, a phosphoniumalkyl group, a siloxyalkyl group, an alkylcarboxylate group, an alkylphosphonate group, an alkylisocyanate group, a nitro group, a carboxylate group, a phosphonate group, an isocyanate group, a pyridyl group, a pyrrolyl group, a furyl group, a pyranyl group, a thienyl group, a quinolinyl group, or an indoleyl group.

In some embodiments, R₁, R₂, R₃, R₄, R₅, R₆, R₇, and R₈ each are independently H, a C₁-C₁₀ alkyl group, a C₁-C₃ alkoxy group, a nitro group, a nitrile group, a C₆-C₁₀ aryl group, or a C₂-C₁₀ heterocyclic aryl group.

For the foregoing phenazine compound, the alkyl group in R₉ is an alkyl group substituted by a halogen, an alkyl group, an alkenyl group, an alkynyl group, an alkenylalkyl group, an alkynylalkyl group, a monohydroxyalkyl group, a polyhydroxyalkyl group, a monoaminealkyl group, a polyaminealkyl group, a substituted haloalkyl group, a monoalkyloxyalkyl group, a polyalkyloxyalkyl group, a phosphoniumalkyl group, a siloxyalkyl group, an alkylcarboxylate group, an alkylphosphonate group, an alkylisocyanate group, a carboxylate group, a phosphonate group, an isocyanate group, a pyridyl group, a pyrrolyl group, a furyl group, a pyranyl group, a thienyl group, a quinolinyl group, or an indoleyl group, and the substitution include a monosubstitution and a poly-substitution.

For example, R₉ is two unsubstituted methylene groups.

For the foregoing phenazine compound, the compound is at least one of compounds represented by Formula b5, Formula b6, Formula b7, Formula b8, Formula b9, Formula b10, and Formula b11:

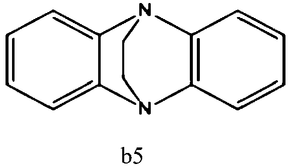

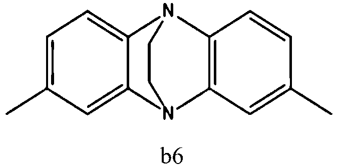

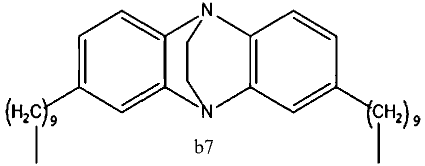

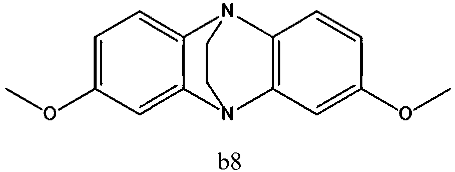

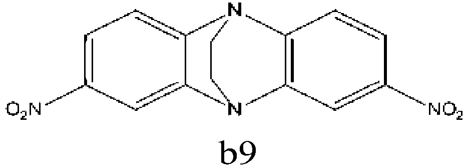

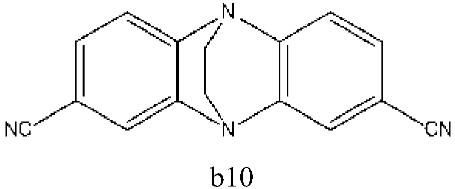

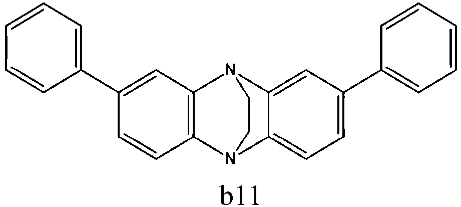

This application further provides application of the phenazine compound in an electrochromic device as an anode color-changing material.

This application further provides an electrochromic device. The electrochromic device comprises:
a first substrate material, wherein the first substrate material has a first conductive surface; and
a second substrate material, wherein the second substrate material has a second conductive surface.

The first conductive surface and the second conductive surface are combined by using a sealing member to form a sealed cavity. A color-changing medium is disposed in the sealed cavity, and an anode color-changing material in the color-changing medium comprises the phenazine compound according to any one of the foregoing embodiments.

In some embodiments, the color-changing medium comprises a cathode color-changing material, the anode color-changing material, a solvent, and an optional auxiliary agent.

In some embodiments, the color-changing medium comprises 30 mmol/L to 120 mmol/L of the anode color-changing material and 30 mmol/L to 120 mmol/L of the cathode color-changing material.

In some embodiments, the auxiliary agent is at least one of an anti-delamination agent, a UV stabilizing agent, a thickening agent, and an electrolyte.

In some embodiments, in the color-changing medium,
content of the anti-delamination agent ranges from 1 wt% to 6 wt%; and/or
content of the UV stabilizing agent ranges from 1 wt% to 4 wt%; and/or
content of the thickening agent ranges from 0.05 wt% to 3 wt%; and/or
content of the electrolyte ranges from 0.05 mol/L to 0.5 mol/L.

In some embodiments, the color-changing medium comprises 30 mmol/L to 120 mmol/L of the anode color-changing material, 30 mmol/L to 120 mmol/L of the cathode color-changing material, 1 wt% to 6 wt% of the anti-delamination agent, 1 wt% to 4 wt% of the UV stabilizing agent, 0.05 wt% to 3 wt% of the thickening agent, 0.05 mol/L to 0.5 mol/L of the electrolyte, and the solvent.

This application further provides application of the foregoing electrochromic device in preparing at least one of a glass curtain wall, an architectural glass window, a vehicle-mounted glass product, an eyeglass lens, and an electronic device.

Specific implementations of the phenazine compound comprising a bridge ring structure and application thereof, and the electrochromic device and application thereof are as follows.

Endpoints of ranges and any values disclosed in this specification are not limited to the exact ranges or values. It will be understood that these ranges or values include values close to these ranges or values. For numerical ranges, endpoints of each range, endpoints of each range and individual points, and individual points can be combined with each other to obtain one or more new numerical ranges, and these numerical ranges shall be considered specifically disclosed in this specification.

This application provides a phenazine compound comprising a bridge ring structure, and the compound is of a structure represented by Formula b1:

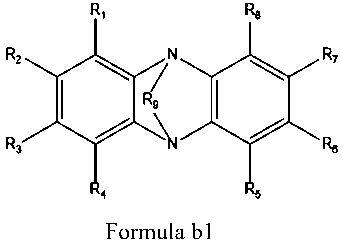

R₁, R₂, R₃, R₄, R₅, R₆, R₇, and R₈ each are independently hydrogen, a substituted or unsubstituted alkyl group, a substituted or unsubstituted alkenyl group, a substituted or unsubstituted alkynyl group, a substituted or unsubstituted alkenylalkyl group, a substituted or unsubstituted alkynylalkyl group, a substituted or unsubstituted aryl group, a substituted or unsubstituted aralkyl group, a substituted or unsubstituted heterocyclic aryl group, a substituted or unsubstituted alcyl group, a substituted or unsubstituted alkoxy group, a halogen, a cyano group, a nitro group, a carboxylate group, a phosphonate group, an isocyanate group, a pyridyl group, a pyrrolyl group, a furyl group, a pyranyl group, a thienyl group, a quinolinyl group, or an indoleyl group. R₉ is a substituted or unsubstituted alkyl group having 1 to 2 consecutive methylene structures. The phenazine compound comprising a bridge ring structure of this application is used as an anode color-changing material with good intermiscibility, a fast response speed, uniform color-changing, and a long cycle life.

According to an implementation of this application, the substituted or unsubstituted alkyl group is a substituted or unsubstituted C₁-C₁₄ alkyl group. A phenazine compound that comprises a bridge ring structure and that is of this structure is used as an anode color-changing material with good intermiscibility, fast response speed, uniform color-changing, and a long cycle life.

According to an implementation of this application, the substituted or unsubstituted alkenyl group is a substituted or unsubstituted C₂-C₁₄ alkenyl group. A phenazine compound of this structure is used as an anode color-changing material with good intermiscibility, fast response speed, uniform color-changing, and a long cycle life.

According to an implementation of this application, the substituted or unsubstituted aryl group is a substituted or unsubstituted C₇-C₁₄ aryl group. A phenazine compound of this structure is used as an anode color-changing material with good intermiscibility, fast response speed, uniform color-changing, and a long cycle life.

According to an implementation of this application, the substituted or unsubstituted aralkyl group is a substituted or unsubstituted C₈-C₁₄ aralkyl group.

According to an implementation of this application, the substituted or unsubstituted heterocyclic aryl group is a substituted or unsubstituted C₂-C₁₄ heterocyclic aryl group. A phenazine compound of this structure is used as an anode color-changing material with good intermiscibility, fast response speed, uniform color-changing, and a long cycle life.

According to an implementation of this application, the substituted or unsubstituted alcyl group is a substituted or unsubstituted C₃-C₁₄ alcyl group. A phenazine compound of this structure is used as an anode color-changing material with good intermiscibility, fast response speed, uniform color-changing, and a long cycle life.

According to an implementation of this application, the substituted or unsubstituted alkoxy group is a substituted or unsubstituted C₁-C₁₄ alkoxy group. A phenazine compound of this structure is used as an anode color-changing material with good intermiscibility, fast response speed, uniform color-changing, and a long cycle life.

In some embodiments, R₁, R₂, R₃, R₄, R₅, R₆, R₇, and R₈ each are independently an alkyl group, an alkenyl group, an alkynyl group, an alkenylalkyl group, an alkynylalkyl group, a monohydroxyalkyl group, a polyhydroxyalkyl group, a monoaminealkyl group, a polyaminealkyl group, a monosubstituted haloalkyl group, a polysubstituted haloalkyl group, a monoalkyloxyalkyl group, a polyalkyloxyalkyl group, a phosphoniumalkyl group, a siloxyalkyl group, an alkylcarboxylate group, an alkylphosphonate group, an alkylisocyanate group, a nitro group, a carboxylate group, a phosphonate group, an isocyanate group, a pyridyl group, a pyrrolyl group, a furyl group, a pyranyl group, a thienyl group, a quinolinyl group, or an indoleyl group. A phenazine compound of this structure is used as an anode color-changing material with good intermiscibility, a fast response speed, uniform color-changing, and a long cycle life.

In some embodiments, R₁, R₂, R₃, R₄, R₅, R₆, R₇, and R₈ each are independently H, a C₁-C₁₀ alkyl group, a C₁-C₃ alkoxy group, a nitro group, a nitrile group, a C₆-C₁₀ aryl group, or a C₂-C₁₀ heterocyclic aryl group. A phenazine compound of this structure is used as an anode color-changing material with good intermiscibility, a fast response speed, uniform color-changing, and a long cycle life.

In some embodiments, the alkyl group in R₉ is an alkyl group substituted by a halogen, an alkyl group, an alkenyl group, an alkynyl group, an alkenylalkyl group, an alkynylalkyl group, a monohydroxyalkyl group, a polyhydroxyalkyl group, a monoaminealkyl group, a polyaminealkyl group, a substituted haloalkyl group, a monoalkyloxyalkyl group, a polyalkyloxyalkyl group, a phosphoniumalkyl group, a siloxyalkyl group, an alkylcarboxylate group, an alkylphosphonate group, an alkylisocyanate group, a carboxylate group, a phosphonate group, an isocyanate group, a pyridyl group, a pyrrolyl group, a furyl group, a pyranyl group, a thienyl group, a quinolinyl group, or an indoleyl group, and the substitution include a monosubstitution and a poly-substitution.

In some embodiments, R₉ is two unsubstituted methylene groups. A phenazine compound of this structure is used as an anode color-changing material with good intermiscibility, a fast response speed, uniform color-changing, and a long cycle life.

In some embodiments, embodiments of this application use at least one of compounds represented by Formula b5, Formula b6, Formula b7, Formula b8, Formula b9, Formula b10, and Formula b11 as an example to describe advantages of this application. However, the scope of this application is not limited thereto.

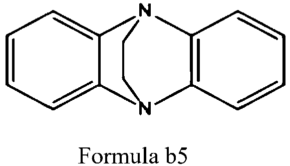

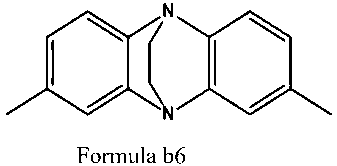

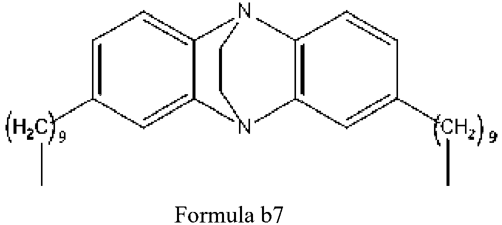

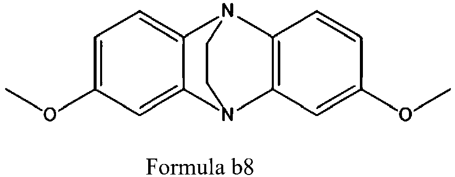

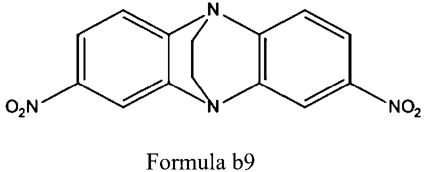

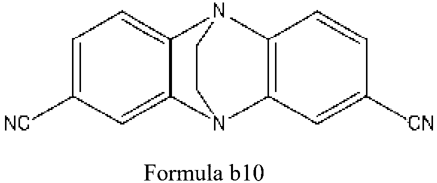

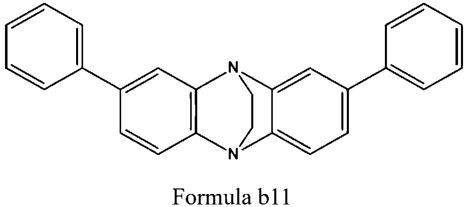

For ease of comparison, in embodiments of this application, a compound represented by Formula b4 is used as an example to describe the advantages of this application through comparison:

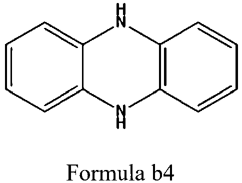

This application provides application of the phenazine compound in this application in an electrochromic device as an anode color-changing material.

This application provides an electrochromic device (as shown in FIG. 15). The electrochromic device comprises:
a first substrate material 1n, wherein the first substrate material 1n has a first conductive surface 2n; and
a second substrate material 5n, wherein the second substrate material 5n has a second conductive surface 4n.

The first conductive surface 2n and the second conductive surface are combined by using a sealing member to form a sealed cavity. A color-changing medium is disposed in the sealed cavity, and an anode color-changing material in the color-changing medium comprises the phenazine compound according to this application. The electrochromic device of this structure has good stability and a strong color-changing capability.

In this application, a frame seal 6n and a frame seal 7n may be used to connect the first conductive surface 2n and the second conductive surface to form and define a cavity 3n.

According to an implementation of this application, in FIG. 15,
the first substrate material 1n and the second substrate material 5n are respectively a first transparent conductive substrate and a second transparent conductive substrate; and
the first conductive surface 2n and the second conductive surface 4n are transparent conductive layers, and each may include a bottom layer on the substrate material and a conductive layer on the bottom layer, wherein the bottom layer is mainly made of oxide such as aluminum oxide, titanium oxide, nickel oxide, or niobium oxide, and has a thickness of 20 nm to 100 nm, and the conductive layer may be at least one of tin oxide, zinc oxide, indium tin oxide, indium gallium zinc oxide composite, fluorine-doped tin oxide, aluminum-doped zinc oxide, and fluorine-doped zinc oxide, and has a thickness of 150 nm to 250 nm and a sheet resistance of less than 25 Ω.

In this application, the conductive layer is in contact with the cavity 3n. The cavity 3n is a cavity between the two substrate materials and is filled with a color-changing solution prepared by using the anode color-changing material, a cathode color-changing material, and a series of auxiliary agents. A thickness of the cavity ranges, for example, from 50 µm to 300 µm.

In this application, widths of the frame seal 6n and the frame seal 7n range, for example, from 3 mm to 5 mm.

In this application, there is no special requirement for a formula of the color-changing medium, and all commonly used color-changing media may be used in this application. For this application, for example, the color-changing medium comprises the cathode color-changing material, the anode color-changing material, a solvent, and an optional auxiliary agent.

In this application, there is no special requirement for a type of the cathode color-changing material, and all commonly used cathode color-changing materials may be used in this application. For this application, for example, the cathode color-changing material is a viologen compound whose structure is represented by Formula b2.

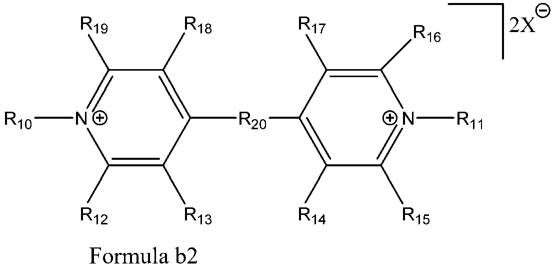

R₁₀ and R₁₁ are independently a substituted or unsubstituted alkyl group, a substituted or unsubstituted alkenyl group, a substituted or unsubstituted alkynyl group, a substituted or unsubstituted aralkyl group, a substituted or unsubstituted heterocyclic aryl group, a substituted or unsubstituted alcyl group, a substituted or unsubstituted alkoxy group, an isocyanate group, or a carboxyl group.

R₁₂, R₁₃, R₁₄, R₁₅, R₁₆, R₁₇, R₁₈, and R₁₉ are independently hydrogen, a substituted or unsubstituted alkyl group, a substituted or unsubstituted aryl group, a substituted or unsubstituted aralkyl group, a substituted or unsubstituted alkoxy group, a halogen, a cyano group, or a nitro group.

R₂₀ is a substituted or unsubstituted alkyl group, a substituted or unsubstituted alkenyl group, a substituted or unsubstituted alkynyl group, a substituted or unsubstituted aralkyl group, a substituted or unsubstituted heterocyclic aryl group, or a substituted or unsubstituted alcyl group.

X is at least one of a halogen, borate, fluoroborate, tetraarylborate, hexafluorometallate, hexafluorometalloidate, sulfate, sulfonate, sulfonamide, carboxylate, perchlorate, and tetrachloroferrate.

In some embodiments, R₁₀ and R₁₁ are independently an alkyl group, an alkenyl group, an alkynyl group, an alkenylalkyl group, an alkynylalkyl group, a monohydroxyalkyl or polyhydroxyalkyl group, a monoaminealkyl or polyaminealkyl group, a monosubstituted haloalkyl or polysubstituted haloalkyl group, a monoalkyloxyalkyl or polyalkyloxyalkyl group, a phosphoniumalkyl group, a siloxyalkyl group, alkylcarboxylate, alkylphosphonate, alkylisocyanate, carboxylate, phosphonate group, isocyanate, a pyridyl group, a pyrrolyl group, a furyl group, a pyranyl group, a thienyl group, a quinolinyl group, or an indoleyl group.

In this application, R₁₀ and R₁₁ may be the same or different. In an implementation of this application, R₁₀ and R₁₁ may independently be, but are not limited to, an alkyl group, an alkenyl group, an alkynyl group, an alkenylalkyl group, an alkynylalkyl group, a monohydroxyalkyl or polyhydroxyalkyl group, a monoaminealkyl or polyaminealkyl group, a monosubstituted haloalkyl or polysubstituted haloalkyl group, a monoalkyloxyalkyl or polyalkyloxyalkyl group, a phosphoniumalkyl group, a siloxyalkyl group, alkylcarboxylate, alkylphosphonate, alkylisocyanate, carboxylate, phosphonate group, isocyanate, a pyridyl group, a pyrrolyl group, a furyl group, a pyranyl group, a thienyl group, a quinolinyl group, or an indoleyl group.

In another implementation of this application, a quantity of carbon atoms of R₁₂, R₁₃, R₁₄, R₁₅, R₁₆, R₁₇, R₁₈, and R₁₉ is less than or equal to 18. A quantity of carbon atoms of R₂₀ is less than or equal to 12.

In still another implementation of this application, X may be F, Cl, Br, I, BF₄, PF₆, SbF₆, AsF₆, ClO₄, SO₃CF₃, N(CF₃SO₂)₂, C(CF₃SO₂)₃, N(SO₂C₂F₅)₂, or BAr₄, where Ar is an aryl group or a fluorinated aryl group. In a specific implementation, X may be -BAr₄, and Ar is a pentafluorophenyl group. In another specific implementation of this application, X may be tetrafluoroborate. In still another specific implementation of this application, X may be a bis(trifluoromethylsulfonyl)imide anion. Specifically, the cathode color-changing material may include at least one of ethyl viologen ditetrafluoroborate and n-butyl viologen ditetrafluoroborate.

In an implementation of this application, the cathode color-changing material is a compound represented by Formula b3.

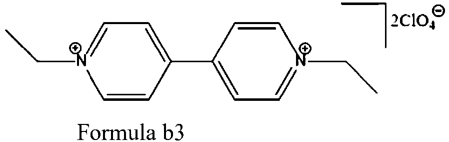

In this application, the solvent is used to dissolve and disperse an anode electrochromic material and the cathode color-changing material, to ensure color-changing uniformity of the anode electrochromic material. The solvent may be any organic solvent in commercially available solvents, provided that the solvent can dissolve or disperse devices in the color-changing medium and does not react with the devices in the color-changing medium. In an implementation of this application, that solvent may include at least one of sulfone, amide, ether, alcohol, nitrile, ketone, and ester. Specifically, the solvent may include but is not limited to at least one of 3-methylsulfolane, dimethylsulfoxide, dimethylformamide, tetraethylene glycol dimethyl ether, ethoxyethanol, acetonitrile, glutaronitrile, 3-hydroxypropionitrile, 2-methylglutaronitrile, 2-acetylbutyrolactone, cyclopentanone, β-propiolactone, γ-butyrolactone, γ-valrolactone, polypropylene carbonate, ethylene carbonate, and propylene carbonate. In a specific implementation, the solvent may be propylene carbonate.

In a specific implementation of this application, the color-changing medium further comprises an auxiliary agent. Adding the auxiliary agent is conducive to improving performance of the color-changing medium. In an implementation of this application, the auxiliary agent comprises at least one of an anti-delamination agent, a UV stabilizing agent, a thickening agent, and an electrolyte. In this way, stability and the color-changing capability can be improved.

In a specific implementation of this application, the auxiliary agent comprises the anti-delamination agent. Adding the anti-delamination agent is conducive to avoiding a delamination problem of the color-changing medium and ensuring uniform dispersion of the devices, to facilitate realization of uniform color-changing effect, and prolong the service life of the color-changing medium. In a specific implementation, the anti-delamination agent comprises a polymer comprising an ester group. Specifically, the polymer comprising the ester group may include but is not limited to at least one of polyacrylate, polymethacrylate, and polyaromatic ester. In a specific implementation, the anti-delamination agent may be ethyl polyacrylate. In a specific implementation, content of anti-delamination agent in the color-changing medium ranges from 1 wt% to 6 wt%. The anti-delamination agent can improve an anti-delamination capability of the phenazine compound comprising a bridge ring, and does not affect a color-changing capability of the phenazine compound comprising a bridge ring and a color-changing capability of the cathode color-changing material. Specifically, the content of the anti-delamination agent in the color-changing medium may be, but is not limited to, 1 wt%, 2 wt%, 3 wt%, 4 wt%, 5 wt%, 6 wt%, or the like. In a specific implementation, the content of the anti-delamination agent in the color-changing medium may range from 4 wt% to 6 wt%. In this way, stability and the color-changing capability can be improved.

In another implementation, the auxiliary agent comprises the UV stabilizing agent. Adding the UV stabilizing agent can improve light stability of the color-changing medium and prolong the service life of the color-changing medium. Specifically, the UV stabilizing agent may include but is not limited to at least one of 2-ethyl-2-cyano-3,3-diphenyl acrylate, acrylic acid (2-ethylhexyl)-2-cyano-3,3-diphenyl ester, 2-(2'-hydroxy-4'-methylphenyl)benzotriazole, 3-[3-(2H-benzotriazol-2-yl)-5-(1, 1-dimethylethyl)-4-hydroxyphenyl]propionate amyl ester, 2,4-dihydroxybenzophenone, 2-hydroxy-4-methoxybenzophenone, and 2-ethyl-2'-ethoxypropionanilide. In a specific implementation, the UV stabilizing agent may be 2-(2'-hydroxy-4'-methylphenyl)benzotriazole. In an implementation, content of the UV stabilizing agent in the color-changing medium range from 1 wt% to 4 wt%. The UV stabilizing agent can improve stability and the service life of the phenazine compound comprising a bridge ring, and does not affect the color-changing capability of the phenazine compound comprising a bridge ring and the color-changing capability of the cathode color-changing material. Specifically, the content of the UV stabilizing agent in the color-changing medium may be, but is not limited to, 1 wt%, 1.5 wt%, 2 wt%, 3 wt%, 3.5 wt%, 4 wt%, or the like. In a specific implementation, the content of the UV stabilizing agent in the color-changing medium may range from 3 wt% to 4 wt%. In this way, stability and a color-changing capability can be improved.

In still another implementation, the auxiliary agent comprises the thickening agent. Adding the thickening agent can adjust viscosity of the color-changing medium, which is conducive to use of the color-changing medium in electrochromic devices. Specifically, the thickening agent may be a polymer, and the polymer may include but is not limited to at least one of polyamide, polyimide, polycarbonate, polymethacrylate, polyacrylate, polysilane, polysiloxane, polyvinyl acetate, polymethacrylonitrile, polyacrylonitrile, polyvinyl phenol, polyvinyl alcohol, and polyvinylidene dihalide. In a specific implementation, the thickening agent may be polyvinylidene difluoride. In an implementation, content of the thickening agent in the color-changing medium range from 0.05 wt% to 3 wt%. In this way, viscosity of the color-changing medium is not increased excessively, and service performance of the color-changing medium is ensured. Specifically, the content of the thickening agent in the color-changing medium may be, but is not limited to, 0.05 wt%, 0.5 wt%, 1 wt%, 1.5 wt%, 2 wt%, 2.5 wt%, 3 wt%, or the like. In a specific implementation, the content of the thickening agent in the color-changing medium may range from 0.05 wt% to 1.5 wt%. In this way, stability and the color-changing capability can be improved.

In still another implementation, the auxiliary agent comprises the electrolyte. Adding the electrolyte can improve ionic conductivity of the color-changing medium, and improve a color-changing response speed. Specifically, the electrolyte may include but is not limited to at least one of lithium trifluoromethanesulfonate, lithium perchlorate, lithium tetrafluoroborate, and lithium hexafluorophosphate. In a specific implementation, the electrolyte may be lithium perchlorate. In an implementation, concentration of the electrolyte in the color-changing medium ranges from 0.05 mol/L to 0.5 mol/L, which helps significantly improve the ionic conductivity of the color-changing medium. Specifically, the concentration of the electrolyte in the color-changing medium may be, but is not limited to, 0.05 mol/L, 0.1 mol/L, 0.2 mol/L, 0.25 mol/L, 0.3 mol/L, 0.4 mol/L, 0.5 mol/L, or the like. In this way, stability and the color-changing capability can be improved.

In a specific implementation, content of the electrolyte in the color-changing medium may range from 0.05 mol/L to 0.1 mol/L. In an implementation of this application, the color-changing medium comprises 30 mmol/L to 120 mmol/L of the phenazine compound comprising a bridge ring, 30 mmol/L to 120 mmol/L of the cathode color-changing material, and the solvent.

In another implementation of this application, the color-changing medium comprises 65 mmol/L to 85 mmol/L of the phenazine compound comprising a bridge ring, 80 mmol/L to 120 mmol/L of the cathode color-changing material, and the solvent. In still another implementation of this application, the color-changing medium comprises 30 mmol/L to 120 mmol/L of the phenazine compound comprising a bridge ring, 30 mmol/L to 120 mmol/L of the cathode color-changing material, 1 wt% to 6 wt% of the anti-delamination agent, and the solvent.

In still another implementation of this application, the color-changing medium comprises 30 mmol/L to 120 mmol/L of the phenazine compound comprising a bridge ring, 30 mmol/L to 120 mmol/L of the cathode color-changing material, 1 wt% to 4 wt% of the UV stabilizing agent, and the solvent. In this way, stability and the color-changing capability can be improved.

In still another implementation of this application, the color-changing medium comprises 30 mmol/L to 120 mmol/L of the phenazine compound comprising a bridge ring, 30 mmol/L to 120 mmol/L of the cathode color-changing material, 0.05 wt% to 3 wt% of the thickening agent, and the solvent. In still another implementation of this application, the color-changing medium comprises 30 mmol/L to 120 mmol/L of the phenazine compound comprising a bridge ring, 30 mmol/L to 120 mmol/L of the cathode color-changing material, 0.05 mol/L to 0.5 mol/L of the electrolyte, and the solvent. In this way, stability and the color-changing capability can be improved.

In still another implementation of this application, the color-changing medium comprises 30 mmol/L to 120 mmol/L of the phenazine compound comprising a bridge ring, 30 mmol/L to 120 mmol/L of the cathode color-changing material, 1 wt% to 6 wt% of the anti-delamination agent, 1 wt% to 4 wt% of the UV stabilizing agent, 0.05 wt% to 3 wt% of the thickening agent, 0.05 mol/L to 0.5 mol/L of the electrolyte, and the solvent.

In still another implementation of this application, the color-changing medium comprises 30 mmol/L to 120 mmol/L of the anode color-changing material, 30 mmol/L to 120 mmol/L of the cathode color-changing material, 1 wt% to 6 wt% of the anti-delamination agent, 1 wt% to 4 wt% of the UV stabilizing agent, 0.05 wt% to 3 wt% of the thickening agent, 0.05 mol/L to 0.5 mol/L of the electrolyte, and the solvent. In this way, stability and the color-changing capability can be improved.

In still another implementation of this application, the color-changing medium comprises 60 mmol/L to 85 mmol/L of the phenazine compound comprising a bridge ring, 80 mmol/L to 120 mmol/L of the cathode color-changing material, 4 wt% to 6 wt% of the anti-delamination agent, 3 wt% to 4 wt% of the UV stabilizing agent, 0.05 wt% to 1.5 wt% of the thickening agent, 0.05 mol/L to 0.1 mol/L of the electrolyte, and the solvent. In this way, stability and the color-changing capability can be improved.

In this application, a preparation method for the color-changing medium has no special requirement, and may be performed according to a conventional technology, for example, comprising adding the phenazine compound comprising a bridge ring and the cathode color-changing material into the solvent, and optionally adding the auxiliary agent for uniform mixing, to obtain the color-changing medium. In this way, stability and the color-changing capability can be improved.

In an implementation of this application, the preparation method for the color-changing medium comprises adding the phenazine compound comprising a bridge ring, the cathode color-changing material, and the auxiliary agent into the solvent for uniformly mixing, to obtain the color-changing medium.

In this application, there is no special requirement for a synthesis method for a compound. According to an implementation of this application, the synthesis method for a compound is: dissolving a reactant 1 (phenazine compound) in toluene in a three-necked flask under stirring and slowly adding a toluene solution of NaH; performing a reaction at a room temperature for 2 h to 10 h after dropwise addition is completed; slowly dropwise adding a toluene solution of a reactant 2 (substituted alkane, where a substituent group is selected according to a target product, for example, 1,2-dibromoethane); raising the termperature to 60°C to 90°C; performing heating under condensation reflux for 12 h to 96 h; separating and purifying the reactant through silica gel column chromatography, to obtain the compound of this application, for example, the compounds represented by Structural Formula b4 to Structural Formula b11. A specific reaction formula is shown in Formula Ib, and each group in a reactant 1 is selected according to a structure of a to-be-obtained compound represented by Formula b1:

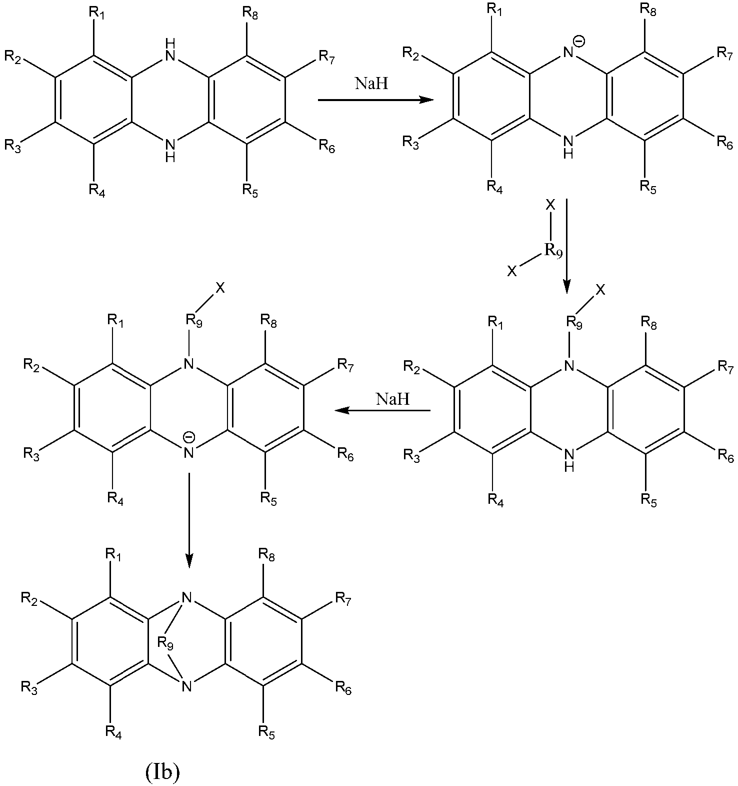

The following describes this application in detail by using specific embodiments as examples.

### Preparation Example 1: synthesis of a compound b5

20.8 g of 5,10-dihydrophenazine is dissolved in 400 g of toluene in a three-necked flask under stirring, and a toluene solution of NaH (6 g of NaH dissolved in 100 g of toluene) is slowly added. A reaction is performed at a room temperature for 2 h after dropwise addition is completed. A toluene solution of 1,2-dibromoethane (17 g of 1,2-dibromoethane dissolved in 30 g of toluene) is slowly dropwise added. The termperature is raised to 70°C. Heating under condensation reflux is performed for 12 h. The reactant is separated and purified through silica gel column chromatography, to obtain the anode electrochromic material represented by Structural Formula V.

### Preparation Example 2: synthesis of a compound b6

21.0 g of 5,10-dihydro-2,8-dimethylphenazine is dissolved in 400 g of toluene in a three-necked flask under stirring, and a toluene solution of NaH (6 g of NaH dissolved in 100 g of toluene) is slowly added. A reaction is performed at a room temperature for 2 h after dropwise addition is completed. A toluene solution of 1,2-dibromoethane (17 g of 1,2-dibromoethane dissolved in 30 g of toluene) is slowly dropwise added. The termperature is raised to 70°C. Heating under condensation reflux is performed for 12 h. The reactant is separated and purified through silica gel column chromatography, to obtain the anode electrochromic material represented by Structural Formula VI.

### Preparation Example 3: synthesis of a compound b7

46.4 g of 5,10-dihydro-2,8-di-n-decylphenazine is dissolved in 400 g of toluene in a three-necked flask under stirring, and a toluene solution of NaH (6 g of NaH dissolved in 100 g of toluene) is slowly added. A reaction is performed at a room temperature for 2 h after dropwise addition is completed. A toluene solution of 1,2-dibromoethane (17 g of 1,2-dibromoethane dissolved in 30 g of toluene) is slowly dropwise added. The termperature is raised to 70°C. Heating under condensation reflux is performed for 12 h. The reactant is separated and purified through silica gel column chromatography, to obtain the anode electrochromic material represented by Structural Formula VII.

### Preparation Example 4: synthesis of a compound b8

24.2 g of 5,10-dihydro-2,8-dimethoxyphenazine is dissolved in 400 g of toluene in a three-necked flask under stirring, and a toluene solution of NaH (6 g of NaH dissolved in 100 g of toluene) is slowly added. A reaction is performed at a room temperature for 2 h after dropwise addition is completed. A toluene solution of 1,2-dibromoethane (17 g of 1,2-dibromoethane dissolved in 30g of toluene) is slowly dropwise added. The termperature is raised to 70°C. Heating under condensation reflux is performed for 12 h. The reactant is separated and purified through silica gel column chromatography, to obtain the anode electrochromic material represented by Structural Formula VIII.

### Preparation Example 5: synthesis of a compound b9

20.8 g of 5,10-dihydro-2,8-dinitrophenazine is dissolved in 400 g of toluene in a three-necked flask under stirring, and a toluene solution of NaH (6 g of NaH dissolved in 100 g of toluene) is slowly added. A reaction is performed at a room temperature for 2 h after dropwise addition is completed. A toluene solution of 1,2-dibromoethane (17 g of 1,2-dibromoethane dissolved in 30 g of toluene) is slowly dropwise added. The termperature is raised to 90°C. Heating under condensation reflux is performed for 20 h. The reactant is separated and purified through silica gel column chromatography, to obtain the anode electrochromic material represented by Structural Formula IX.

### Preparation Example 6: synthesis of a compound b10

20.8 g of 5,10-dihydro-2,8-dicyanophenazine is dissolved in 400 g of toluene in a three-necked flask under stirring, and a toluene solution of NaH (6 g of NaH dissolved in 100 g of toluene) is slowly added. A reaction is performed at a room temperature for 2 h after dropwise addition is completed. A toluene solution of 1,2-dibromoethane (17 g of 1,2-dibromoethane dissolved in 30 g of toluene) is slowly dropwise added. The termperature is raised to 90°C. Heating under condensation reflux is performed for 20 h. The reactant is separated and purified through silica gel column chromatography, to obtain the anode electrochromic material represented by Structural Formula X.

### Preparation Example 7: synthesis of a compound b11

20.8 g of 5,10-dihydro-2,8-diphenylphenazine is dissolved in 400 g of toluene in a three-necked flask under stirring, and a toluene solution of NaH (6 g of NaH dissolved in 100 g of toluene) is slowly added. A reaction is performed at a room temperature for 2 h after dropwise addition is completed. A toluene solution of 1,2-dibromoethane (17 g of 1,2-dibromoethane dissolved in 30g of toluene) is slowly dropwise added. The termperature is raised to 70°C. Heating under condensation reflux is performed for 12 h. The reactant is separated and purified through silica gel column chromatography, to obtain the anode electrochromic material represented by Structural Formula XI.

In the following embodiments and comparative example, an average molecular weight of ethyl polyacrylate is 25 w and an average molecular weight of polyvinylidene difluoride (PVDF) is 25 w.

### Comparative Example 5: preparation of a color-changing medium of a compound b4

A color-changing composition is provided, comprising 30 mmol/L of the phenazine compound represented by Formula IV, 30 mmol/L of the cathode color-changing material represented by Formula III, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride (PVDF), and a balance of propylene carbonate.

### Example 21: preparation of a color-changing Medium of the compound b5

A color-changing composition is provided, comprising 30 mmol/L of the phenazine compound comprising a bridge ring of represented by Formula V, 30 mmol/L of the cathode color-changing material represented by Formula III, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride (PVDF), and a balance of propylene carbonate.

### Example 22: preparation of a color-changing medium of the compound b6

A color-changing composition is provided, comprising 30 mmol/L of the phenazine compound comprising a bridge ring of represented by Formula VI, 30 mmol/L of the cathode color-changing material represented by Formula III, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride (PVDF), and a balance of propylene carbonate.

### Example 23: preparation of a color-changing medium of the compound b7

A color-changing composition is provided, comprising 30 mmol/L of the phenazine compound comprising a bridge ring of represented by Formula VII, 30 mmol/L of the cathode color-changing material represented by Formula III, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride (PVDF), and a balance of propylene carbonate.

### Example 24: preparation of a color-changing medium of the compound b8

A color-changing composition is provided, comprising 30 mmol/L of the phenazine compound comprising a bridge ring of represented by Formula VIII, 30 mmol/L of the cathode color-changing material represented by Formula III, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride (PVDF), and a balance of propylene carbonate.

### Example 25: preparation of a color-changing medium of the compound b9

A color-changing composition is provided, comprising 30 mmol/L of the phenazine compound comprising a bridge ring of represented by Formula IX, 30 mmol/L of the cathode color-changing material represented by Formula III, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride (PVDF), and a balance of propylene carbonate.

### Example 26: preparation of a color-changing medium of the compound b10

A color-changing composition is provided, comprising 30 mmol/L of the phenazine compound comprising a bridge ring of represented by Formula X, 30 mmol/L of the cathode color-changing material represented by Formula III, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride (PVDF), and a balance of propylene carbonate.

### Example 27: preparation of a color-changing medium of the compound b11

A color-changing composition is provided, comprising 30 mmol/L of the phenazine compound comprising a bridge ring of represented by Formula XI, 30 mmol/L of the cathode color-changing material represented by Formula III, 0.1 mol/L of lithium perchlorate, 4 wt% of ethyl polyacrylate, 3 wt% of 2-(2'-hydroxy-4'-methylphenyl)benzotriazole, 1 wt% of polyvinylidene difluoride (PVDF), and a balance of propylene carbonate.

### Cycle life test

The color-changing compositions provided in Example 21 to Example 27 and Comparative Example 5 are made into electrochromic devices (as shown in FIG. 15, the first transparent conductive substrate, namely, the first substrate material 1n, and the second transparent conductive substrate, namely, the second substrate material 5n are glass plates (89% transmittance) plated with ITO layers, connection layers are the frame seal 6n (180 micrometers thick and 2.5 mm wide) and the frame seal 7n (180 micrometers thick and 2.5 mm wide), a thickness of accommodation space is 62 µm, and a length and a width of the electrochromic device are both 40 mm). A cycle life of each electrochromic device is tested at a test voltage of 1.2 V. Test results are shown in Table 8. Applying a voltage of 1.2 V for 5s power on and powering off for 10s is a cycle. Transmittance of the device is tested before and after the cycle.

**Table 8**

| | Compound | 0 cycles | | | 10,000 cycles | | | 20,000 cycles | | | 50,000 cycles | | |
|---|---|---|---|---|---|---|---|---|---|---|---|---|---|
| | | T_{V=0} | T_{V=1.2} | ΔT | T_{V=0} | T_{V=1.2} | ΔT | T_{V=0} | T_{V=1.2} | ΔT | T_{V=0} | T_{V=1.2} | ΔT |
| Comparative Example 5 | IV | 8.7 | 60.1 | 51.4 | 10.1 | 55.5 | 45.4 | 20.3 | 53.1 | 33.1 | 30.3 | 39.4 | 9.1 |
| Example 21 | V | 9.0 | 63.1 | 54.1 | 10.2 | 62.8 | 52.6 | 13.1 | 57.9 | 44.8 | 20.6 | 50.1 | 29.5 |
| Example 22 | VI | 8.4 | 64.1 | 55.7 | 9.5 | 62.8 | 53.3 | 11.2 | 58.2 | 47.0 | 14.0 | 51.9 | 37.9 |
| Example 23 | VII | 6.9 | 67.5 | 60.6 | 8.1 | 65.9 | 57.8 | 9.5 | 63.6 | 54.1 | 12.9 | 56.2 | 43.3 |
| Example 24 | VIII | 6.2 | 68.3 | 62.1 | 6.5 | 67.8 | 61.3 | 7.0 | 66.9 | 59.9 | 9.4 | 64.3 | 54.9 |
| Example 25 | IX | 11.0 | 58.7 | 47.7 | 11.6 | 58.2 | 46.6 | 12.9 | 55.0 | 42.1 | 15.1 | 46.4 | 31.3 |
| Example 26 | X | 12.3 | 57.4 | 45.1 | 12.9 | 56.4 | 43.5 | 14.1 | 39.7 | 25.6 | 17.2 | 35.1 | 17.9 |
| Example 27 | XI | 6.4 | 67.2 | 60.8 | 6.7 | 66.9 | 60.2 | 7.5 | 66.1 | 58.9 | 8.4 | 63.4 | 55.0 |

It can be seen from the experimental results that, compared with the compound b4 (5,10-dihydrophenazine), the structurally modified compounds all have increases in contrast ΔT before and after power on, which indirectly demonstrates that the modified compounds have higher stability. The compounds b8 and b11 have especially outstanding stability, and still have good light intensity adjustment effect after 50,000 power-on cycles. Alkoxy groups and phenyl groups in the phenazine compounds comprising bridge rings represented by the compounds b8 and b11 increase a conjugation range of phenothiazine and electron density of large conjugation, so that stability and a color-changing capability of the phenazine compound comprising a bridge ring are greatly improved. Therefore, use of the phenazine compound comprising a bridge ring of this application as a color-changing material of an electrochromic device has great application value and commercial prospect and good industrialization prospect compared with use of existing materials in the device.

This application further provides a carbazole compound and composition, a preparation method therefor and application thereof, and an electrochromic device.

A carbazole compound is provided, where the carbazole compound is of a structure represented by Formula (1) or Formula (2):

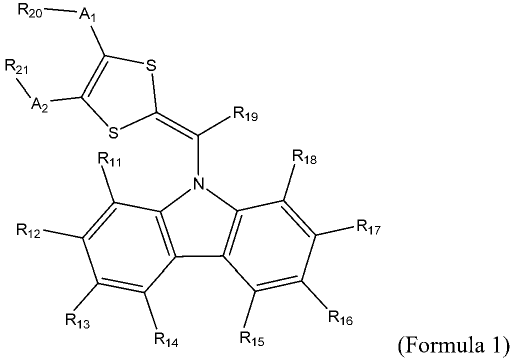

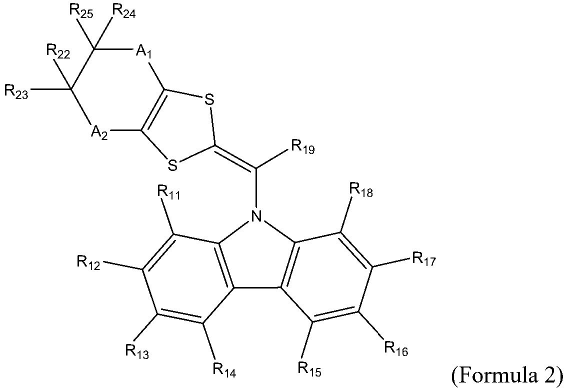

R₁₁, R₁₂, R₁₃, R₁₄, R₁₅, R₁₆, R₁₇, R₁₈, R₂₀, R₂₁, R₂₂, R₂₃, R₂₄, and R₂₅ each are independently H, OR₂₉, F, Cl, Br, I, CN, NO₂, an aryl group, a substituted or unsubstituted C₁-C₁₈ alkyl group, a substituted or unsubstituted amino group, or a substituted or unsubstituted C₂-C₁₈ nonaromatic heterocyclic group.

R₁₉ is H, an aryl group, a substituted or unsubstituted C₁-C₉ alkyl group, or a substituted or unsubstituted C₂-C₁₈ nonaromatic heterocyclic group.

R₂₉ is H, a substituted or unsubstituted C₁-C₁₈ alkyl group, a substituted or unsubstituted aryl group, a substituted or unsubstituted amino group, a substituted or unsubstituted C₂-C₁₈ nonaromatic heterocyclic group.

A₁ and A₂ each are independently N, N-R₂₆, O, or S.

R₂₆ is H, a substituted or unsubstituted alkyl group, a substituted or unsubstituted carbocyclic group, or a heterocyclic group.

In some embodiments, R₁₁, R₁₂, R₁₃, R₁₄, R₁₅, R₁₆, R₁₇, R₁₈, R₂₀, R₂₁, R₂₂, R₂₃, R₂₄, and R₂₅ each are independently H, an aryl group, or a substituted or unsubstituted C₁-C₁₈ alkyl group.

R₁₉ is H, an aryl group, or a substituted or unsubstituted C₁-C₉ alkyl group.

R₂₉ is H, a substituted or unsubstituted C₁-C₉ alkyl group, or a substituted or unsubstituted aryl group.

R₂₆ is H, a substituted or unsubstituted alkyl group, a five-membered heterocyclic group, or a six-membered heterocyclic group, where the five-membered heterocyclic group or the six-membered heterocyclic group is a tetrahydropyran ring, a tetrahydrofuran ring, a tetrahydrothiophene ring, a tetrahydropyridine ring, a hexahydropyrrole ring, or a tetrahydrothione ring.

In some embodiments, R₁₉ is H or a substituted or unsubstituted C₁-C₉ alkyl group, where the alkyl group comprises no more than 4 consecutive methylene groups.

R₂₉ is H or a substituted or unsubstituted C₁-C₉ alkyl group.

R₂₆ is H, a substituted or unsubstituted alkyl group, a tetrahydropyran ring, a tetrahydrofuran ring, a tetrahydrothiophene ring, or a tetrahydropyridine ring.

In some embodiments, R₁₁ to R₁₉ and R₂₂ to R₂₆ are all hydrogen.

In some embodiments, the carbazole compound is one of Formula (3) to Formula (8):

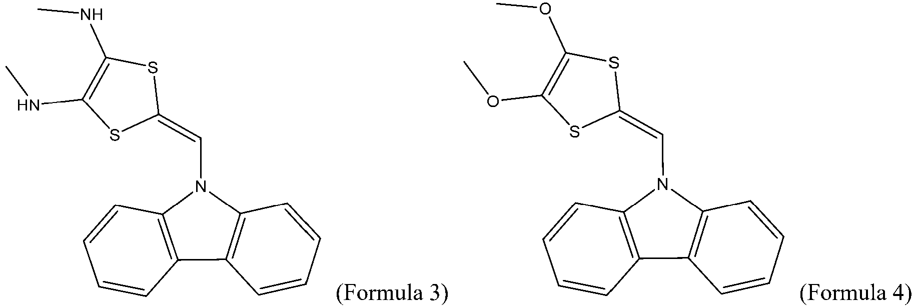

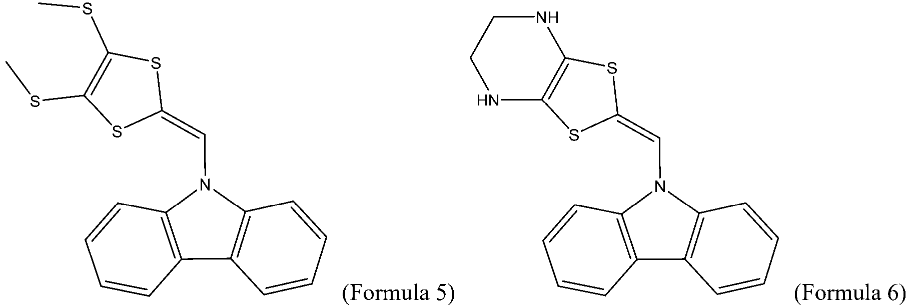

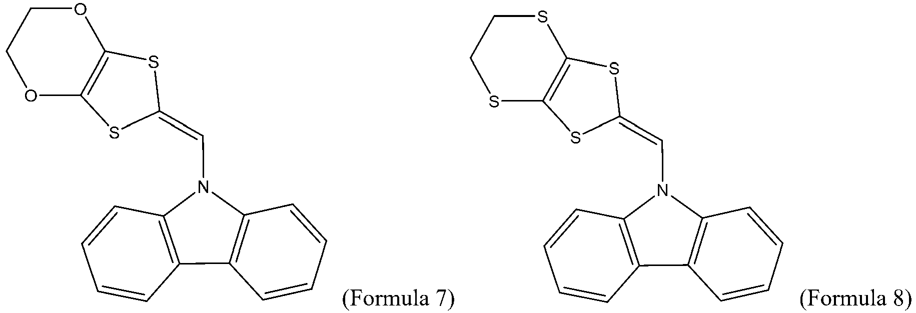

In some embodiments, a preparation method for a carbazole compound is further provided, and the method comprises:
(1) uniformly mixing sodium hydride, carbazole, and a carbonyl compound at a first temperature in the presence of a solvent, to obtain a mixed solution; and
(2) heating the mixed solution to a second temperature for reaction, and performing purification treatment, to obtain the carbazole compound.

In some embodiments, in step (1), the carbonyl compound is of a structure represented by Formula (9) or Formula (10):

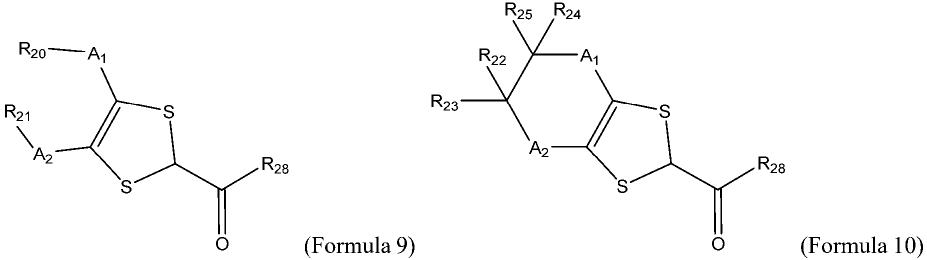

R₂₈ is H, an aryl group, or a substituted or unsubstituted C₁-C₉ alkyl group.

Definitions of R₂₀, R₂₁, R₂₂, R₂₃, R₂₄, R₂₅, A₁, and A₂ are correspondingly the same as those according to any one of the foregoing embodiments.

In some embodiments, in step (1), the solvent is N,N-dimethylformamide, dimethylsulfoxide, chloroform, or acetonitrile.

In some embodiments, in step (1), a molar ratio of the carbazole to the sodium hydride is 1:(1 to 1.5); and/or
the molar ratio of the carbazole to the carbonyl compound is 1:(1 to 2); and/or
the first temperature ranges from -5°C to 0°C.

In some embodiments, in step (2), the second temperature ranges from 60°C to 90°C; and/or
time of the reaction ranges from 8 h to 12 h.

In some embodiments, this application further provides a carbazole compound prepared according to the foregoing method.

In some embodiments, this application further provides application of a carbazole compound in an electrochromic medium.

In some embodiments, this application further provides a composition, comprising a cathode color-changing material, an anode color-changing material, a solvent, an anti-delamination agent, an antioxidant, a UV stabilizing agent, a thickening agent, and an ionic conductivity enhancing agent, wherein the anode color-changing material comprises a carbazole compound, and the carbazole compound is the carbazole compound according to any one of the foregoing embodiments.

In some embodiments, the cathode color-changing material is of a structure represented by Formula (11):

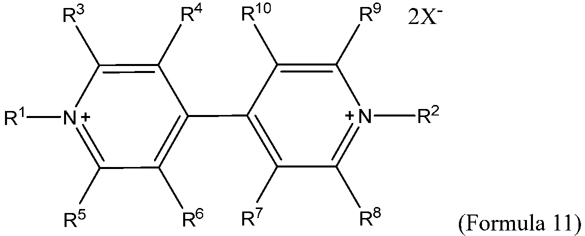

R¹ and R² each are independently a substituted or unsubstituted C₁-C₁₈ alkyl group, an alkenyl group, an alkynyl group, an aryl group, a monoaminealkyl or polyaminealkyl group, a monosubstituted haloalkyl or polysubstituted haloalkyl group, a monoalkyloxyalkyl or polyalkyloxyalkyl group, a phosphoniumalkyl group, a siloxyalkyl group, a pyridyl group, a pyrrolyl group, a furyl group, a pyranyl group, a thienyl group, a quinolinyl group, or an indoleyl group.

R³ to R¹⁰ each are independently H, OR₂₉, F, Cl, Br, I, CN, NO₂, a substituted or unsubstituted C₁-C₁₈ alkyl group, or an aryl group.

A definition of R₂₉ is the same as that according to any of the foregoing embodiments.

X⁻ is independently F⁻ , Cl⁻, Br⁻, I⁻, BF₄₋, PF₆₋, SbF₆₋, AsF₆₋, ClO₄₋, carboxylate, ClO₄₋, SO₃CF₃₋, N(CN)₂₋, N(CF₃SO₂)₂₋, C(CF₃SO₂)₃₋, N(SO₂C₂F₅)₂₋, Al(OC(CF₃)₃)₄₋, or BAr₄₋, where Ar is an aryl group.

In some embodiments, the solvent is at least one of a sulfone solvent, an amide solvent, an ether solvent, an alcohol solvent, a nitrile solvent, a ketone solvent, and an ester solvent.

In some embodiments, the sulfone solvent is at least one of 3-methylsulfolane and dimethylsulfoxide.

In some embodiments, the amide solvent is N,N-dimethylformamide.

In some embodiments, the ether solvent is tetraethylene glycol dimethyl ether.

In some embodiments, the alcohol solvent is ethoxyethanol.

In some embodiments, the nitrile solvent is at least one of acetonitrile, glutaronitrile, 3-hydroxypropionitrile, and 2-methylglutaronitrile.

In some embodiments, the ketone solvent is at least one of 2-acetylbutyrolactone and cyclopentanone.

In some embodiments, the ester solvent is at least one of β-propiolactone, γ-butyrolactone, γ-valrolactone, polypropylene carbonate, ethylene carbonate, and propylene carbonate.

In some embodiments, the anti-delamination agent is a polymer comprising an ester group. For example, the anti-delamination agent is at least one of polyacrylate, polymethacrylate, and polyaromatic ester. For another example, the anti-delamination agent is ethyl polyacrylate.

In some embodiments, the antioxidant is one of a phenolic compound, a sterically hindered amine compound, and an ester compound comprising double bonds. For example, the antioxidant is at least one of 1,3,5-tri-tert-butylphenol, 1,5-tert-butyl-3-methylphenol, 2-(2'-hydroxy-5'-methylphenyl)benzotriazole, 2-(2'-hydroxy-3'-tert-butyl-5'-methylphenyl) 5-chlorobenzotriazole, 2-(2'-hydroxy-3',5'-di-tert-butylphenyl), 5-chlorobenzotriazole, 2-(2'-hydroxy-3',5'-dipentylphenyl)benzotriazole, 2-(2'-hydroxy5'-tert-octylphenyl)benzotriazole, 2-(2'-hydroxy-3',5'-di-tert-butylphenyl)benzotriazole, bis(2,2,6,6-tetramethyl-4-piperidinyl) sebacate, 2,2,6,6-tetramethylpiperidine, di-tert-butylamine, methyl methacrylate, and ethyl methacrylate. For another example, the antioxidant is at least one of 2-(2'-hydroxy-5'-methylphenyl)benzotriazole, 1,5-tert-butyl-3-methylphenol, and methyl methacrylate.

In some embodiments, the UV stabilizing agent is at least one of 2-ethyl-2-cyano-3,3-diphenyl acrylate, acrylic acid (2-ethylhexyl)-2-cyano-3,3-diphenyl ester, 2-(2'-hydroxy-4'-methylphenyl)benzotriazole, 3-[3-(2H-benzotriazol-2-yl)-5-(1,1-dimethylethyl)-4-hydroxyphenyl]propionate amyl ester, 2,4-dihydroxybenzophenone, 2-hydroxy-4-methoxybenzophenone, and 2-ethyl-2'-ethoxypropionanilide, for example, 2-(2'-hydroxy-4'-methylphenyl)benzotriazole.

In some embodiments, the thickening agent is a high polymer. For example, the thickening agent is at least one of polyamide, polyimide, polycarbonate, polyester, polyether, polymethacrylate, polyacrylate, polysilane, polysiloxane, polyvinyl acetate, polymethacrylonitrile, polyacrylonitrile, polyvinyl phenol, polyvinyl alcohol, and polyvinylidene dihalide.

In some embodiments, a weight-average molecular weight of the high polymer ranges from 200,000 g/mol to 400,000 g/mol.

In some embodiments, the ionic conductivity enhancing agent is at least one of lithium trifluoromethanesulfonate, lithium perchlorate, lithium tetrafluoroborate, and lithium hexafluorophosphate, for example, lithium perchlorate.

In some embodiments, in the composition, concentration of the anode color-changing material ranges from 30 mM to 120 mM, and concentration of the cathode color-changing material ranges from 30 mM to 120 mM.

In some embodiments, the antioxidant content ranges from 20 mM to 500 mM, for example, ranges from 50 mM to 100 mM.

In some embodiments, concentration of the ionic conductivity enhancing agent ranges from 0.05 M to 0.5 M.

In some embodiments, based on total mass of the composition, content of the anti-delamination agent ranges from 1 wt% to 6 wt%, content of the UV stabilizing agent ranges from 1 wt% to 4 wt%, and content of the thickening agent ranges from 0.05 wt% to 3 wt%.

In some embodiments, an electrochromic device is further provided, comprising a cavity defined by a first conductive surface of a first substrate material, a second conductive surface of a second substrate material, and a sealing member connecting the first conductive surface and the second conductive surface. An electrochromic medium is disposed in the cavity.

In some embodiments, the electrochromic medium is the foregoing composition.

Specific implementations of the carbazole compound and composition, the preparation method therefor and application thereof, and the electrochromic device are as follows.

Endpoints of ranges and any values disclosed in this specification are not limited to the exact ranges or values. It will be understood that these ranges or values include values close to these ranges or values. For numerical ranges, endpoints of each range, endpoints of each range and individual points, and individual points can be combined with each other to obtain one or more new numerical ranges, and these numerical ranges shall be considered specifically disclosed in this specification.

Explanations of the terms in this application are as follows.

Halo means a halogen, namely, fluorine, chlorine, bromine, or iodine.

The alkyl group means a linear-chain or branched-chain alkyl group, excluding a cycloalkyl group. The C₁-C₁₈ alkyl group means an alkyl group having 1 to 18 carbon atoms, which, for example, comprises but is not limited to a methyl group, an ethyl group, an n-propyl group, an isopropyl group, an n-butyl group, an isobutyl group, a sec-butyl group, a tert-butyl group, an n-pentyl group, an isoamyl group, an n-hexyl group, and the like.

The carbocyclic group means a group comprising a cyclic chain, which, for example, comprises but is not limited to a cyclopropyl group, a cyclobutyl group, a cyclopentyl group, an aromatic group such as a phenyl group and a naphthyl group, and the like.

The heterocyclic group means a group having heteroatoms in a cyclic chain, which, for example, comprises but is not limited to a pyridyl group, a furyl group, or a thienyl group. For example, the heteroatoms include but are not limited to atoms such as oxygen, sulfur, nitrogen, and the like.

The alkenyl group means a linear-chain or branched-chain alkenyl group. The C₂-C₈ alkenyl group means an alkenyl group having 2 to 8 carbon atoms, which, for example, comprises but is not limited to 1-propenyl, 2-propenyl, and different butenyl, pentenyl and hexenyl isomers. The alkenyl group further comprises polyenes, such as 1,2-propadienyl and 2,4-hexadienyl.

The alkynyl group means a linear-chain or branched-chain alkynyl group. The C₂-C₈ alkynyl group means an alkynyl group having 2 to 8 carbon atoms, which, for example, comprises but is not limited to 1-propynyl, 2-propynyl, and different butynyl, pentynyl and hexynyl isomers. The alkynyl group further comprises a group comprising a plurality of triple bonds, such as 2,5-hexadiynyl.

The alkoxy group means a group having an oxygen atom attached to an end of a linear-chain or branched-chain alkyl group. The C₁-C₈ alkoxy group means an alkoxy group having 1 to 8 carbon atoms, which, for example, comprises but is not limited to a methoxy group, an ethoxy group, an n-propoxy group, an isopropoxy group, an n-butoxy group, and the like.

The phosphoniumalkyl group is a group represented by a general formula (R27)4P-, where R27 comprises an aryl group or a substituted or unsubstituted C₁-C₉ alkyl group.

The carboxylate means a carboxylate anion, which, for example, comprises but is not limited to formate, acetate, propionate, butyrate, or the like.

The monoaminealkyl or polyaminealkyl group, the monosubstituted haloalkyl or polysubstituted haloalkyl group, the monoalkyloxyalkyl or polyalkyloxyalkyl group, and the siloxyalkyl group mean groups formed through substitution of at least one hydrogen atom in an alkyl group or an alkoxy group with one or more amine groups, halogen atoms, alkoxy groups, and siloxy groups, respectively. When there are two or more amine groups, halogen atoms, alkoxy groups, and siloxy groups, the amine groups, halogen atoms, alkoxy groups, and siloxy groups may be the same or different.

As described above, the first aspect of this application provides a carbazole compound, where the carbazole compound is of a structure represented by Formula (1) or Formula (2):

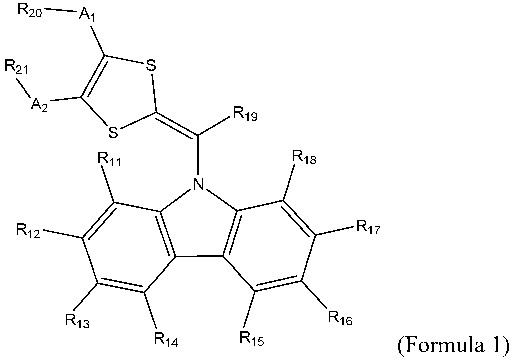

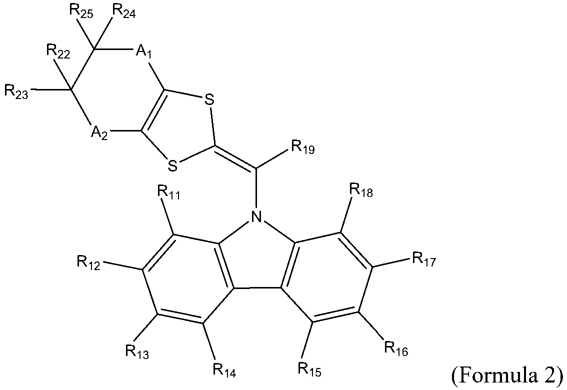

R₁₁, R₁₂, R₁₃, R₁₄, R₁₅, R₁₆, R₁₇, R₁₈, R₂₀, R₂₁, R₂₂, R₂₃, R₂₄, and R₂₅ each are independently H, OR₂₉, F, Cl, Br, I, CN, NO₂, an aryl group, a substituted or unsubstituted C₁-C₁₈ alkyl group, a substituted or unsubstituted amino group, or a substituted or unsubstituted C₂-C₁₈ nonaromatic heterocyclic group.

R₁₉ is H, an aryl group, a substituted or unsubstituted C₁-C₉ alkyl group, or a substituted or unsubstituted C₂-C₁₈ nonaromatic heterocyclic group.

R₂₉ is H, a substituted or unsubstituted C₁-C₁₈ alkyl group, a substituted or unsubstituted aryl group, a substituted or unsubstituted amino group, a substituted or unsubstituted C₂-C₁₈ nonaromatic heterocyclic group.

A₁ and A₂ each are independently N, N-R₂₆, O, or S.

R₂₆ is H, a substituted or unsubstituted alkyl group, a substituted or unsubstituted carbocyclic group, or a heterocyclic group.

In some implementations of this application, in some embodiments, R₁₁, R₁₂, R₁₃, R₁₄, R₁₅, R₁₆, R₁₇, R₁₈, R₂₀, R₂₁, R₂₂, R₂₃, R₂₄, and R₂₅ each are independently H, an aryl group, or a substituted or unsubstituted C₁-C₁₈ alkyl group.

R₁₉ is H, an aryl group, or a substituted or unsubstituted C₁-C₉ alkyl group.

R₂₉ is H, a substituted or unsubstituted C₁-C₉ alkyl group, or a substituted or unsubstituted aryl group.

R₂₆ is H, a substituted or unsubstituted alkyl group, a five-membered heterocyclic group, or a six-membered heterocyclic group, where the five-membered heterocyclic group or the six-membered heterocyclic group is a tetrahydropyran ring, a tetrahydrofuran ring, a tetrahydrothiophene ring, a tetrahydropyridine ring, a hexahydropyrrole ring, or a tetrahydrothione ring.

In some embodiments, R₁₉ is H or a substituted or unsubstituted C₁-C₉ alkyl group, where the alkyl group comprises no more than 4 consecutive methylene groups.

R₂₉ is H or a substituted or unsubstituted C₁-C₉ alkyl group.

R₂₆ is H, a substituted or unsubstituted alkyl group, a tetrahydropyran ring, a tetrahydrofuran ring, a tetrahydrothiophene ring, or a tetrahydropyridine ring.

In some embodiments, R₁₁ to R₁₉ and R₂₂ to R₂₆ are all hydrogen.

In some embodiments, the carbazole compound is one of Formula (3) to Formula (8):

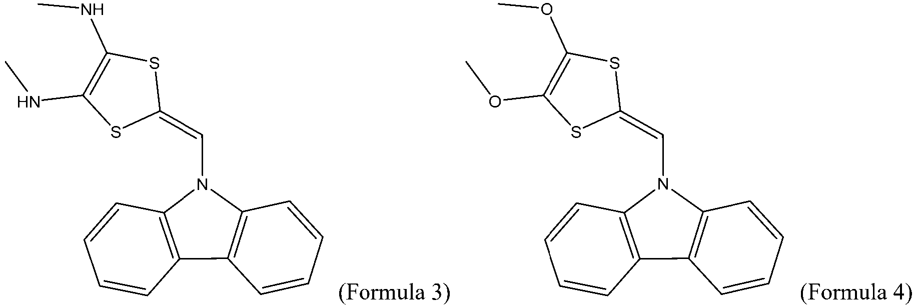

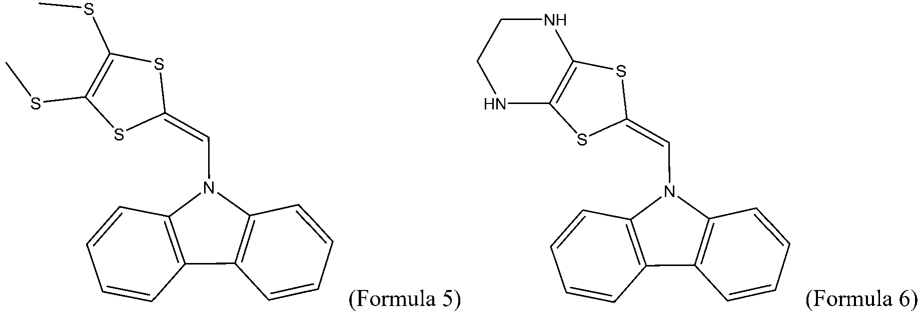

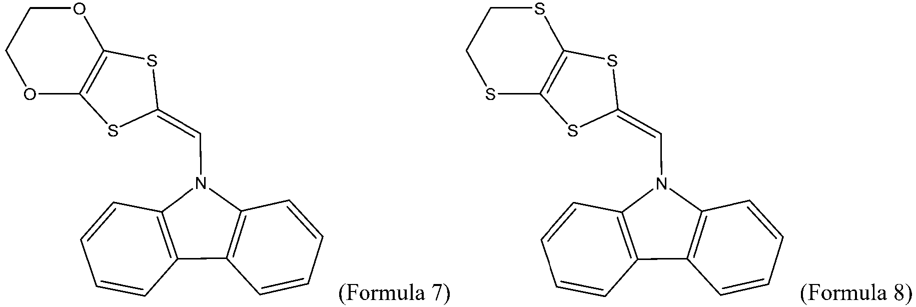

A second aspect of this application provides a preparation method for a carbazole compound, wherein the method comprises:
(1) uniformly mixing sodium hydride, carbazole, and a carbonyl compound at a first temperature in the presence of a solvent, to obtain a mixed solution; and
(2) heating the mixed solution to a second temperature for reaction, and performing purification treatment, to obtain the carbazole compound.

In some embodiments, in step (1), the carbonyl compound is of a structure represented by Formula (9) or Formula (10):

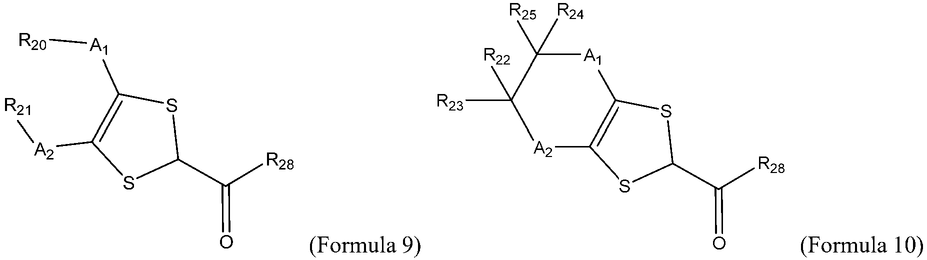

R₂₈ is H, an aryl group, or a substituted or unsubstituted C₁-C₉ alkyl group.

Definitions of R₂₀, R₂₁, R₂₂, R₂₃, R₂₄, R₂₅, A₁, and A₂ are correspondingly the same as those according to the first aspect of this application.

In some embodiments, in step (1), the solvent is N,N-dimethylformamide, dimethylsulfoxide (DMSO), chloroform, or acetonitrile.

In some embodiments, in step (1), a molar ratio of the carbazole to the sodium hydride is 1:(1 to 1.5). This molar ratio range enables technical effect of a sufficient reaction of the carbazole and generation of sufficient reaction intermediates to be achieved in step (1).

In some embodiments, a molar ratio of the carbazole to the carbonyl compound is 1:(1 to 2). This molar ratio range enables technical effect of a sufficient reaction of the reaction intermediates and maximized yield of the carbazole compound to be achieved in step (2).

In some embodiments, the first temperature ranges from -5°C to 0°C. This temperature range enables technical effect of lowering a temperature of the mixed solution so that substances therein do not eject outward and losses of reactants and products are reduced to be achieved in step (1).

In some embodiments, in step (2), a process of the purification treatment comprises: slowly dropwise adding 1 mol/L of a hydrochloric acid solution into a mixture obtained through the reaction, to adjust pH of the mixture to 1; and after 1 h of a full reaction, extracting the solution with ethyl acetate, concentrating the solution, and separating and purifying the solution through silica gel column chromatography, to obtain a product anode electrochromic material.

In some embodiments, in step (2), the second temperature ranges from 60°C to 90°C. This temperature range enables technical effect of a sufficient reaction and maximized yield of the carbazole compound to be achieved in step (2).

In some embodiments, time of the reaction ranges from 8 h to 12 h. This reaction time range enables technical effect of a sufficient reaction and maximized yield of the carbazole compound to be achieved in step (2).

A third aspect of this application provides a carbazole compound prepared based on the method according to the second aspect of this application.

A fourth aspect of this application provides application of the carbazole compound according to the first aspect of this application and/or the carbazole compound according to the third aspect in an electrochromic medium.

A fifth aspect of this application provides a composition, comprising a cathode color-changing material, an anode color-changing material, a solvent, an anti-delamination agent, an antioxidant, a UV stabilizing agent, a thickening agent, and an ionic conductivity enhancing agent, where the anode color-changing material comprises a carbazole compound, and the carbazole compound is the carbazole compound according to the first aspect of this application.

In some embodiments, the cathode color-changing material is of a structure represented by Formula (11):

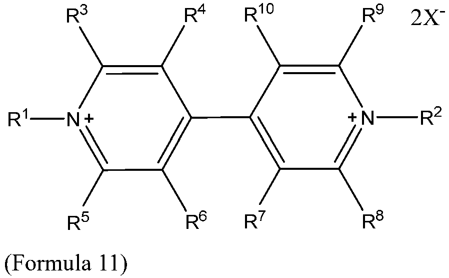

R¹ and R² each are independently a substituted or unsubstituted C₁-C₁₈ alkyl group, an alkenyl group, an alkynyl group, an aryl group, a monoaminealkyl or polyaminealkyl group, a monosubstituted haloalkyl or polysubstituted haloalkyl group, a monoalkyloxyalkyl or polyalkyloxyalkyl group, a phosphoniumalkyl group, a siloxyalkyl group, a pyridyl group, a pyrrolyl group, a furyl group, a pyranyl group, a thienyl group, a quinolinyl group, or an indoleyl group.

R³ to R¹⁰ each are independently H, OR₂₉ F, Cl, Br, I, CN, NO₂, a substituted or unsubstituted C₁-C₁₈ alkyl group, or an aryl group.

A definition of R₂₉ is the same as that according to the first aspect of this application.

X⁻ is independently F⁻, Cl⁻, Br⁻, I⁻, BF₄⁻, PF₆⁻, SbF₆⁻, AsF₆⁻, ClO₄⁻, carboxylate, ClO₄⁻, SO₃CF₃⁻, N(CN)₂⁻, N(CF₃SO₂)₂⁻, C(CF₃SO₂)₃⁻, N(SO₂C₂F₅)₂⁻, Al(OC(CF₃)₃)₄⁻, or BAr₄⁻, where Ar is an aryl group.

In some embodiments, the solvent is at least one of a sulfone solvent, an amide solvent, an ether solvent, an alcohol solvent, a nitrile solvent, a ketone solvent, and an ester solvent.

In some embodiments, the sulfone solvent is at least one of 3-methylsulfolane and dimethylsulfoxide.

In some embodiments, the amide solvent is N,N-dimethylformamide.

In some embodiments, the ether solvent is tetraethylene glycol dimethyl ether.

In some embodiments, the alcohol solvent is ethoxyethanol.

In some embodiments, the nitrile solvent is at least one of acetonitrile, glutaronitrile, 3-hydroxypropionitrile, and 2-methylglutaronitrile. In some embodiments, the ketone solvent is at least one of 2-acetylbutyrolactone and cyclopentanone.

In some embodiments, the ester solvent is at least one of β-propiolactone, γ-butyrolactone, γ-valrolactone, polypropylene carbonate, ethylene carbonate, and propylene carbonate.

In some embodiments, the anti-delamination agent is a polymer comprising an ester group. For example, the anti-delamination agent is at least one of polyacrylate, polymethacrylate, and polyaromatic ester. For example, the anti-delamination agent is ethyl polyacrylate.

In some embodiments, the antioxidant is one of a phenolic compound, a sterically hindered amine compound, and an ester compound comprising double bonds. For example, the antioxidant is at least one of 1,3,5-tri-tert-butylphenol, 1,5-tert-butyl-3-methylphenol, 2-(2'-hydroxy-5'-methylphenyl)benzotriazole, 2-(2'-hydroxy-3'-tert-butyl-5'-methylphenyl) 5-chlorobenzotriazole, 2-(2'-hydroxy-3',5'-di-tert-butylphenyl), 5-chlorobenzotriazole, 2-(2'-hydroxy-3',5'-dipentylphenyl)benzotriazole, 2-(2'-hydroxy5'-tert-octylphenyl)benzotriazole, 2-(2'-hydroxy-3',5'-di-tert-butylphenyl)benzotriazole, bis(2,2,6,6-tetramethyl-4-piperidinyl) sebacate, 2,2,6,6-tetramethylpiperidine, di-tert-butylamine, methyl methacrylate, and ethyl methacrylate. For example, the antioxidant is at least one of 2-(2'-hydroxy-5'-methylphenyl)benzotriazole, 1,5-tert-butyl-3-methylphenol, and methyl methacrylate.

In some embodiments, the UV stabilizing agent is at least one of 2-ethyl-2-cyano-3,3-diphenyl acrylate, acrylic acid (2-ethylhexyl)-2-cyano-3,3-diphenyl ester, 2-(2'-hydroxy-4'-methylphenyl)benzotriazole, 3-[3-(2H-benzotriazol-2-yl)-5-(1,1-dimethylethyl)-4-hydroxyphenyl]propionate amyl ester, 2,4-dihydroxybenzophenone, 2-hydroxy-4-methoxybenzophenone, and 2-ethyl-2'-ethoxypropionanilide, for example, 2-(2'-hydroxy-4'-methylphenyl)benzotriazole.

In some embodiments, the thickening agent is a high polymer. For example, the thickening agent is at least one of polyamide, polyimide, polycarbonate, polyester, polyether, polymethacrylate, polyacrylate, polysilane, polysiloxane, polyvinyl acetate, polymethacrylonitrile, polyacrylonitrile, polyvinyl phenol, polyvinyl alcohol, and a polymer comprising vinylidene dihalide. A weight-average molecular weight of the high polymer ranges from 200,000 g/mol to 400,000 g/mol.

In some embodiments, the ionic conductivity enhancing agent is at least one of lithium trifluoromethanesulfonate, lithium perchlorate, lithium tetrafluoroborate, and lithium hexafluorophosphate, for example, lithium perchlorate.

In some embodiments, in the composition, concentration of the anode color-changing material ranges from 30 mM to 120mM, and this concentration range enables the electrochromic device to achieve technical effect of color changing; concentration of the cathode color-changing material ranges from 30 mM to 120mM, and this concentration range enables the electrochromic device to achieve technical effect of color changing; content of the antioxidant ranges from 20 mM to 500 mM, for example, ranges from 50 mM to 100 mM, and this content range enables the electrochromic device to achieve technical effect of prolonging a service life; and concentration of the ionic conductivity enhancing agent ranges from 0.05 M to 0.5 M, and this concentration range enables the electrochromic device to achieve technical effect of rapid color changing.

In some embodiments, based on total mass of the composition, content of the anti-delamination agent ranges from 1 wt% to 6 wt%, and this content range enables the electrochromic device to achieve technical effect of uniform color changing; content of the UV stabilizing agent ranges from 1 wt% to 4 wt%, and this content range enables the electrochromic device to achieve technical effect of prolonging the service life; and content of the thickening agent ranges from 0.05 wt% to 3 wt%.

A sixth aspect of this application provides an electrochromic device, comprising a cavity defined by a first conductive surface of a first substrate material, a second conductive surface of a second substrate material, and a sealing member connecting the first conductive surface and the second conductive surface. An electrochromic medium is disposed in the cavity.

The electrochromic medium is the composition according to the fifth aspect of this application.

The following describes this application in detail by using embodiments. In the following embodiments, compounds represented by Formula (3) to Formula (8) are structurally characterized by nuclear magnetic resonance and mass spectrometry.

### Example 28

A preparation method for a compound represented by Formula (3) is as follows.

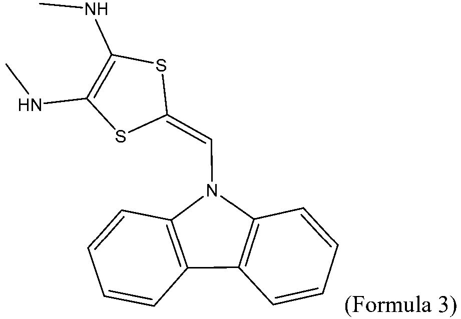

3 g of sodium hydride, 16.7 g of carbazole, and 19 g of 2-formyl-4,5-dimethylamino-1,3-dithiol (carbonyl compound) are uniformly mixed in an ice water bath (first temperature) in the presence of 500 g of DMF (solvent), to obtain a mixed solution.

The ice water bath is removed. The mixed solution is heated to 60°C to 90°C (second temperature) to continue a reaction of condensation reflux for 8 h to 12 h. After the reaction is completed, purification treatment is performed: 1 mol/L of a hydrochloric acid solution is slowly dropwise added into a mixture that completed the reaction, to adjust pH of the mixture to 1. After 1 h of a full reaction, the solution is extracted with ethyl acetate, concentrated, and separated and purified through silica gel column chromatography, to obtain the compound represented by Formula (3), namely, a crude anode electrochromic material. The crude product is recrystallized with an acetonitrile-dichloromethane mixed solution, to obtain a refined anode electrochromic material.

### Example 29

A preparation method for a compound represented by Formula (4) is as follows.

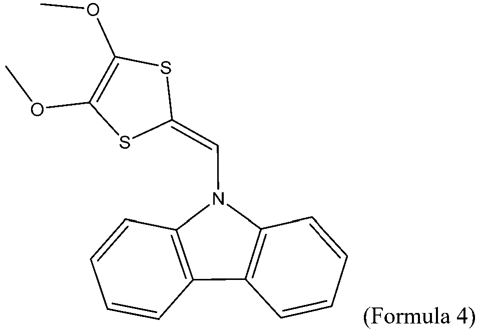

3 g of sodium hydride, 16.7 g of carbazole, and 19.2 g of 2-formyl-4,5-dimethoxy-1,3-dithiol (carbonyl compound) are uniformly mixed in an ice water bath (first temperature) in the presence of 500 g of DMF (solvent), to obtain a mixed solution.

The ice water bath is removed. The mixed solution is heated to 60°C to 90°C (second temperature) to continue a reaction of condensation reflux for 8 h to 12 h. After the reaction is completed, purification treatment is performed: 1 mol/L of a hydrochloric acid solution is slowly dropwise added into a mixture that completed the reaction, to adjust pH of the mixture to 1. After 1 h of a full reaction, the solution is extracted with ethyl acetate, concentrated, and separated and purified through silica gel column chromatography, to obtain the compound represented by Formula (4), namely, a crude anode electrochromic material. The crude product is recrystallized with an acetonitrile-dichloromethane mixed solution, to obtain a refined anode electrochromic material.

### Example 30

A preparation method for a compound represented by Formula (5) is as follows.

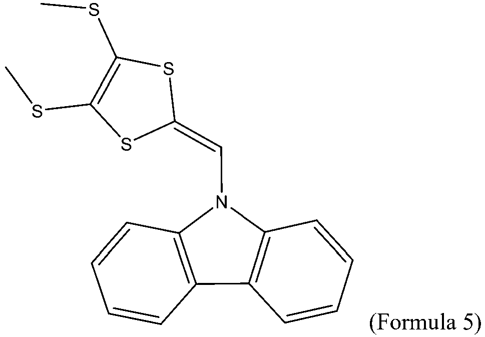

3 g of sodium hydride, 16.7 g of carbazole, and 22.4 g of 2-formyl-4,5-dimethylthio-1,3-dithiol (carbonyl compound) are uniformly mixed in an ice water bath (first temperature) in the presence of 500 g of DMF (solvent), to obtain a mixed solution.

The ice water bath is removed. The mixed solution is heated to 60°C to 90°C (second temperature) to continue a reaction of condensation reflux for 8 h to 12 h. After the reaction is completed, purification treatment is performed: 1 mol/L of a hydrochloric acid solution is slowly dropwise added into a mixture that completed the reaction, to adjust pH of the mixture to 1. After 1 h of a full reaction, the solution is extracted with ethyl acetate, concentrated, and separated and purified through silica gel column chromatography, to obtain the compound represented by Formula (5), namely, a crude anode electrochromic material. The crude product is recrystallized with an acetonitrile-dichloromethane mixed solution, to obtain a refined anode electrochromic material.

### Example 31

A preparation method for a compound represented by Formula (6) is as follows.

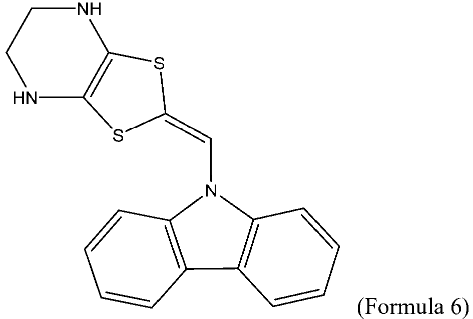

3 g of sodium hydride, 16.7 g of carbazole, and 18.8 g of 2-formyl-3,4,5,6-tetrahydro-1,3-dithio[4,5-b]pyrazine (carbonyl compound) are uniformly mixed in an ice water bath (first temperature) in the presence of 500 g of DMF (solvent), to obtain a mixed solution.

The ice water bath is removed. The mixed solution is heated to 60°C to 90°C (second temperature) to continue a reaction of condensation reflux for 8 h to 12 h. After the reaction is completed, purification treatment is performed: 1 mol/L of a hydrochloric acid solution is slowly dropwise added into a mixture that completed the reaction, to adjust pH of the mixture to 1. After 1 h of a full reaction, the solution is extracted with ethyl acetate, concentrated, and separated and purified through silica gel column chromatography, to obtain the compound represented by Formula (6), namely, a crude anode electrochromic material. The crude product is recrystallized with an acetonitrile-dichloromethane mixed solution, to obtain a refined anode electrochromic material.

### Example 32

A preparation method for a compound represented by Formula (7) is as follows.

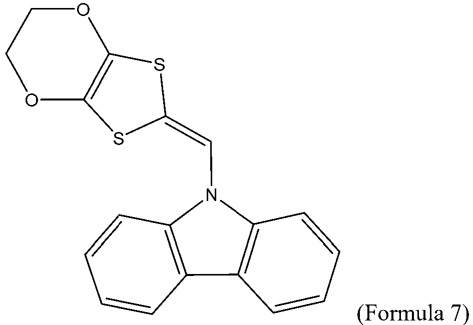

3 g of sodium hydride, 16.7 g of carbazole, and 18.9 g of 2-formyl-5,6-dihydro-1,3-dithio[4,5-b]dioxin (carbonyl compound) are uniformly mixed in an ice water bath (first temperature) in the presence of 500 g of DMF (solvent), to obtain a mixed solution.

The ice water bath is removed. The mixed solution is heated to 60°C to 90°C (second temperature) to continue a reaction of condensation reflux for 8 h to 12 h. After the reaction is completed, purification treatment is performed: 1 mol/L of a hydrochloric acid solution is slowly dropwise added into a mixture that completed the reaction, to adjust pH of the mixture to 1. After 1 h of a full reaction, the solution is extracted with ethyl acetate, concentrated, and separated and purified through silica gel column chromatography, to obtain the compound represented by Formula (7), namely, a crude anode electrochromic material. The crude product is recrystallized with an acetonitrile-dichloromethane mixed solution, to obtain a refined anode electrochromic material.

### Example 33

A preparation method for a compound represented by Formula (8) is as follows.

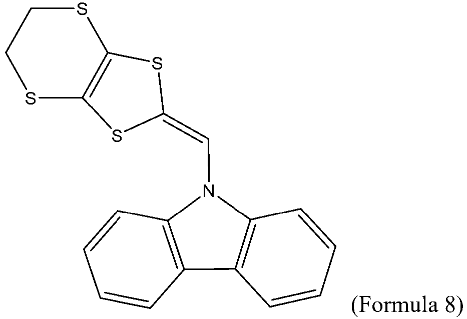

3 g of sodium hydride, 16.7 g of carbazole, and 22.2 g of 2-formyl-5,6-dihydro-1,3-dithio[4,5-b]dithiophene (carbonyl compound) are uniformly mixed in an ice water bath (first temperature) in the presence of 500 g of DMF (solvent), to obtain a mixed solution.

The ice water bath is removed. The mixed solution is heated to 60°C to 90°C (second temperature) to continue a reaction of condensation reflux for 8 h to 12 h. After the reaction is completed, purification treatment is performed: 1 mol/L of a hydrochloric acid solution is slowly dropwise added into a mixture that completed the reaction, to adjust pH of the mixture to 1. After 1 h of a full reaction, the solution is extracted with ethyl acetate, concentrated, and separated and purified through silica gel column chromatography, to obtain the compound represented by Formula (8), namely, a crude anode electrochromic material. The crude product is recrystallized with an acetonitrile-dichloromethane mixed solution, to obtain a refined anode electrochromic material.

### Preparation of electrochromic media:

The compounds represented by Formula (3) to Formula (8) and carbazole are separately used as an anode color-changing material at concentration of 60 mM to prepare a plurality of electrochromic media (where the electrochromic medium is the composition in this application). In addition, the electrochromic medium further includes 60 mM of a cathode electrochromic material, namely, a compound represented by Formula (11-1), 0.1 M of lithium perchlorate, 4 wt% of ethyl polyacrylate (with a weight-average molecular weight of 300,000 g/mol), 3 wt% of 2-(2'-hydroxy-4'-methylphenyl)benzotriazole, 50 mM of 1,5-tert-butyl-3-methylphenol, 1 wt% of PVDF (with a weight-average molecular weight of 300,000 g/mol), and a balance of propylene carbonate.

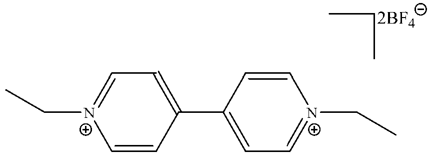

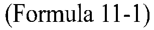

### Color-changing performance test

The plurality of electrochromic media prepared above are separately used to form an electrochromic device with device specifications being 40 mm in length and 40 mm in width. Coloring response time and fading response time of each electrochromic device are tested at a test voltage of 1.3 V. Test results are shown in Table 9. It is found from the experiment that the electrochromic media comprising the compounds represented by Formula (3) to Formula (8) have faster color-changing speeds and fading speeds than the electrochromic medium comprising carbazole.

**Table 9**

| | Color-changing time/s | Fading time (power-off)/s |
|---|---|---|
| Compound represented by Formula (3) | 2.6 | 14.3 |
| Compound represented by Formula (4) | 3.0 | 17.8 |
| Compound represented by Formula (5) | 2.4 | 13.8 |
| Compound represented by Formula (6) | 2.5 | 15.1 |
| Compound represented by Formula (7) | 3.2 | 15.8 |
| Compound represented by Formula (8) | 2.3 | 14.7 |
| Carbazole | 3.8 | 22.1 |

### Cycle life test

The plurality of electrochromic media prepared above are made into electrochromic devices (where a first transparent conductive substrate and a second transparent conductive substrate are glass plates plated with ITO layers, a connection layer is a frame seal, a thickness of accommodation space is 62 µm, and transmittance of a single ITO glass plate is 92%). A length and a width of the electrochromic device are both 40 mm. At a test voltage of 1.3 V, after cycles, a difference ΔT between light transmittance of each electrochromic device in a visible light range before a color change and light transmittance of each electrochromic device in the visible light range after the color change is tested. Test results are shown in Table 10. Applying a voltage of 1.3 V for 5s power on and applying a voltage of 0 V for 10s is a cycle. Statuses of the device before and after the cycle are observed, the transmittance of the device is measured, and contrast before and after the color change (ΔT=T_{V}=0-T_{V}=_{1.3}) is calculated. It is found from the experiment that decay of color-changing performance of the electrochromic media comprising the compounds represented by Formula (3) to Formula (8) is clearly slowed down compared with that of color-changing performance of the electrochromic medium comprising carbazole, which directly shows clear improvement in the cycle life.

**Table 10**

| | 0 power-on cycles | | | 20,000 power-on cycles | | | 50,000 power-on cycles | | |
|---|---|---|---|---|---|---|---|---|---|
| | T_{V}=1.3 | T_{V=0} | ΔT | T_{V}=1.3 | T_{V=0} | ΔT | T_{V}=1.3 | T_{V}=0 | ΔT |
| Compound represented by Formula (3) | 6.0 | 66.1 | 60.1 | 7.8 | 59.6 | 51.8 | 9.1 | 50.2 | 41.1 |
| Compound represented by Formula (4) | 5.8 | 65.7 | 59.9 | 6.3 | 63.1 | 56.8 | 7.2 | 60.4 | 53.2 |
| Compound represented by Formula (5) | 6.0 | 66.1 | 60.2 | 6.2 | 64.5 | 58.3 | 6.9 | 61.8 | 54.9 |
| Compound represented by Formula (6) | 5.9 | 66.2 | 60.3 | 8.1 | 58.3 | 50.2 | 10 | 45.6 | 35.6 |
| Compound represented by Formula (7) | 6.3 | 66.1 | 59.8 | 6.8 | 63.8 | 57 | 7.7 | 60.8 | 53.1 |
| Compound represented by Formula (8) | 6.1 | 66.1 | 60.0 | 6.4 | 64.1 | 57.7 | 7.2 | 61.9 | 54.7 |
| Carbazole | 6.8 | 65.8 | 59.0 | 9 | 55.1 | 46.1 | 15.2 | 43.3 | 28.1 |

It can be seen from Table 9 that the electrochromic devices made of the electrochromic medium comprising the compounds represented by Formula (3) to Formula (8) clearly have faster response speeds (color-changing time and fading time) than that made of the electrochromic medium comprising carbazole, and show better color-changing effect. It can be seen from Table 10 that after 20,000 power-on cycles and 50,000 power-on cycles, differences ΔT between light transmittance of the electrochromic devices made of the electrochromic medium comprising the compounds represented by Formula (3) to Formula (8) in the visible light range before the color change and light transmittance of the electrochromic devices made of the electrochromic medium comprising the compounds represented by Formula (3) to Formula (8) in the visible light range after the color change are all greater than that of the electrochromic device made of the electrochromic medium comprising carbazole. This proves that the electrochromic device made of the compound prepared in embodiments of this application has better color-changing effect than the electrochromic device made of carbazole in terms of cycle life.

In some embodiments, this application further provides a light intensity adjustment device and application thereof.

A light intensity adjustment device is provided, and the light intensity adjustment device comprises a first substrate layer (1), a first conductive layer (Ad), a functional layer (13d), a second conductive layer (Bd), and a second substrate layer (12d) that are sequentially stacked from top to bottom.

A lower surface of the first conductive layer (Ad) is bonded with a first electrical conductor (5d), a frame seal layer (7d), and an insulation layer (6d), and a lower surface of the insulation layer (6d) is bonded with a second electrical conductor (8d). The second electrical conductor (8d) and the first electrical conductor (5d) are spaced apart from each other, so that the insulation layer (6d), the second electrical conductor (8d), and the first electrical conductor (5d) enclose and form a cavity. A cross section of the second electrical conductor (8d) and/or a cross section of the first electrical conductor (5d) in a horizontal direction are/is L-shaped, and the functional layer (13d) and the second conductive layer (Bd) are located in the cavity.

The frame seal layer (7d), the second conductive layer (Bd), and the first conductive layer (Ad) enclose and form a cavity for filling a light adjustment agent, to form the functional layer (13d).

The second conductive layer (Bd) is isolated from the first electrical conductor (5d) through the frame seal layer (7d), and the second conductive layer (Bd) is in contact with the second electrical conductor (8d). The first electrical conductor (5d) and the second electrical conductor (8d) are configured to connect to a power supply, so that the power supply, the first electrical conductor (5d), the first conductive layer (Ad), the functional layer (13d), the second conductive layer Bd, and the second electrical conductor (8d) form a series-connected current loop.

In some embodiments, the cross sections of the second electrical conductor (8d) and the first electrical conductor (5d) in the horizontal direction are both L-shaped, and are arranged in an inverted manner relative to each other; and/or
the first conductive layer (Ad) comprises a first bottom layer (2d) and a first conductive layer (3d) that are sequentially stacked from top to bottom, where the first conductive layer (3d) is bonded to an upper surface of the functional layer (13d); and/or
the second conductive layer (Bd) comprises a third conductive layer (10d) and a second bottom layer (11d) that are sequentially stacked from top to bottom, where the third conductive layer (10d) is bonded to a lower surface of the functional layer (13d); and/or
the power supply, the first electrical conductor (5d), the first bottom layer (2d), the first conductive layer (3d), the functional layer (13d), the third conductive layer (10d), the second bottom layer (11d), and the second electrical conductor (8d) form a series-connected current loop.

In some embodiments, the first conductive layer (Ad) comprises the first bottom layer (2d), the first conductive layer (3d), and a first protective layer (4d) that are sequentially bonded from top to bottom, where the protective layer (4d) is bonded to the upper surface of the functional layer (13d); and/or
the second conductive layer (Bd) comprises a second protective layer (9d), the third conductive layer (10d), and the second bottom layer (11d) that are sequentially bonded from top to bottom, where the second protective layer (9d) is bonded to the lower surface of the functional layer (13d); and/or
the power supply, the first electrical conductor (5d), the first bottom layer (2d), the first conductive layer (3d), the first protective layer (4d), the functional layer (13d), the second protective layer (9d), the third conductive layer (10d), the second bottom layer (11d), and the second electrical conductor (8d) form a series-connected current loop.

In some embodiments, materials of the first bottom layer (2d) and the second bottom layer (11d) each are at least one of titanium dioxide, tantalum pentoxide, niobium pentoxide, silicon dioxide, and magnesium fluoride, for example, niobium pentoxide.

Thicknesses of the first bottom layer (2d) and the second bottom layer (11d) each range from 30 nm to 12d0 nm, for example, range from 30 nm to 50 nm.

In some embodiments, materials of the first conductive layer (3d) and the third conductive layer (10d) each are at least one of indium tin oxide, tin oxide, antimony-doped tin oxide, fluorine-doped tin oxide, antimony-doped zinc oxide, and aluminum-doped zinc oxide, for example, indium tin oxide.

Thicknesses of the first conductive layer (3d) and the third conductive layer (10d) each range from 50 nm to 500 nm, for example, range from 80 nm to 150 nm.

In some embodiments, materials of the first protective layer (4d) and the second protective layer (9d) each are at least one of titanium, silver, aluminum, platinum, iridium, rhodium, ruthenium, and copper, for example, titanium and/or platinum; and/or

Thicknesses of the first protective layer (4d) and the second protective layer (9d) each range from 5 nm to 50 nm.

In some embodiments, materials of the first electrical conductor (5d) and the second electrical conductor (8d) each are at least one of metallic silver, metallic copper, silver paste, conductive adhesive, and conductive ink, for example, silver paste.

Thicknesses of the first electrical conductor (5d) and the second electrical conductor (8d) each range from 40 µm to 1000 µm, for example, range from 50 µm to 200 µm; and widths of the first electrical conductor (5d) and the second electrical conductor (8d) each range from 1 mm to 3 mm.

In some embodiments, a material of the frame seal layer (7d) is at least one of phenolic resin, epoxy resin, and organic silica gel adhesive, for example, epoxy resin; and/or
a thickness of the frame seal layer (7d) ranges from 70 µm to 250 µm and a width of the frame seal layer (7d) ranges from 1.2 mm to 4 mm; and in some embodiments, the thickness ranges from 100 µm to 150 µm and the width ranges from 1.8 mm to 2.2 mm.

In some embodiments, the functional layer (13d) is disposed as a light intensity adjustment functional layer. In some embodiments, a material of the functional layer (13d) comprises a cathode color-changing material, an anode color-changing material, a solvent, and an optional auxiliary agent.

In some embodiments, the auxiliary agent is at least one of an anti-delamination agent, a thickening agent, an electrolyte, an antioxidant, and an anti-ultraviolet agent.

In some embodiments, the cathode color-changing material is at least one of viologen, substituted viologen, anthraquinone, and substituted anthraquinone, for example, methyl viologen; and/or concentration of the cathode color-changing material ranges from 10 mmol/L to 300 mmol/L, for example, ranges from 50 mmol/L to 80 mmol/L; and/or
the anode color-changing material is at least one of diphenylamine, substituted diphenylamine, an N-substituted compound of diphenylamine, triphenylamine, substituted triphenylamine, ferrocene, substituted ferrocene, ferrocene salt, substituted ferrocene salt, phenothiazine, substituted phenothiazine, thianthrene, substituted thianthrene, phenazine, substituted phenazine, 5,10-dihydrophenazine, and substituted 5,10-dihydrophenazine, for example, at least one of an N-substituted compound of diphenylamine, substituted phenothiazine, and substituted 5,10-dihydrophenazine; and/or concentration of the anode color-changing material ranges from 10 mmol/L to 300 mmol/L, for example, ranges from 60 mmol/L to 100 mmol/L; and/or
the solvent is at least one of sulfone, amide, ether, alcohol, nitrile, ketone, and ester, for example, at least one of 3-methylsulfolane, dimethylsulfoxide, dimethylformamide, tetraethylene glycol dimethyl ether, ethoxyethanol, acetonitrile, glutaronitrile, 3-hydroxypropionitrile, 2-methylglutaronitrile, 2-acetylbutyrolactone, cyclopentanone, β-propiolactone, γ-butyrolactone, γ-valrolactone, polypropylene carbonate, ethylene carbonate, and propylene carbonate; and for another example, at least one of propylene carbonate, dimethylsulfoxide, and dimethylformamide; and/or
the anti-delamination agent is at least one of polyacrylate, polymethacrylate, and polyaromatic ester, for example, polymethyl methacrylate; and/or concentration of the anti-delamination agent ranges from 1 wt% to 6 wt%, for example, ranges from 4 wt% to 6 wt%; and/or
the thickening agent is at least one of polyamide, polyimide, polycarbonate, polymethacrylate, polyacrylate, polysilane, polysiloxane, polyvinyl acetate, polymethacrylonitrile, polyacrylonitrile, polyvinyl phenol, polyvinyl alcohol, and polyvinylidene dihalide, for example, polyvinylidene difluoride; and/or content of the thickening agent ranges from 0.05 wt% to 3 wt%, for example, ranges from 0.05 wt% to 1.5 wt%; and/or
the electrolyte comprises at least one of lithium trifluoromethanesulfonate, lithium perchlorate, lithium tetrafluoroborate, and lithium hexafluorophosphate, for example, lithium tetrafluoroborate; and/or concentration of the electrolyte ranges from 0.05 mol/L to 1 mol/L; and
the antioxidant is at least one of 2-(2'-hydroxy-5'-methylphenyl)benzotriazole, 1,5-tert-butyl-3-methylphenol, and methyl methacrylate; and/or concentration of the antioxidant ranges from 20 mmol/L to 500 mmol/L, for example, ranges from 50 mmol/L to 100 mmol/L; and/or
the anti-ultraviolet agent is at least one of 2-ethyl-2-cyano-3,3-diphenyl acrylate, acrylic acid (2-ethylhexyl)-2-cyano-3,3-diphenyl ester, 2-(2'-hydroxy-4'-methylphenyl)benzotriazole, 3-[3-(2H-benzotriazol-2-yl)-5-(1, 1-dimethylethyl)-4-hydroxyphenyl]propionate amyl ester, 2,4-dihydroxybenzophenone, 2-hydroxy-4-methoxybenzophenone, and 2-ethyl-2'-ethoxypropionanilide, for example, 2-hydroxy-4-methoxybenzophenone; and/or content of the anti-ultraviolet agent ranges from 1 wt% to 4 wt%, for example, ranges from 3 wt% to 4 wt%.

In some embodiments, this application further provides application of the light intensity adjustment device in preparing at least one of a glass curtain wall, an architectural glass window, a vehicle-mounted glass product, an eyeglass lens, a mobile phone screen, and a mobile phone film.

Specific implementations of the light intensity adjustment device and application thereof are as follows.

The following describes in detail the specific implementations of this application with reference to the accompanying drawings. It will be understood that the specific implementations described herein are merely used to describe and explain this application, but are not intended to limit this application.

In this application, orientation terms such as an upper direction, a lower direction, and a horizontal direction are all intended for ease of description and limitation, and generally mean an upper direction and a lower direction shown in the accompanying drawings. The horizontal direction generally means a left-right direction of substantially horizontal paper shown in the drawings. However, this application is not limited to this implementation.

As shown in FIG. 16 to FIG. 18, this application provides a light intensity adjustment device. The light intensity adjustment device comprises a first substrate layer 1d, a first conductive layer Ad, a functional layer 13d, a second conductive layer Bd, and a second substrate layer 12d that are sequentially stacked from top to bottom.

A lower surface of the first conductive layer Ad is bonded with a first electrical conductor 5d, a frame seal layer 7d, and an insulation layer 6d, and a lower surface of the insulation layer 6d is bonded with a second electrical conductor 8d. The second electrical conductor 8d and the first electrical conductor 5d are spaced apart from each other, so that the insulation layer 6d, the second electrical conductor 8d, and the first electrical conductor 5d enclose and form a cavity. A cross section of the second electrical conductor 8d and/or a cross section of the first electrical conductor 5d in a horizontal direction are/is L-shaped, and the functional layer 13d, the second conductive layer Bd, and the second substrate layer 12d are located in the cavity.

The frame seal layer 7d, the second conductive layer Bd, and the first conductive layer Ad enclose and form a cavity for filling a light adjustment agent, to form the functional layer.

The second conductive layer Bd is isolated from the first electrical conductor 5d through the frame seal layer 7d, and the second conductive layer Bd is bonded to the second electrical conductor 8d. The first electrical conductor 5d and the second electrical conductor 8d are configured to connect to a power supply, so that the power supply, the first electrical conductor 5d, the first conductive layer Ad, the functional layer 13d, the second conductive layer Bd, and the second electrical conductor 8d form a series-connected current loop. In this application, orientation terms such as "upper" and "lower" are all intended for ease of description and limitation, but this application is not limited to this implementation.

In this application, the first electrical conductor 5d and the second electrical conductor 8d are connected to the power supply to form the current loop, so that coloring or fading is implemented by switching the power supply between a connected state and a disconnected state, and light intensity adjustment is implemented by changing, for example, a power supply voltage. In existing devices, conductive portions connected to a power supply mostly employ type-I-I connection. As a result, a response speed of the device is slow, and color-changing extends from an edge to the middle at a slow speed, which affects user experience. In this application, a type-L-L wiring conductive method is used, specifically as shown in FIG. 16 to FIG. 18, so that a response speed of the device can be significantly improved, and user experience can be enhanced.

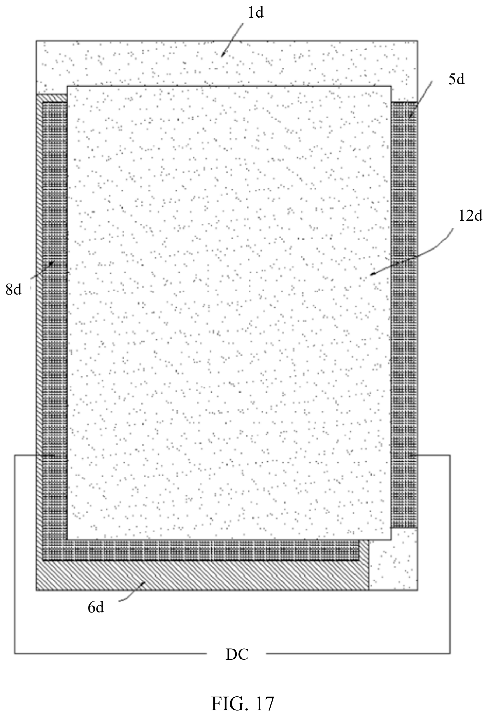

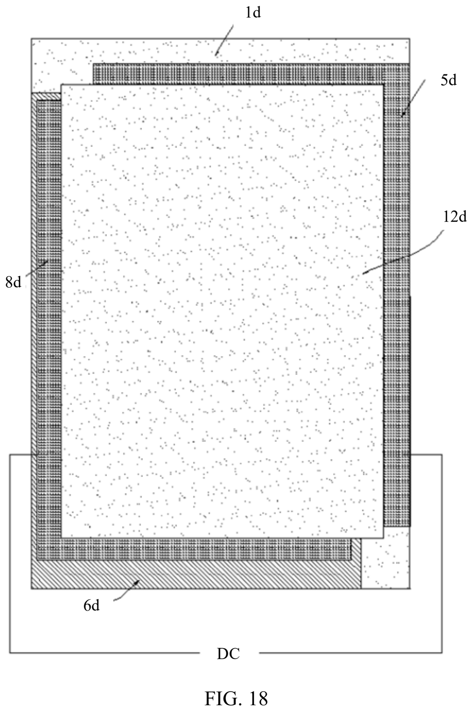

In this application, as shown in FIG. 17, a cross section of at least one of the second electrical conductor 8d and the first electrical conductor 5d in the horizontal direction is L-shaped. According to an implementation of this application, as shown in FIG. 18, the cross sections of the second electrical conductor 8d and the first electrical conductor 5d in the horizontal direction are both L-shaped, and are arranged in an inverted manner relative to each other

According to an implementation of this application, the first conductive layer Ad comprises a first bottom layer 2d and the first conductive layer 3d that are sequentially stacked from top to bottom, where the first conductive layer 3d is bonded to an upper surface of the functional layer 13d. In this implementation, a better conductive function and a longer service life can be implemented.

According to an implementation of this application, the second conductive layer Bd comprises a third conductive layer 10d and a second bottom layer 11d that are sequentially stacked from top to bottom, where the third conductive layer 10d is bonded to a lower surface of the functional layer 13d. In this implementation, a better conductive function and a longer service life can be implemented.

According to an implementation of this application, the power supply, the first electrical conductor 5d, the first bottom layer 2, the first conductive layer 3, the functional layer 13d, the third conductive layer 10d, the second bottom layer 11d, and the second electrical conductor 8d form a series-connected current loop, so that a current flows through the functional layer to achieve color-changing effect.

According to an implementation of this application, the first conductive layer Ad comprises the first bottom layer 2d, the first conductive layer 3d, and a first protective layer 4d that are sequentially bonded from top to bottom, where the first protective layer 4d is bonded to the upper surface of the functional layer 13d. In this implementation, a better conductive function and a longer service life can be implemented.

According to an implementation of this application, the second conductive layer Bd comprises a second protective layer 9d, the third conductive layer 10d, and the second bottom layer 11d that are sequentially bonded from top to bottom, where the second protective layer 9d is bonded to the lower surface of the functional layer 13d. In this implementation, a better conductive function and a longer service life can be implemented.

According to an implementation of this application, the power supply, the first electrical conductor 5d, the first bottom layer 2d, the first conductive layer 3d, the first protective layer 4d, the functional layer 13d, the second protective layer 9d, the third conductive layer 10d, the second bottom layer 11d, and the second electrical conductor 8d form a series-connected current loop.

In this application, materials of the first conductive layer 3d and the third conductive layer 10d may be selected from a wide range, and all commonly used conductive materials may be used in this application. According to an implementation of this application, the first conductive layer 3d and the third conductive layer 10d each include one or more materials of indium tin oxide, tin oxide, antimony-doped tin oxide, fluorine-doped tin oxide, antimony-doped zinc oxide, and aluminum-doped zinc oxide, for example, indium tin oxide (ITO). An ITO conductive layer has good conductivity and transparency. Using the ITO conductive layer as transparent conductive glass can reduce electron, ultraviolet, and infrared radiation harmful to human bodies.

In this application, thicknesses of the first conductive layer 3d and the third conductive layer 10d may be selected from a wide range. For this application, for example, the thicknesses of the first conductive layer 3d and the third conductive layer 10d range from 50 nm to 500 nm, for example, range from 80 nm to 150 nm.

In this application, the first electrical conductor 5d and the second electrical conductor 8d are mainly configured to accelerate current conduction in the device and improve the response speed of the device. Therefore, materials of the first electrical conductor 5d and the second electrical conductor 8d need to be materials with small resistance, comprising but not limited to metal such as metallic silver or copper, conductive adhesive such as silver paste or optically clear adhesive, conductive ink, or the like. For example, the material is silver paste. Metallic silver is mainly pure silver metal. Silver paste is a kind of conductive adhesive whose main components are metallic silver particles. Silver paste is solid after solidification, and a final form of silver paste is not liquid.

This application has no special requirement for sizes of the first electrical conductor 5d and the second electrical conductor 8d. Generally, a length of the first electrical conductor 5d or the second electrical conductor 8d is required to be at least 65%, for example, 85% to 90%, of a sum of a length and a width of the light intensity adjustment device. In an embodiments, 85% is used as an example for description.

In this application, thicknesses of the first electrical conductor 5d and the second electrical conductor 8d each may range from 40 µm to 1000 µm (for example, be 40 µm, 100 µm, 200 µm, 300 µm, 400 µm, 500 µm, 600 µm, 700 µm, 800 µm, 900 µm, or 1000 µm), for example, range from 50 µm to 200 µm; and widths of the first electrical conductor 5d and the second electrical conductor 8d each may range from 1 mm to 3 mm (for example, be 1 mm, 2 mm, or 3 mm), comprising but not limited to, for example, a thickness of 200 µm and a width of 2 mm.

In this application, the first protective layer 4d and the second protective layer 9d are intended to prevent the conductive layer from falling off, dissolving, and the like due to factors such as penetration, corrosion, and the like of a solution in the functional layer. Materials of the first protective layer 4d and the second protective layer 9d may be selected from a wide range, and may be metal that is inert or difficult to be oxidized. For example, the first protective layer 4d and the second protective layer 9d are metal layers with anti-oxidation films. The material comprises but is not limited to titanium, silver, aluminum, platinum, iridium, rhodium, ruthenium, copper, or an alloy material made of at least two thereof. For example, the material is titanium and/or platinum.

In this application, thicknesses of the first protective layer 4d and the second protective layer 9d may range from 5 nm to 50 nm, for example, range from 8 nm to 20 nm.

In this application, the bottom layer is intended to enhance adhesion of the conductive layer on a substrate material and prevent the conductive layer from falling off due to poor adhesion to the substrate material. The first bottom layer 2d and the second bottom layer 11d include but are not limited to one of aluminum oxide, titanium dioxide, tantalum pentoxide, niobium pentoxide, silicon dioxide, and magnesium fluoride, for example, niobium pentoxide.

In this application, a thickness of the bottom layer may be selected from a wide range. For example, the thickness ranges from 30 nm to 12d0 nm. For example, the thickness ranges from 30 nm to 50 nm.

In this application, the frame seal layer 7d is configured to adhere well to a substrate or another material attached to the substrate and seal a periphery, so as to avoid leakage of an electrochromic medium from a cavity formed by the substrate. For example, frame adhesive that has low permeability to oxygen, water vapor, and organic solvents and does not interact with the electrochromic medium comprises but is not limited to phenolic resin, epoxy resin, organic silica gel adhesive, and the like. For example, the frame adhesive is epoxy resin.

In this application, a thickness of the frame seal layer 7d ranges from 70 µm to 250 µm and a width of the frame seal layer 7d ranges from 1.2 mm to 4 mm. For example, the thickness ranges from 100 µm to 150 µm and the width ranges from 1.8 mm to 2.2 mm.

In this application, the insulation layer 6d is configured to isolate the second electrical conductor 8d from the first conductive layer Ad, that is, prevent electricity from being directly conducted from the third conductive layer 10d to a surface of the first substrate layer 1 without passing through the functional layer 13d. The insulation layer 6d comprises the first conductive layer and the first protective layer, to prevent a short circuit of the device. There is no special requirement for a material of the insulation layer. For example, the material is insulating ink. Resistance of the material is greater than 105 Ω. For example, the resistance is greater than 106 Ω.

In this application, there is no special requirement for a thickness of the insulation layer. For example, the thickness ranges from 5 µm to 80 µm. For example, the thickness ranges from 8 µm 20 µm. A width of the insulation layer ranges from 3 mm to 5 mm, for example, ranges from 4 mm to 4.5 mm.

According to an implementation of this application, the functional layer 13d is disposed as a light intensity adjustment functional layer for light intensity adjustment.

In this application, the functional layer 13d may be a composition, and the composition mainly comprises a cathode color-changing material, an anode color-changing material, a solvent, an anti-delamination agent, a thickening agent, an electrolyte, an antioxidant, and an anti-ultraviolet agent.

In this application, there is no special requirement for selection of the cathode color-changing material, the anode color-changing material, the solvent, the anti-delamination agent, the thickening agent, the electrolyte, the antioxidant, and the anti-ultraviolet agent, and various common functional substance types are applicable to this application. The following describes implementations of this application. However, the scope of this application is not limited thereto.

According to an implementation of this application, the cathode color-changing material is at least one of viologen, substituted viologen, allionquinone and substituted anthraquinone, for example, methyl viologen.

In this application, concentration of the cathode color-changing material may be selected from a wide range. For this application, for example, the concentration ranges from 10 mmol/L to 300 mmol/L. For another example, the concentration ranges from 50 mmol/L to 80 mmol/L.

According to an implementation of this application, the anode color-changing material is at least one of diphenylamine, substituted diphenylamine, an N-substituted compound of diphenylamine, triphenylamine, substituted triphenylamine, ferrocene, substituted ferrocene, ferrocene salt, substituted ferrocene salt, phenothiazine, substituted phenothiazine, thianthrene, substituted thianthrene, phenazine, substituted phenazine, 5,10-dihydrophenazine, and substituted 5,10-dihydrophenazine, for example, at least one of an N-substituted compound of diphenylamine, substituted phenothiazine, and substituted 5,10-dihydrophenazine.

In this application, concentration of the anode color-changing material may be selected from a wide range. For this application, for example, the concentration ranges from 10 mmol/L to 300 mmol/L. For example, the concentration ranges from 60 mmol/L to 100 mmol/L.

In this application, the solvent is used to dissolve and disperse the anode color-changing material and the cathode color-changing material, to ensure color-changing uniformity of an electrochromic composition. The solvent may be any organic solvent in commercially available solvents, provided that the solvent can dissolve or disperse devices in the electrochromic composition and does not react with the devices in the electrochromic composition. In an implementation of this application, that solvent may include at least one of sulfone, amide, ether, alcohol, nitrile, ketone, and ester. Specifically, the solvent may include but is not limited to at least one of 3-methylsulfolane, dimethylsulfoxide, dimethylformamide, tetraethylene glycol dimethyl ether, ethoxyethanol, acetonitrile, glutaronitrile, 3-hydroxypropionitrile, 2-methylglutaronitrile, 2-acetylbutyrolactone, cyclopentanone, β-propiolactone, γ-butyrolactone, γ-valrolactone, polypropylene carbonate, ethylene carbonate, and propylene carbonate. For example, the solvent is at least one of propylene carbonate, dimethylsulfoxide, and dimethylformamide.

In this application, the anti-delamination agent is conducive to avoiding a delamination problem of a material of the functional layer and ensuring uniform dispersion of devices, to facilitate realization of uniform color-changing effect, and prolong the service life of the electrochromic composition. For example, the anti-delamination agent may include a polymer comprising an ester group. Specifically, the polymer comprising the ester group may include but is not limited to at least one of polyacrylate, polymethacrylate, and polyaromatic ester. For example, the polymer comprising the ester group is a polymethyl methacrylate.

In this application, concentration of the anti-delamination agent may be selected from a wide range. For example, the concentration ranges from 1 wt% to 6 wt%. For another example, the concentration ranges from 4 wt% to 6 wt%.

In this application, the electrolyte can improve ionic conductivity of the electrochromic composition, and improve color-changing response speed. Specifically, the electrolyte may include but is not limited to at least one of lithium trifluoromethanesulfonate, lithium perchlorate, lithium tetrafluoroborate, and lithium hexafluorophosphate. For example, the electrolyte is lithium tetrafluoroborate.

In this application, concentration of the electrolyte may be selected from a wide range, and common concentration ranges may be used to achieve objectives of this application. For this application, for example, the concentration ranges from 0.05 mol/L to 1 mol/L. For another example, the concentration is 0.5 mol/L.

In this application, the thickening agent can adjust viscosity of the functional layer, which is conducive to use of the electrochromic composition in an electrochromic device. The thickening agent may be a polymer, and may include but is not limited to at least one of polyamide, polyimide, polycarbonate, polymethacrylate, polyacrylate, polysilane, polysiloxane, polyvinyl acetate, polymethacrylonitrile, polyacrylonitrile, polyvinyl phenol, polyvinyl alcohol, and polyvinylidene dihalide. For example, the thickening agent is polyvinylidene difluoride.

In this application, content of the thickening agent may be selected from a wide range, and common content may be used for this application. For this application, for example, the content of the thickening agent ranges from 0.05 wt% to 3 wt%. For another example, the content of the thickening agent ranges from 0.05 wt% to 1.5 wt%.

In this application, the antioxidant can improve durability of the electrochromic composition and prolong the service life. The antioxidant comprises but is not limited to at least one of sterically hindered phenol: 1,3,5-tri-tert-butylphenol, 1,5-tert-butyl-3-methylphenol, 2-(2'-hydroxy-5'-methylphenyl)benzotriazole, 2-(2'-hydroxy-3'-tert-butyl-5'-methylphenyl) 5-chlorobenzotriazole, 2-(2'-hydroxy-3',5'-di-tert-butylphenyl), 5-chlorobenzotriazole, 2-(2'-hydroxy-3',5'-dipentylphenyl)benzotriazole, 2-(2'-hydroxy5'-tert-octylphenyl)benzotriazole, 2-(2'-hydroxy-3',5'-di-tert-butylphenyl)benzotriazole, and the like; sterically hindered amine: bis(2,2,6,6-tetramethyl-4-piperidinyl) sebacate, 2,2,6,6-tetramethylpiperidine, di-tert-butylamine, and the like; and some alkenyl ester: methyl methacrylate, ethyl methacrylate, and the like. For example, the antioxidant is at least one of 2-(2'-hydroxy-5'-methylphenyl)benzotriazole, 1,5-tert-butyl-3-methylphenol, and methyl methacrylate.

In this application, concentration of the antioxidant may be selected from a wide range, and common concentration may be used for this application. For this application, the concentration of the antioxidant may range from 20 mmol/L to 500 mmol/L, for example, range from 50 mmol/L to 100 mmol/L.

In this application, the anti-ultraviolet agent can improve light stability of the electrochromic composition and prolong the service life of the electrochromic composition. The anti-ultraviolet agent comprises but is not limited to at least one of 2-ethyl-2-cyano-3,3-diphenyl acrylate, acrylic acid (2-ethylhexyl)-2-cyano-3,3-diphenyl ester, 2-(2'-hydroxy-4'-methylphenyl)benzotriazole, 3-[3-(2H-benzotriazol-2-yl)-5-(1,1-dimethylethyl)-4-hydroxyphenyl]propionate amyl ester, 2,4-dihydroxybenzophenone, 2-hydroxy-4-methoxybenzophenone, and 2-ethyl-2'-ethoxypropionanilide, for example, 2-hydroxy-4-methoxybenzophenone.

In this application, content of the anti-ultraviolet agent may be selected from a wide range, and common content may be used to achieve objectives of this application. For this application, for example, the content of the anti-ultraviolet agent ranges from 1 wt% to 4wt%. For another example, the content of the anti-ultraviolet agent ranges from 3 wt% to 4 wt%.

In this application, the device has different requirements for different voltages. If a voltage is excessively low, a color change cannot be implemented. If a voltage is excessively high, a color-changing solution cannot be faded after the color change or the color-changing solution loses effectiveness. A voltage range needs to be controlled at 0.5 V to 4.0 V, for example, 1.0 V to 2.2 V

In this application, a type-L device means that a conductive layer is formed in the device in an L shape and structure. Specifically, for example, the first electrical conductor 5d and the second electrical conductor 8d are formed in the device in the L shape and structure.

In this application, a type-I device means that a conductive layer is formed in the device in an I shape and structure. Specifically, for example, a first I-shaped conductive layer 5d and a second I-shaped conductive layer 8d are formed in the device in the I shape and structure.

The following describes advantages of this application by using embodiments, but the scope of this application is not limited thereto.

A sectional view of a type-L-L device in the following embodiments is shown in FIG. 16. A bottom view of the type-L-L device is shown in FIG. 18, where the first electrical conductor 5d and the second electrical conductor 8d are both formed in the device in an L shape and structure.

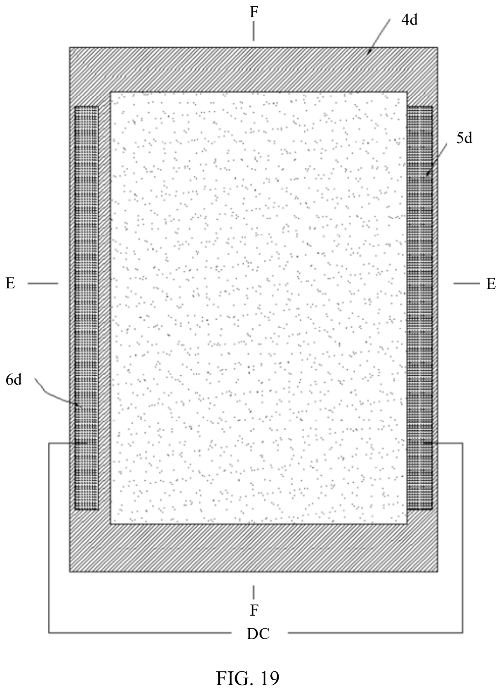

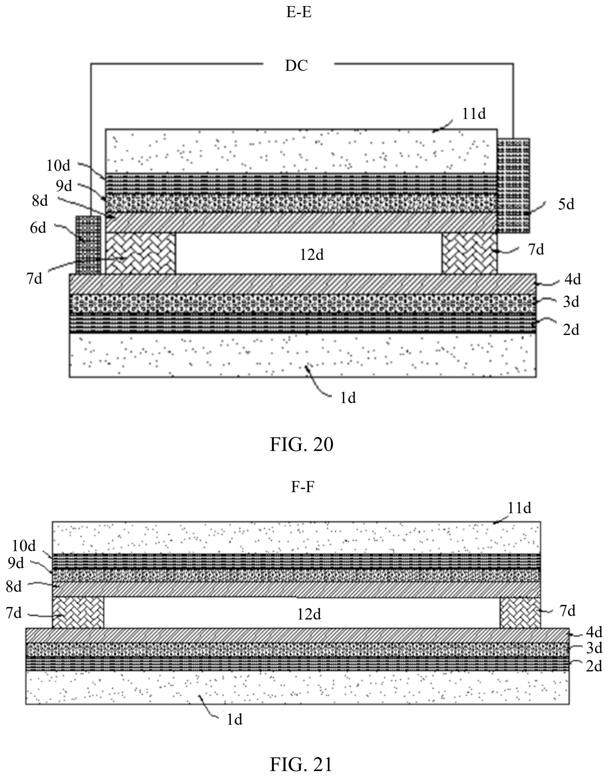

A type-I device in the following comparative example is shown in FIG. 19 to FIG. 21, where the first I-shaped conductive layer 5d and the second I-shaped conductive layer 8d are formed in device in an I shape and structure.

It can be seen from the figure that type-L connection covers most of conductive regions of the device, but type-I connection only covers approximately half of the device.

### Example 34

The first substrate layer 1d and the second substrate layer 12d are made of transparent glass. The first bottom layer 2d and the second bottom layer 11d each are made of 30 nm of metal oxide aluminum oxide. The first conductive layer 3d and the third conductive layer 10d each are made of 100 nm of metal oxide indium tin oxide. The first protective layer 4d and the second protective layer 9d each are made of 5 nm of metallic platinum. The first electrical conductor 5d and the second electrical conductor 8d each are made of conductive silver paste that is 100 µm thick and 1 mm wide. The frame adhesive layer 7d (which means the frame seal layer 7d hereinafter) is made of epoxy resin glue that is 180 micrometers thick and 2.5 mm wide. The insulation layer 6d is made of insulating ink that is 4 mm wide and 20 micrometers thick. The functional layer 13d includes 60 mM of an anode color-changing material 5,10-dihydrophenazine, 60 mM of a cathode color-changing material methyl viologen, 6 wt% of polymethyl methacrylate, 1 wt% of polyvinylidene difluoride, 0.5 M of lithium tetrafluoroborate, 100 mM of 1,5-tert-butyl-3-methylphenol, 3 wt% of 2-hydroxy-4-methoxybenzophenone, and a solvent. A length and a width of a device cavity are both 40 mm.

### Example 35

The first substrate layer 1d and the second substrate layer 12d are made of transparent glass. The first bottom layer 2d and the second bottom layer 11d each are made of 30 nm of metal oxide aluminum oxide. The first conductive layer 3 and the third conductive layer 10d each are made of 100 nm of metal oxide indium tin oxide. The first protective layer 4 and the second protective layer 9 each are made of 5 nm of metallic platinum. The first electrical conductor 5d and the second electrical conductor 8d each are made of conductive silver paste that is 100 µm thick and 2 mm wide. The frame adhesive layer 7d is made of epoxy resin glue that is 180 micrometers thick and 2.5 mm wide. The insulation layer 6d is made of insulating ink that is 4 mm wide and 20 micrometers thick. The functional layer 13d includes 60 mM of an anode color-changing material 5,10-dihydrophenazine, 60 mM of a cathode color-changing material methyl viologen, 6 wt% of polymethyl methacrylate, 1 wt% of polyvinylidene difluoride, 0.5 M of lithium tetrafluoroborate, 100 mM of 1,5-tert-butyl-3-methylphenol, 3 wt% of 2-hydroxy-4-methoxybenzophenone, and a solvent. A length and a width of a device cavity are both 40 mm.

### Example 36

The first substrate layer 1d and the second substrate layer 12d are made of transparent glass. The first bottom layer 2 and the second bottom layer 11d each are made of 30 nm of metal oxide aluminum oxide. The first conductive layer 3 and the third conductive layer 10d each are made of 100 nm of metal oxide indium tin oxide. The first protective layer 4 and the second protective layer 9 each are made of 5 nm of metallic platinum. The first electrical conductor 5d and the second electrical conductor 8d each are made of conductive silver paste that is 200 µm thick and 2 mm wide. The frame adhesive layer 7d is made of epoxy resin glue that is 180 micrometers thick and 2.5 mm wide. The insulation layer 6d is made of insulating ink that is 4 mm wide and 20 micrometers thick. The functional layer 13d includes 60 mM of an anode color-changing material 5,10-dihydrophenazine, 60 mM of a cathode color-changing material methyl viologen, 6 wt% of polymethyl methacrylate, 1 wt% of polyvinylidene difluoride, 0.5 M of lithium tetrafluoroborate, 100 mM of 1,5-tert-butyl-3-methylphenol, 3 wt% of 2-hydroxy-4-methoxybenzophenone, and a solvent. A length and a width of a device cavity are both 40 mm.

### Example 37

The first substrate layer 1d and the second substrate layer 12d are made of transparent glass. The first bottom layer 2 and the second bottom layer 11d each are made of 30 nm of metal oxide aluminum oxide. The first conductive layer 3 and the third conductive layer 10d each are made of 100 nm of metal oxide indium tin oxide. The first protective layer 4 and the second protective layer 9 each are made of 10 nm of metallic platinum. The first electrical conductor 5d and the second electrical conductor 8d each are made of conductive silver paste that is 200 µm thick and 2 mm wide. The frame adhesive layer 7d is made of epoxy resin glue that is 180 micrometers thick and 2.5 mm wide. The insulation layer 6d is made of insulating ink that is 4 mm wide and 20 micrometers thick. The functional layer 13d includes 60 mM of an anode color-changing material 5,10-dihydrophenazine, 60 mM of a cathode color-changing material methyl viologen, 6 wt% of polymethyl methacrylate, 1 wt% of polyvinylidene difluoride, 0.5 M of lithium tetrafluoroborate, 100 mM of 1,5-tert-butyl-3-methylphenol, 3 wt% of 2-hydroxy-4-methoxybenzophenone, and a solvent. A length and a width of a device cavity are both 40 mm.

### Example 38

The first substrate layer 1d and the second substrate layer 12d are made of transparent glass. The first bottom layer 2d and the second bottom layer 11d each are made of 30 nm of metal oxide aluminum oxide. The first conductive layer 3d and the third conductive layer 10d each are made of 100 nm of metal oxide indium tin oxide. The first electrical conductor 5d and the second electrical conductor 8d each are made of conductive silver paste that is 200 µm thick and 2 mm wide. The frame adhesive layer 7d is made of epoxy resin glue that is 180 micrometers thick and 2.5 mm wide. The insulation layer 6d is made of insulating ink that is 4 mm wide and 20 micrometers thick. The functional layer 13d includes 60 mM of an anode color-changing material 5,10-dihydrophenazine, 60 mM of a cathode color-changing material methyl viologen, 6 wt% of polymethyl methacrylate, 1 wt% of polyvinylidene difluoride, 0.5 M of lithium tetrafluoroborate, 100 mM of 1,5-tert-butyl-3-methylphenol, 3 wt% of 2-hydroxy-4-methoxybenzophenone, and a solvent. A length and a width of a device cavity are both 40 mm.

### Comparative Example 6

The first substrate layer 1d and the second substrate layer 12d are made of transparent glass. The first bottom layer 2 and the second bottom layer 10d each are made of 30 nm of metal oxide aluminum oxide. The first conductive layer 3 and the third conductive layer 9 each are made of 100 nm of metal oxide indium tin oxide. The first protective layer 4 and the second protective layer 8d each are made of 10 nm of metallic platinum. The first I-shaped conductive layer 5d and the second I-shaped conductive layer 8d each are made of conductive silver paste that is 200 µm thick and 2 mm wide. The frame adhesive layer 7d is made of epoxy resin glue that is 180 micrometers thick and 2.5 mm wide. The functional layer 12d includes 60 mM of an anode color-changing material 5,10-dihydrophenazine, 60 mM of a cathode color-changing material methyl viologen, 6 wt% of polymethyl methacrylate, 1 wt% of polyvinylidene difluoride, 0.5 M of lithium tetrafluoroborate, 100 mM of 1,5-tert-butyl-3-methylphenol, 3 wt% of 2-hydroxy-4-methoxybenzophenone, and a solvent. A length and a width of a device cavity are both 40 mm, as shown in FIG. 19 to FIG. 21.

**Table 11**

| | After 20,000 color-changes | After 50,000 color-changes |
|---|---|---|
| Example 34 | Uniform color-changing | Uniform color-changing |
| Example 35 | Uniform color-changing | Uniform color-changing |
| Example 36 | Uniform color-changing | Uniform color-changing |
| Example 37 | Uniform color-changing | Uniform color-changing |
| Example 38 | Uniform color-changing | Uniform color-changing |
| Comparative Example 6 | Uniform color-changing | Uniform color-changing |

**Table 12**

| | Color-changing time/s | Fading time/s |
|---|---|---|
| Example 34 | 9.9 | 15.9 |
| Example 35 | 9.1 | 14.4 |
| Example 36 | 8.5 | 12d.9 |
| Example 37 | 7.9 | 11.2 |
| Example 38 | 8.1 | 11.3 |
| Comparative Example 6 | 12d.4 | 23.1 |

It will be noted that each directional indication (such as up, down, left, right, front, rear, or the like) in embodiments of this application is only used to explain a relative positional relationship, a motion status, and the like between devices in a specific posture (as shown in the accompanying drawings). If the specific posture changes, the directional indication also changes accordingly.

In addition, in this application, the descriptions "first", "second", and the like are merely intended for a purpose of description, and will not be understood as an indication or implication of relative importance or an implicit indication of a quantity of indicated technical features. Therefore, a feature defined by "first" or "second" may explicitly or implicitly include at least one such feature. In the descriptions of this application, "a plurality of" means at least two, for example, two or three, unless otherwise clearly limited.

In this application, unless otherwise specified and limited, terms "connect", "fasten", and the like will be understood in a broad sense. For example, "fasten" may indicate fixed connection, detachable connection, or integrated connection, may indicate mechanical connection or electrical connection, or may indicate direct connection, indirect connection through an intermediate medium, internal communication between two elements, or an interaction relationship between two elements, unless otherwise specified. A person of ordinary skill in the art may understand specific meanings of the foregoing terms in this application based on specific situations.

In addition, the technical solutions of embodiments of this application may be combined with each other, but must be implemented by a person of ordinary skill in the art. When the combination of the technical solutions conflicts with each other or cannot be implemented, it should be considered that the combination of the technical solutions does not exist, and does not fall within the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A reflecting device (1), comprising:
a first transparent substrate sheet (10) comprising a first surface (11) and a second surface (12) that are opposite to each other;
a transparent conductive layer (20) disposed on the second surface (12);
a second transparent substrate sheet (30) comprising a third surface (31) and a fourth surface (32) that are opposite to each other;
a reflective layer (40) disposed on the third surface (31), wherein the reflective layer (40) faces the transparent conductive layer (20);
a seal (70), wherein the seal (70) is connected between the first transparent substrate sheet (10) and the second transparent substrate sheet (30), the seal (70), the transparent conductive layer (20), and the reflective layer (40) enclose a cavity; the seal (70) comprises filler particles whose dielectric constant is greater than or equal to 20; and
a light adjustment composition (50), wherein the light adjustment composition is disposed in the cavity.

2. The reflecting device (1) according to claim 1, wherein the dielectric constant of the filler particle ranges from 25 to 150.

3. The reflecting device (1) according to claim 2, wherein the filler particle comprises at least one of lead titanate, barium titanate, lanthanum titanate, titanium oxide, and zirconium oxide.

4. The reflecting device (1) according to any one of claims 1 to 3, wherein the seal (70) is configured to be hollow in a thickness direction, and two end faces of the seal in the thickness direction are respectively connected to the transparent conductive layer and the reflective layer.

5. The reflecting device (1) according to claim 1, wherein the seal (70) comprises a first seal (71) and a second seal (72), and the first seal (71) and the second seal (72) enclose and form the seal (70).

6. The reflecting device (1) according to claim 1 or 5, wherein a shape of the filler particle is any one of a cuboid, a cube, a sphere, and a cylinder.

7. The reflecting device (1) according to claim 1, wherein the filler particle is spherical, and a diameter of the filler particle ranges from 30 µm to 300 µm.

8. The reflecting device (1) according to claim 1, wherein the first transparent substrate sheet (10) comprises one of glass, acrylic, and polyvinyl chloride, the second transparent substrate sheet (30) comprises one of glass, acrylic, and polyvinyl chloride, and both visible light transmittance of the first transparent substrate sheet (10) and visible light transmittance of the second transparent substrate sheet (30) are greater than or equal to 80%.

9. The reflecting device (1) according to claim 1, wherein the transparent conductive layer (20) meets at least one of the following conditions:
the transparent conductive layer (20) comprises at least one of ITO, CTO, ZnO, and InO;
a thickness of the transparent conductive layer (20) ranges from 50 nm to 500 nm; and
visible light transmittance of the transparent conductive layer is greater than or equal to 80%.

10. The reflecting device (1) according to claim 1, wherein the reflective layer (40) meets at least one of the following conditions: the reflective layer (40) comprises one of silver, a silver alloy, aluminum, an aluminum alloy, chromium, and a chromium alloy;
a thickness of the reflective layer (40) ranges from 10 nm to 500 nm; and
reflectivity of the reflective layer is greater than or equal to 70%.

11. The reflecting device (1) according to claim 10, wherein the reflecting device (1) further comprises a transition layer (60), the transition layer (60) is disposed between the reflective layer (40) and the third surface (31), and the transition layer (60) comprises at least one of SiO, TiO, Nb₂O₅, and Al₂O₃.

12. The reflecting device (1) according to claim 1, wherein the reflecting device (1) further comprises a first electrode plate (90) and a second electrode plate (100), the first electrode plate (90) is electrically connected to the transparent conductive layer (20), and the second electrode plate (100) is electrically connected to the reflective layer (10).

13. The reflecting device (1) according to claim 1, wherein a surface of the transparent conductive layer (20) that faces the first transparent substrate sheet (10) comprises a contact region in contact with the second surface (12) and a concave region concave in a direction away from the second surface (12), the concave region surrounds the contact region, the concave region is spaced apart from the second surface (12), a decorative layer is disposed between the concave region and the second surface (12), and reflectivity of the decorative layer is greater than or equal to 50%.

14. A manufacturing method for a reflecting device, comprising:
providing a first transparent substrate sheet, wherein the first transparent substrate sheet comprises a first surface and a second surface that are disposed opposite to each other; and disposing a transparent conductive layer on the second surface (S101);
providing a second transparent substrate sheet, wherein the second transparent substrate sheet comprises a third surface and a fourth surface that are disposed opposite to each other; and disposing a reflective layer on the third surface (S102);
making the transparent conductive layer face the reflective layer, and the transparent conductive layer spaced apart from the reflective layer (S103); and
forming a seal between the first transparent substrate sheet and the second transparent substrate sheet, the seal, the transparent conductive layer, and the reflective layer enclose a cavity (S104), and infusing a light adjustment composition into the cavity (S105), wherein the seal comprises filler particles whose dielectric constant is greater than or equal to 20.

15. The manufacturing method for a reflecting device according to claim 14, wherein disposing the reflective layer on the third surface comprises:
disposing a transition layer on the third surface; and
disposing the reflective layer on a surface of the transition layer that is away from the second transparent substrate sheet.

16. The manufacturing method for a reflecting device according to claim 14, wherein the sealant comprises a first seal and a second seal, and forming the seal between the first transparent substrate sheet and the second transparent substrate sheet, the seal, the transparent conductive layer, and the reflective layer enclose the cavity, and infusing the light adjustment composition into the cavity comprises:
disposing the first sealant between the first transparent substrate sheet and the second transparent substrate sheet, wherein the first seal connects the first transparent substrate sheet and the second transparent substrate sheet, and the first seal, the transparent conductive layer, and the reflective layer enclose the cavity having an opening; and
infusing the light adjustment composition into the cavity through the opening.

17. The manufacturing method for a reflecting device according to claim 16, wherein the manufacturing method for the reflecting device further comprises:
disposing the second seal between the first transparent substrate sheet and the second transparent substrate sheet to seal the opening, wherein the second seal connects the first transparent substrate sheet and the second transparent substrate sheet (S106).

18. A vehicle (2), comprising the reflecting device (1) according to any one of claims 1 to 13.
